# EUROPEAN PATENT SPECIFICATION

(11) **EP 2 050 772 B1**
(45) Date of publication and mention of the grant of the patent: **30.11.2011**
(21) Application number: 07791962.9
(22) Date of filing: 03.08.2007
(51) Int. Cl.: C08F 283/06, C08G 18/66, C09J 151/08, C09K 3/10

(54) **CURABLE RESIN AND CURABLE COMPOSITION**
HÄRTBARES HARZ UND HÄRTBARE ZUSAMMENSETZUNG
RÉSINE DURCISSABLE ET COMPOSITION DURCISSABLE

(30) Priority: 07.08.2006 JP 2006215028
(43) Date of publication of application: 22.04.2009
(73) Proprietor: Mitsui Chemicals, Inc., Tokyo (JP); CEMEDINE CO., LTD., Shinagawa-ku, Tokyo 141-8620 (JP)
(72) Inventor: IWA, Tsuyoshi, Sodegaura-shi, Chiba 2990265 (JP); MURAYAMA, Kouichi, Sodegaura-shi, Chiba 2990265 (JP); SHIBATA, Tatsuya, Sodegaura-shi, Chiba 2990265 (JP); KANNO, Takashi, Sodegaura-shi, Chiba 2990265 (JP); SAITO, Atsushi, Tokyo 1418620 (JP); WATANABE, Yutaka, Tokyo 1418620 (JP)
(74) Representative: Grünecker, Kinkeldey, Stockmair & Schwanhäusser
(86) International application number: PCT/JP2007/065289
(87) International publication number: WO 2008/018389

(56) References cited:
- EP-A1- 0 732 348
- WO-A1-2004/076555
- WO-A1-2006/054422
- JP-A- 09 157 249
- JP-A- 2000 234 061
- JP-A- 2002 188 081
- JP-A- 2003 268 229
- JP-A- 2007 231 071
- US-A- 4 618 656
- US-A- 6 069 218

## Description

### Technical Field

The present invention relates to a novel curable resin and a production method for the curable resin, and a curable composition containing the curable resin, and more specifically, to a novel vinyl monomer-grafted alkoxysilane-modified oxyalkylene resin and a production method for the resin, and a curable composition containing the vinyl monomer-grafted alkoxysilane-modified oxyalkylene resin.

### Background Art

As described in each of Patent Documents 1 and 2, an alkoxysilane-modified oxyalkylene resin has been widely used as a raw material for a modified silicone based sealing material. However, even when the alkoxysilane-modified oxyalkylene resin is used as it is in a modified silicone based elastic adhesive, the adhesive cannot provide a sufficient adhesive strength.
In view of the foregoing, as described in, for example, Patent Document 3, a resin composition containing the alkoxysilane-modified oxyalkylene resin and an acrylic/vinylsilane copolymer obtained by copolymerizing an acrylic monomer and vinylsilane in the coexistence of the alkoxysilane-modified oxyalkylene resin has been proposed.

In addition, as described in each of Patent Documents 4 to 7, a resin composition having the following characteristics has been proposed: the resin composition is obtained by causing a mixture of alkoxysilane and an acrylic/vinylsilane copolymer, and a urethane prepolymer obtained from polyether polyol to react with each other, and the resin composition contains an alkoxysilane-modified oxyalkylene resin and the acrylic/vinylsilane copolymer.
When such resin composition containing an alkoxysilane-modified oxyalkylene resin and an acrylic/vinylsilane copolymer is used as a raw material for a modified silicone based elastic adhesive, the adhesive has an excellent adhesive strength, and a product obtained by curing the adhesive with moisture is excellent in flexibility (rubber elasticity). However, the adhesive has the following drawbacks: the time period required for the adhesive to cure with moisture is long, and the cured product obtained after the curing with moisture is semitransparent.
Patent Document 1: JP 53-134095 B
Patent Document 2: JP 2001-72855 A
Patent Document 3: JP 63-65086 B
Patent Document 4: JP 3030020 B
Patent Document 5: JP 3317353 B
Patent Document 6: JP 3350011 B
Patent Document 7: JP 3471667 B
Patent Document 8: EP 0 732 348 A1
Patent Document 9: US 6 069 218
Patent Document 10: US 4 618 656

### Disclosure of the Invention

### Problems to be solved by the Invention

The present invention aims to solve the problems involved in the conventional art, and it is an object of the present invention to provide a vinyl monomer-grafted alkoxysilane-modified oxyalkylene resin having the following characteristics, a production method for the resin, and a curable composition containing the resin which being useful as a raw material for a modified silicone based elastic adhesive, being excellent in storage stability and adhesiveness, and, further being capable of curing with moisture excellently within a short time period.

### Means for solving the Problems

The inventors of the present invention have made extensive studies with a view to solving the above problems. As a result, the inventors have found that a vinyl monomer-grafted alkoxysilane-modified oxyalkylene resin obtained by grafting a vinyl monomer containing 50 wt% or more of a specific (meth) acrylic monomer in the presence of a peroxy ketal as a radical reaction initiator is excellent in storage stability and adhesiveness, and, furthermore, cures with moisture excellently within a short time period. Thus, the inventors have completed the present invention.

That is, a vinyl monomer-grafted alkoxysilane-modified oxyalkylene resin of the present invention, which is produced by a method including grafting of a vinyl monomer by using an oxyalkylene based polymer as a raw material, in which: the vinyl monomer includes a vinyl monomer containing 50 wt% or more of one or two or more kinds of (meth)acrylic monomers each represented by the following formula (1); and the vinyl monomer is subjected to a graft reaction by using a peroxy ketale as a radical reaction initiator. In the present invention, the terms "acrylic" and "methacrylic" are collectively referred to as "(meth) acrylic", and the terms "acrylate" and "methacrylate" are collectively referred to as "(meth) acrylate".

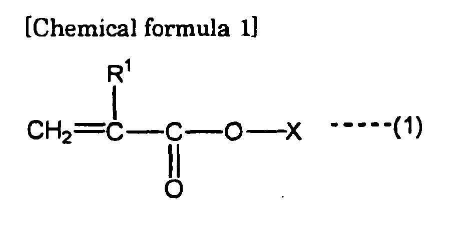

In the above formula (1), R¹ represents a hydrogen atom or a methyl group, and X represents a hydrogen atom, an alkali metal atom, a hydrocarbon group having 1 to 22 carbon atoms, or a substituted hydrocarbon group having 1 to 22 carbon atoms and having a functional group containing at least one kind of an atom selected from the group consisting of a boron atom, a nitrogen atom, an oxygen atom, a fluorine atom, a phosphorus atom, a silicon atom, a sulfur atom, and a chlorine atom.)

The peroxy ketal is preferably at least one kind of a peroxy ketal selected from the group consisting of 1,1-di(t-hexylperoxy)cyclohexane, 1,1-di(t-hexylperoxy)-3,3,5-trimethylcyclohexane, 1,1-di(t-butylperoxy)cyclohexane, n-butyl 4,4-di(t-butylperoxy)valerate, 2,2-di(t-butylperoxy)butane, 1,1-di(t-butylperoxy)-2-methylcyclohexane, 1,1-di(t-butylperoxy)-3,3,5-trimethylcyclohexane, and 2,2-di(4,4-dibutylperoxycyclohexyl)propane, or more preferably 1,1-di(t-butylperoxy)cyclohexane

The (meth)acrylic monomer preferably contains a (meth)acrylic silane monomer in which X in the formula (1) includes a group represented by the following formula (2):

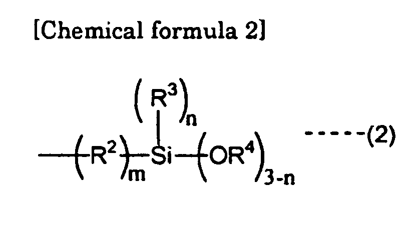

In the above formula (2), R² represents a divalent hydrocarbon group having 1 to 10 carbon atoms, R³ represents an alkyl group having 1 to 10 carbon atoms; an aryl group having 6-to 10 carbon atoms, or an aralkyl group having 7 to 10 carbon atoms, R⁴ represents an unsubstituted or substituted hydrocarbon group having 1 to 8 carbon atoms, n represents an integer of 0 to 2, and m represents 0 or 1.

The vinyl monomer-grafted alkoxysilane-modified oxyalkylene resin of the present invention is suitably produced by a production method of the present invention to be described later.

A production method for a vinyl monomer-grafted alkoxysilane-modified oxyalkylene resin according to a first aspect of the present invention includes the steps of: modifying an oxyalkylene based polymer with an alkoxysilane compound to provide an alkoxysilane-modified oxyalkylene resin; and subjecting the alkoxysilane-modified oxyalkylene resin, a vinyl monomer containing 50 wt% or more of one or two or more kinds of (meth)acrylic monomers each represented by the following formula (1), and an alkyl peroxide to a graft reaction.
In the graft reaction step, the following procedure is suitably adopted: the vinyl monomer is blended at a content of 0.1 to 45 wt% with respect to the total amount of both the alkoxysilane-modified oxyalkylene resin and the vinyl monomer, and 1 mole of the alkoxysilane-modified oxyalkylene resin is suitably blended with 0.2 to 4.0 moles of the alkyl peroxide. In particular, when the vinyl monomer contains the above-mentioned (meth)acrylic silane monomer, the vinyl monomer is suitably blended at a content of 0.1 to 25 wt%, preferably 0.5 to 20 wt%, or more preferably 1 to 15 wt% with respect to the total amount of the alkoxysilane-modified oxyalkylene resin and the vinyl monomer. When the vinyl monomer does not contain the above-mentioned (meth)acrylic silane monomer, the vinyl monomer is suitably blended at a content of 10 to 45 wt%, preferably 10 to 40 wt%, or more preferably 10 to 35 wt% with respect to the total amount of the alkoxysilane-modified oxyalkylene resin and the vinyl monomer.

In the production method according to the first aspect of the present invention, the oxyalkylene based polymer preferably includes a polyoxyalkylene polyol derivative obtained by causing a polyoxyalkylene polyol and a diisocyanate compound to react with each other.

In the production method according to the first aspect of the present invention, the oxyalkylene based polymer preferably includes a polyoxyalkylene polyol derivative obtained by causing a polyoxyalkylene polyol to react with an alkoxysilane compound having an isocyanate group and a diisocyanate compound, and the alkoxysilane compound includes an alkoxysilane compound having a secondary amino group.

A production method for a vinyl monomer-grafted alkoxysilane-modified oxyalkylene resin according to a second aspect of the present invention includes the steps of: subjecting an oxyalkylene based polymer, a vinyl monomer containing 50 wt% or more of one or two or more kinds of (meth)acrylic monomers each represented by the aforementioned formula (1), and an alkyl peroxide to a graft reaction to provide a vinyl monomer-grafted oxyalkylene resin; and modifying the vinyl monomer-grafted oxyalkylene resin with an alkoxysilane compound.
In the graft reaction step, the following procedure is suitably adopted: the vinyl monomer is blended at a content of 0.1 to 45 wt% with respect to the total amount of both the oxyalkylene based polymer and the vinyl monomer, and 1 mole of the oxyalkylene based polymer is suitably blended with 0.2 to 4.0 moles of the alkyl peroxide. In particular, when the vinyl monomer contains the above-mentioned (meth)acrylic silane monomer, the vinyl monomer is suitably blended at a content of 0.1 to 25 wt%, preferably 0.5 to 20 wt%, or more preferably 1 to 15 wt% with respect to the total amount of the oxyalkylene based polymer and the vinyl monomer. When the vinyl monomer does not contain the above-mentioned (meth)acrylic silane monomer, the vinyl monomer is suitably blended at a content of 10 to 45 wt%, preferably 10 to 40 wt%, or more preferably 10 to 35 wt% with respect to the total amount of the oxyalkylene based polymer and the vinyl monomer.

In the production method according to the second aspect of the present invention, it is preferred that: the oxyalkylene based polymer includes a polyoxyalkylene polyol; and the modifying includes causing the vinyl monomer-grafted oxyalkylene resin and a diisocyanate compound to react with each other, and modifying the reaction product with the alkoxysilane compound.

In the production method according to the second aspect of the present invention, it is preferred that: the oxyalkylene based polymer includes a polyoxyalkylene polyol; the modifying includes causing the vinyl monomer-grafted oxyalkylene resin to react with an alkoxysilane compound having an isocyanate group and a diisocyanate compound, and modifying the reaction product with the alkoxysilane compound; and the alkoxysilane compound includes an alkoxysilane compound having a secondary amino group.

In the production method according to the first and second aspects of the present invention, the oxyalkylene based polymer preferably includes one of a polyoxyalkylene polyol and a derivative of the polyoxyalkylene polyol, and the polyoxyalkylene polyol suitably has a hydroxyl value of 25 mgKOH/g or less, and the polyoxyalkylene polyol preferably has two hydroxyl groups in any one of its molecules.

In the production method according to the first and second aspects of the present invention, the peroxy ketal is preferably at least one kind of a peroxide selected from the group consisting of 1,1-di(t-hexylperoxy)cyclohexane, 1,1-di(t-hexylperoxy)-3,3,5-trimethylcyclohexane, 1,1-di(t-butylperoxy)cyclohexane, n-butyl 4,4-di(t-butylperoxy)valerate, 2,2-di(t-butylperoxy)butane, 1,1-di(t-butylperoxy)-2-methylcyclohexane, 1,1-di(t-butylperoxy)-3,3,5-trimethylcyclohexane, and 2,2-di(4,4-dibutylperoxycyclohexyl)propane, or more preferably 1,1-di(t-butylperoxy)cyclohexane.

In the production method according to the first and second aspects of the present invention, the (meth)acrylic monomer suitably contains a (meth)acrylic silane monomer in which X in the formula (1) is a group represented by the formula (2).

In the production method according to the first and second aspects of the present invention, the alkoxysilane compound preferably includes one of an alkoxysilane compound having an isocyanate group, an alkoxysilane compound having a secondary amino group.
The alkoxysilane compound having an isocyanate group preferably includes isocyanate triethoxysilane.
Also, the alkoxysilane compound having a secondary amino group is preferably a compound represented by the following formula (3) or more preferably N-phenylaminopropyltrimethoxysilane:

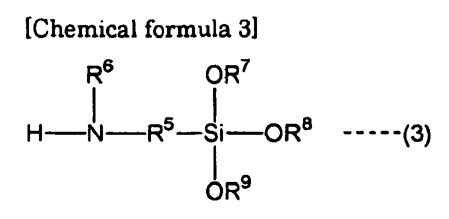

In the formula (3), R⁵ represents an alkylene group having 1 to 20 carbon atoms, R⁶ represents an aliphatic hydrocarbon group having 1 to 20 carbon atoms, or an aromatic hydrocarbon group having 6 to 20 carbon atoms, and R⁷, R⁸, and R⁹ each independently represent an alkyl group having 1 to 20 carbon atoms.

A curable composition according to a first aspect of the present invention includes: the vinyl monomer-grafted alkoxysilane-modified oxyalkylene resin of the present invention; and a curing catalyst.

A curable composition according to a second aspect of the present invention includes: two or more kinds of resins selected from the group consisting of the vinyl monomer-grafted alkoxysilane-modified oxyalkylene resins of the present invention; and a curing catalyst.
The two or more kinds of resins preferably include one or more kinds of resins each produced by a method including the reaction step with the diisocyanate compound prior to the modification step with the alkoxysilane compound and one or more kinds of resins each produced by a method not including the reaction step.
In addition, the two or more kinds of resins preferably include a resin produced by the production method according to the first or second aspect of the present invention, and a resin produced by a method including the reaction step with the diisocyanate compound in the production method according to the first or second aspect of the present invention.

The (meth)acrylic monomer used in the production of the resin in the curable composition of the present invention suitably contains a (meth)acrylic silane monomer in which X in the formula (1) is a group represented by the formula (2).

The curable composition of the present invention is suitably used as one of an adhesive, a potting agent for an electronic or optical part, a sealer for an electronic or optical part, a sealing material, and a paint.

### Effects of the Invention

According to the present invention, there can be provided a vinyl monomer-grafted alkoxysilane-modified oxyalkylene resin having the following characteristics: the resin is useful as a raw material for a modified silicone based elastic adhesive, is excellent in storage stability and adhesiveness, and, furthermore, cures with moisture excellently within a short time period. In addition, the curable composition of the present invention is suitably used in an adhesive, a potting agent for an electronic or optical part, a sealer for an electronic or optical part, a sealing material, or a paint because of its effects described below: the composition is excellent in viscosity, storage stability, and adhesiveness, and, furthermore, cures with moisture excellently within a short time period.

### Brief Description of the Drawings

Fig. 1 shows results of a GPC chart of an alkoxysilane-modified oxyalkylene resin (A-1) of Example 1.
Fig. 2 shows results of a GPC chart of a vinyl monomer grafted alkoxysilane-modified oxyalkylene resin obtained in Example 1.
Fig. 3 shows results of a GPC chart of a vinyl monomer grafted alkoxysilane-modified oxyalkylene resin obtained in Example 2.
Fig. 4 shows results of a GPC chart of an alkoxysilane-modified oxyalkylene resin (A-2) of Example 3.
Fig. 5 shows results of a GPC chart of a vinyl monomer-grafted alkoxysilane-modified oxyalkylene resin obtained in Example 3.
Fig. 6 shows results of a GPC chart of a vinyl monomer grafted alkoxysilane-modified oxyalkylene resin obtained in Example 4.
Fig. 7 shows results of a GPC chart of a resin obtained in Comparative Example 1.
Fig. 8 shows results of a GPC chart of a polyoxyalkylene polyol (B-1) of Example 23.
Fig. 9 shows results of a GPC chart of a (meth)acrylic-grafted polyoxyalkylene polyol (B-2) of Example 23.

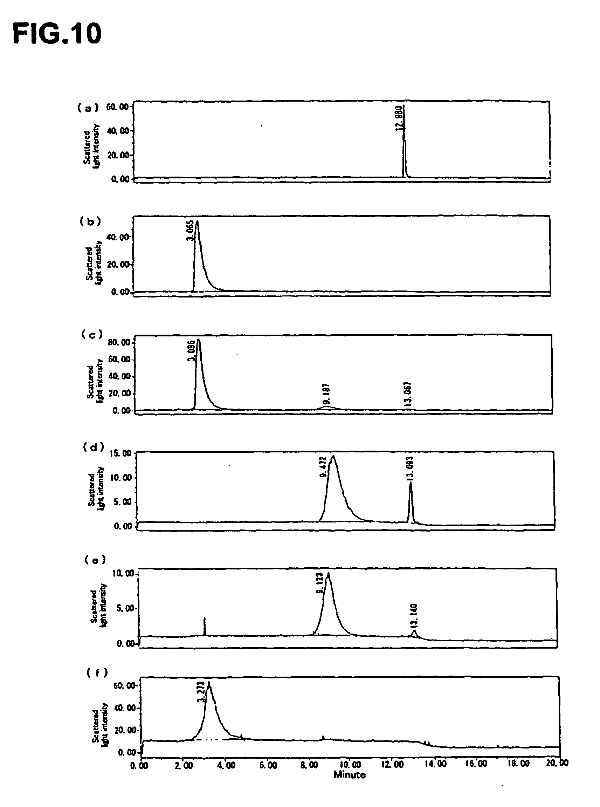

Fig. 10(a) shows results of measurement for a (meth)acrylic polymer composed of EHMA and BMA by liquid chromatography in Example 23, Fig. 10(b) shows results of measurement for PPG as a raw material by liquid chromatography in Example 23, Fig. 10(c) shows results of measurement for a (meth)acrylic-grafted polyoxyalkylene polyol before fractionation by liquid chromatography in Example 23, Fig. 10(d) shows results of measurement for a fraction A by liquid chromatography in Example 23, Fig. 10(e) shows results of measurement for a fraction B by liquid chromatography in Example 23, and Fig. 10(f) shows results of measurement for a fraction C by liquid chromatography in Example 23.

### Best Mode for carrying out the Invention

A vinyl monomer-grafted alkoxysilane-modified oxyalkylene resin according to the present invention is obtained by a method including grafting of a vinyl monomer by using an oxyalkylene based polymer as a raw material, in which: the vinyl monomer-includes a vinyl monomer containing 50 wt% or more of one or two or more kinds of (meth)acrylic monomers each represented by the following formula (1); and the vinyl monomer is subjected to a graft reaction by using an alkyl peroxide as a radical reaction initiator.

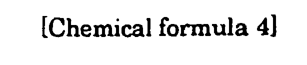

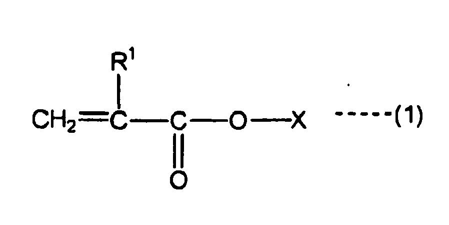

In the formula (1), R¹ represents a hydrogen atom or a methyl group, and X represents a hydrogen atom, an alkali metal atom, a hydrocarbon group having 1 to 22 carbon atoms, or a substituted hydrocarbon group having 1 to 22 carbon atoms and having a functional group containing at least one kind of an atom selected from the group consisting of a boron atom, a nitrogen atom, an oxygen atom, a fluorine atom, a phosphorus atom, a silicon atom, a sulfur atom, and a chlorine atom.

The grafting of the vinyl monomer can be simply and efficiently achieved by subjecting the vinyl monomer to a reaction by using the oxyalkylene based polymer as a raw material and the peroxy ketal as a radical reaction initiator. As a result, a vinyl monomer-grafted alkoxysilane-modified oxyalkylene resin as a novel curable resin satisfying various physical properties requested of an adhesive such as a viscosity, curability, storage stability, and adhesiveness can be obtained.

A production method for the vinyl monomer-grafted alkoxysilane-modified oxyalkylene resin of the present invention is not particularly limited as long as the method includes the grafting of the vinyl monomer by using the oxyalkylene based polymer as a raw material and the peroxy ketal as a radical reaction initiator. For example, the vinyl monomer may be subjected to a graft reaction after the modification of the oxyalkylene based polymer with an alkoxysilane compound. Alternatively, the following procedure may be adopted: after the graft reaction of the vinyl monomer has been performed, the oxyalkylene based polymer is modified with the alkoxysilane compound. Alternatively, the graft reaction and the modification may be simultaneously performed. A method of performing the graft reaction and the modification simultaneously is, for example, a method by which the graft reaction and the modification are simultaneously performed with a vinyl monomer containing a (meth)acrylic silane monomer.

The vinyl monomer-grafted alkoxysilane-modified oxyalkylene resin of the present invention has a structure in which a group derived from the above (meth)acrylic monomer is graft-bonded to an alkylene group derived from the oxyalkylene based polymer.

When the resin of the present invention is obtained by grafting the alkoxysilane-modified oxyalkylene resin, the structure can be identified by: comparing the viscosities of the alkoxysilane-modified oxyalkylene resin before the grafting and the vinyl monomer-grafted alkoxysilane-modified oxyalkylene resin after the grafting, and charts obtained by analyzing the resins by gel permeation chromatography (GPC); and observing the external appearance of the resultant resin.

In GPC, the following specific facts are observed: in the vinyl monomer-grafted alkoxysilane-modified oxyalkylene resin after the grafting, a shoulder arises at molecular weights higher than a peak including a molecular weight of the highest frequency derived from the raw material, and no molecular weight peak of a (meth)acrylic copolymer arises at molecular weights lower than the peak including the molecular weight of the highest frequency derived from the raw material.
In GPC, the (meth)acrytic monomer is grafted to the alkoxysilane-modified oxyalkylene resin as a raw material, so the molecular weight of the resultant increases as compared to that of the raw material. However, no molecular weight peak is present at lower molecular weights because no (meth)acrylic copolymer is produced. On the other hand, when the molecular weight of the (meth)acrylic copolymer is equal to or higher than that of the raw material, a shoulder may arise at molecular weights higher than the peak including the molecular weight of the highest frequency derived from the raw material. In this case, however, the viscosity of the (meth)acrylic copolymer increases as the flowability of the copolymer reduces, and the copolymer is largely different in nature from the oxyalkylene based polymer. As a result, the following problem arises: the alkoxysilane-modified oxyalkylene resin obtained by mixing the polymer and the copolymer also has such a high viscosity that it is difficult to put the resin into practical use, or that the polymer and the copolymer are separated from each other without being compatible with each other.

The viscosity of the resin of the present invention cannot be uniquely determined because the viscosity varies depending on, for example, the viscosity of the alkoxysilane-modified oxyalkylene resin, the kind and amount of the (meth)acrylic monomer to be grafted, and the amount of the radical polymerization initiator; when the (meth)acrylic monomer is used at a content of 45 wt% or less with respect to the total amount of the alkoxysilane-modified oxyalkylene resin and the (meth)acrylic monomer, the viscosity at 25°C is 1,000,000 mPa·s or less, while, when the content is 20 wt% or less, the viscosity at 25°C is 300,000 mPa ·s or less.

In addition, with regard to the external appearance of the vinyl monomer-grafted alkoxysilane-modified oxyalkylene resin, the alkoxysilane-modified oxyalkylene resin and poly(meth)acrylate are bonded, so a one-component, uniform liquid material having flowability is obtained, no solid matter or particulate matter derived from the (meth)acrylic copolymer is observed, and two-phase separation does not occur.
In view of the foregoing, the resin of the present invention can be identified as the vinyl monomer-grafted alkoxysilane-modified oxyalkylene resin because the resin satisfies conditions for a viscosity, GPC, and an external appearance.

When the resin of the present invention is obtained by modifying the oxyalkylene based polymer with alkoxysilane after its grafting, the structure of the graft bond can be identified by: comparing the viscosities of the oxyalkylene based polymer before the grafting and after the grafting, and charts obtained by analyzing the resins by gel permeation chromatography (GPC), 13C-NMR, and liquid chromatography; and observing the external appearance of the resultant resin.

In GPC, the following specific facts are observed: in the oxyalkylene based polymer after the grafting, a shoulder arises at molecular weights higher than a peak including a molecular weight of the highest frequency derived from the raw material, and no molecular weight peak of a (meth)acrylic copolymer arises at molecular weights lower than the peak including the molecular weight of the highest frequency derived from the raw material. In addition, it is also observed that two-phase separation does not occur, so the oxyalkylene based polymer has flowability.
In GPC, the (meth)acrylic monomer is grafted to the oxyalkylene based polymer as a raw material, so the molecular weight of the resultant increases as compared to that of the raw material. However, no molecular weight peak is present at lower molecular weights because no (meth)acrylic copolymer is produced. On the other hand, when the molecular weight of the (meth)acrylic copolymer is equal to or higher than that of the raw material, a shoulder may arise at molecular weights higher than the peak including the molecular weight of the highest frequency derived from the raw material. In this case, however, the viscosity of the (meth)acrylic copolymer increases as the flowability of the copolymer reduces, and the copolymer is largely different in nature from the oxyalkylene based polymer. As a result; the following problem arises the oxyalkylene based polymer obtained by mixing the copolymer also has such a high viscosity that it is difficult to put the resin into practical use, or that the polymer and the copolymer are separated from each other without being compatible with each other.

The viscosity of the resin of the present invention varies depending on the viscosity of the oxyalkylene based polymer as a raw material, the kind and content of the (meth)acrylic monomer to be grafted, and the amount of the radical polymerization initiator; when the (meth)acrylic monomer is used at a content of 45 wt% or less with respect to the total amount of the oxyalkylene based polymer and the (meth)acrylic monomer, the viscosity at 25°C is 100,000 mPa · s or less, while, when the content is 20 wt% or less, the viscosity at 25°C is 10,000 mPa · s or less.

Further, a structure constituted of a sample fractionated in accordance with a peak can be identified by subjecting the sample to NMR analysis. When a peak at higher molecular weights is fractionated and analyzed by NMR, structures derived from the oxyalkylene based polymer (polyol) as a raw material and the (meth)acrylate can be identified. The foregoing means that a compound having the structures of both the oxyalkylene based polymer (polyol) and (meth)acrylate is synthesized.

In addition, with regard to the external appearance of the vinyl monomer-grafted oxyalkylene resin, the oxyalkylene based polymer and poly(meth)acrylate are bonded, so a one-component, uniform liquid material having flowability is obtained, no solid matter or particulate matter derived from the (meth)acrylic copolymer is observed, and two-phase separation does not occur.

The foregoing fact can be confirmed by analysis based on liquid chromatography as well. In a separation method based on liquid chromatography, the oxyalkylene based polymer (polyol) and the (meth)acrylic polymer have different development times, and do not overlap each other because the method involves separating them depending on a difference in polarity between them without being basically influenced by their molecular weights. The vinyl monomer-grafted oxyalkylene polymer (polyol) of the present invention has the characteristics of both the oxyalkylene based polymer and the (meth)acrylic polymer, so the polymer has a development time between the peaks of both of them, and is clearly separated from both of them. When the peak is fractionated and identified by 1H-NMR or 13C-NMR, chemical shifts derived from the oxyalkylene based polymer (polyol) and the (meth)acrylic polymer are observed. Accordingly, it can be confirmed that a peak positioned between the shifts corresponds to a compound having the structures not of the oxyalkylene based polymer (polyol) or the (meth)acrylic polymer alone but of both of them.
In view of the foregoing, the resin of the present invention can be identified as the vinyl monomer-grafted alkoxysilane-modified oxyalkylene resin because the resin satisfies conditions for a viscosity, GPC, 13C-NMR, an external appearance, and liquid chromatography.

The peak top molecular weight of the resin of the present invention, which largely depends on the oxyalkylene based polymer as a raw material, is preferably 500 to 50,000, or more preferably 1,000 to 30,000. It should be noted that the term "peak top molecular weight" as used in the present invention refers to a molecular weight of the highest frequency measured by GPC and converted in terms of standard polyethylene glycol. A method described in Examples can be employed as a measurement method for GPC.
The viscosity of the resin of the present invention, which depends on the amount of the (meth)acrylic monomer with respect to the total amount of the oxyalkylene based polymer as a raw material or the alkoxysilane-modified oxyalkylene resin and the (meth)acrylic monomer, is preferably 300 to 1,000,000 mPa · s, more preferably 500 to 500,000 mPa · s, or most preferably 1,000 to 300,000 mPa · s at 25°C.

Hereinafter, a preferred production method for the vinyl monomer-grafted alkoxysilane-modified oxyalkylene resin of the present invention will be specifically described.

### <Preferred first embodiment of production method for resin of the present invention>

A preferred first embodiment of a production method for the resin of the present invention includes: a modification step of modifying an oxyalkylene based polymer with an alkoxysilane compound to provide an alkoxysilane-modified oxyalkylene resin; and a graft reaction step of subjecting the alkoxysilane-modified oxyalkylene resin, a vinyl monomer containing 50 wt% or more of one or two or more kinds of (meth)acrylic monomers each represented by the formula (1), and a peroxy ketal to a graft reaction.

### <Oxyalkylene based polymer>

An oxyalkylene based polymer having at least one functional group is used as the oxyalkylene based polymer. The oxyalkylene based polymer is preferably a polymer which is produced by subjecting a cyclic ether or the like to a reaction in the presence of a catalyst and an initiator and which has a hydroxyl group at any one of its terminals, or particularly preferably a polyoxyalkylene polyol or a derivative of the polyoxyalkylene polyol.
An active hydrogen compound such as a hydroxy compound having one or more hydroxyl groups can be used as the initiator. Examples of the cyclic ether include alkylene oxides such as ethylene oxide, propylene oxide, butylene oxide, hexylene oxide, and tetrahydrofuran. One kind of those cyclic ethers may be used alone, or two or more kinds of them may be used in combination. Examples of the catalyst include: alkali metal catalysts such as a potassium based compound and a cesium based compound; composite metal cyanide complex catalysts; metal porphyrin catalysts; and phosphazenium catalysts such as a phosphazene having a nitrogen-phosphorus double bond and a phosphazenium. In the present invention, a catalyst used is preferably removed after the completion of ring-opening polymerization.

The number average molecular weight of the oxyalkylene based polymer, which is not particularly limited, is preferably 4,500 or more, more preferably 5,000 to 50,000, or particularly preferably 5,600 to 30,000 in order that the polymer may obtain additional flexibility. Meanwhile, an oxyalkylene based polymer having a number average molecular weight of 4,500 or less can also be used for securing workability at a low viscosity. A mixture of a low-molecular-weight body and a high-molecular-weight body can also be used in order that both the characteristics may be obtained.

In addition, an oxyalkylene based polymer having a ratio of its weight average molecular weight (Mw) to its number average molecular weight (Mn) (hereinafter referred to as "Mw/Mn") of 1.7 or less is particularly preferably used as the oxyalkylene based polymer. In addition, the Mw/Mn is more preferably 1.6 or less, or particularly preferably 1.5 or less. When oxyalkylene based polymers having the same number average molecular weight (Mn) are compared, a polymer having a smaller Mw/Mn shows a reduced viscosity, and is excellent in workability. In addition, when a vinyl monomer-grafted alkoxysilane-modified oxyalkylene resin obtained by using the polymer as a raw material is cured, the cured product shows a larger elongation and a higher strength than those of a cured product obtained by using a raw material except the above polymer and having the same elastic modulus as that of the above cured product.

The number of functional groups of the oxyalkylene based polymer is preferably two or more. The number of functional groups of the oxyalkylene based polymer is particularly preferably two or three when one wishes to improve the flexibility out of the properties of the cured product. The number of functional groups of the oxyalkylene based polymer is particularly preferably three to eight in order that the resin of the present invention may obtain good adhesiveness or good curability.

A preferable oxyalkylene based polymer is a polyoxyalkylene polyol or a derivative of the polyoxyalkylene polyol. The polyoxyalkylene polyol is preferably a polyoxypropylene polyol which is dihydric to octahydric, or more preferably polyoxypropylene diol or polyoxypropylene triol.

The hydroxyl value of the polyoxyalkylene polyol, which is not particularly limited, is preferably 25 mgKOH/g or less, more preferably 1 to 22 mgKOH/g, or particularly preferably 2 to 20 mgKOH/g in order that the polyoxyalkylene polyol may obtain additional flexibility. Meanwhile, a polyoxyalkylene polyol having a hydroxyl value of 25 mg KOH/g or more can also be used for securing workability at a low viscosity. A mixture of a polyoxyalkylene polyol having a low hydroxyl value and a polyoxyalkylene polyol having a high hydroxyl value can also be used in order that both the characteristics may be obtained. In addition, the polyoxyalkylene polyol preferably has a total degree of unsaturation of 0.04 meq/g or less. When the hydroxyl value and the total degree of unsaturation fall within the above ranges, a resin having the following characteristic can be obtained: a product obtained by curing the resin with moisture is excellent in flexibility.

In addition, the polyoxyalkylene polyol has preferably two to five hydroxyl groups, or more preferably two hydroxyl groups in any one of its molecules. As long as the number of hydroxyl groups of the polyoxyalkylene polyol falls within the above range, a change over time such as thickening hardly occurs even when the polyoxyalkylene polyol is mixed with a compound having a functional group capable of reacting with a hydroxyl group.

Of such polyoxyalkylene polyols, one obtained by polymerizing a cyclic ether by using a composite metal cyanide complex or phosphazenium catalyst as a catalyst in the presence of an initiator is particularly preferable.
The composite metal cyanide complex is preferably any one of the complexes each mainly composed of zinc hexacyanocobaltate; out of those complexes, an ether complex and/or an alcohol complex are/is preferable. Composition described in Japanese Patent Publication No. 46-27250B can be essentially used for the complex. In this case, the ether is preferably, for example, ethylene glycol dimethyl ether (glyme) or diethylene glycol dimethyl ether (diglyme); glyme is particularly preferable from the viewpoint of the ease of handling at the time of the production of the complex. t-butanol is preferably used as an alcohol in the complex.
Examples of the phosphazenium catalyst include a phosphazenium salt of an active hydrogen compound represented by the following formula (4) and phosphazenium hydroxide represented by the following formula (5).

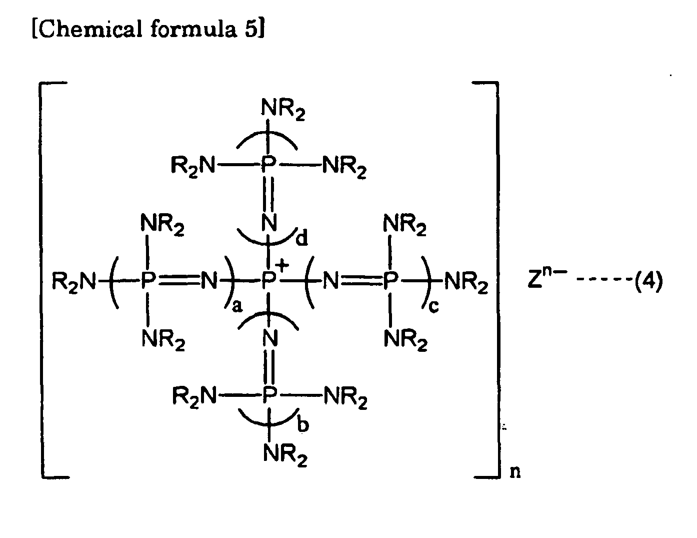

In the above formula (4), n represents an integer of 1 to 8, and means the number of phosphazenium cations, Zn represents an n-valent anion of the active hydrogen compound derived by the desorption of n protons from the active hydrogen compound having a maximum of 8 active hydrogen atoms on an oxygen atom or nitrogen atom, a, b, c, and d each represent a positive integer of 3 or less, or 0, but the case where all of a, b, c, and d each represent 0 is excluded, Rs represent hydrocarbon groups of the same kind or different kinds each having 1 to 10 carbon atoms, and two Rs on the same nitrogen atom may be bonded to each other to form a cyclic structure.

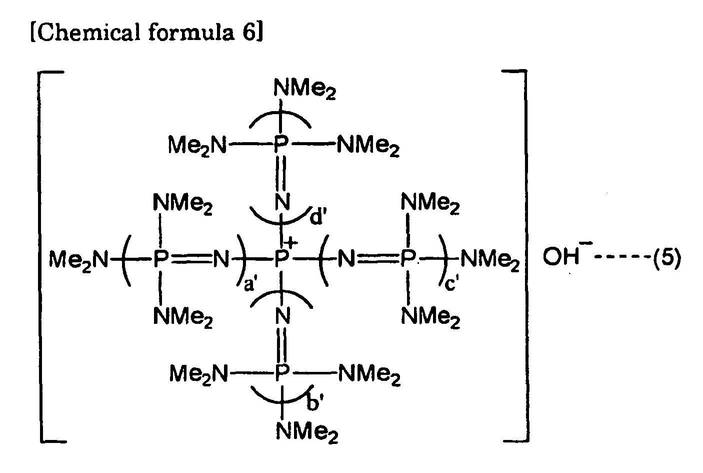

In the above formula (5), Me represents a methyl group, and a', b', c', and d' represents 0 or 1 and all of them does not represent 0 simultaneously.

Examples of the phosphazenium salts of the active hydrogen compound represented by the above formula (4) include dimethylaminotris[dimetylamino)phospholanylideneamino]phosphonium tetrafluoroborate, tetrakis[tri(pyrrolidine-1-yl)phospholanylideneaminolphosphonium tetrafluoroborate, tetrakis[tris(dimethylamino)phospholanylideneamino]phosphonium chloride, and diethylaminotris[tris(diethylamino)phospholanylideneamino]phosphonium tetrafluoroborate. Of those, tetrakis[tris(dimethylamino)phospholanylideneamino]phosphomum chloride is preferred.

Examples of the phosphazenium hydroxide represented by the above formula (5) include tetrakis[tris(dimethylamino)phospholanylideneamino]phosphonium hydroxide and (dimethylamino)tris[tris(dimethylamino)phospholanylideneamino]phosphonium hydroxide. Of those, tetrakis[tris(dimethylamino)phospholanylideneamino]phosphonium hydroxide is preferred.

An active hydrogen compound is used as the above initiator. The active hydrogen compound is not particularly limited as long as the active hydrogen compound is typically used in the production of the polyoxyalkylene polyol. Examples of such active hydrogen compound include: alkylene glycols such as ethylene glycol and propylene glycol; triols such as glycerin and trimethylolpropane; tetraols such as pentaerythritol and diglycerin; hexaols such as sorbitol; and hydroxyl group-containing compounds such as sucrose. One kind of them may be used alone, or two kinds of them may be used in combination.

Examples of the above cyclic ether include alkylene oxides such as ethylene oxide and propylene oxide. One kind of them may be used alone, or two kinds of them may be used in combination; out of those, propylene oxide is preferably used alone, or ethylene oxide and propylene oxide are preferably used in combination. That is, the above polyoxyalkylene polyol preferably contains at least an oxypropylene unit.

In the present invention, in addition to a polyoxyalkylene polyol obtained by the ring-opening addition polymerization of the cyclic ether to the active hydrogen compound as described above, a polyoxyalkylene polyol with its molecular weight increased with a methylene halide by a conventional method or increased by, for example, the condensation of an ester or hydroxyl group can also be used.
A polyoxyalkylene polyol obtained by causing a polyoxyalkylene polyol having a relatively low molecular weight produced by using an alkali metal catalyst or the like to react with a polyvalent halogen compound to increase the molecular weight is particularly preferably used.
Specific examples of the polyvalent halogen compound include methylene chloride, monochlorobromomethane, methylene bromide, methylene iodide, 1,1-dichloro-2,2-dimethylpropane, benzal chloride, bis(chloromethyl)benzene, tris(chloromethyl)benzene, bis(chloromethyl)ether, bis(chloromethyl)thioether, bis(chloromethyl) formal, tetrachloroethylene, trichloroethylene, 1,1-dichloroethylene, 1,2-dichloroethylene, and 1,2-dibromoethylene. Of those, methylene chloride and monochlorobromomethane are particularly preferred.

The derivative of the polyoxyalkylene polyol is preferably a derivative obtained by introducing a functional group to a terminal of the polyoxyalkylene polyol, or more preferably a polyoxyalkylene polyol derivative having an isocyanate group introduced to a terminal (urethane prepolymer) or a polyoxyalkylene polyol derivative having an olefin group introduced to a terminal.

The polyoxyalkylene polyol derivative having an isocyanate group introduced to a terminal (isocyanate group terminal urethane prepolymer) is obtained by causing the polyoxyalkylene polyol to react with a polyisocyanate compound such as a diisocyanate compound. The reaction is such that the polyoxyalkylene polyol and the diisocyanate compound are subjected to a urethane prepolymer formation reaction at an NCO index of preferably 1.3 or more and 3.0 or less, more preferably 1.3 or more and 2.0 or less, or still more preferably 1.3 or more and 1.5 or less in the presence of a urethane prepolymer formation reaction catalyst. In particular, when the NCO index is 1.3 or more and 1.5 or less, the molecular weight of the polyoxyalkylene polyol can be increased by bonding two or more molecules of the polyoxyalkylene polyol thorough a urethane bond, and a product obtained by curing the resin of the present invention with moisture shows additionally excellent flexibility (rubber elasticity). It should be noted that the term "NCO index" as used in the present invention refers to a value obtained by dividing the total number of isocyanate groups in the polyisocyanate or urethane prepolymer by the total number of active hydrogen atoms that react with isocyanate groups such as the hydroxyl groups of the polyoxyalkylene polyol or the like, the amino groups of the alkoxysilane compound, a crosslinking agent, or the like, and water. For example, when the number of active hydrogen atoms that react with isocyanate groups and the number of isocyanate groups in the polyisocyanate are stoichiometrically equal to each other, the NCO index is 1.0.

Examples of the diisocyanate compound include aliphatic, alicyclic, aromatic aliphatic, aromatic diisocyanate compounds and others. Specific examples thereof are as follows:
aliphatic diisocyanate compounds such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, 2,6- diisocyanate methylcaproate;
alicyclic diisocyanate compounds such as 1,3-cyclopentene diisocyanate, 1,4-cyclohexane diisocyanate, 1,3-cyclohexane diisocyanate, 3-isocyanatemethyl-3,5,5-trimethylcyclohexyl isocyanate, 4,4'-methylenebis(cyclohexylisocyanate), methyl-2,4-cyclohexane diisocyanate, methyl-2,6-cyclohexane diisocyanate, 1,3-bis(isocyanatemethyl)cyclohexane, 1,4-bis(isocyanatemethyl)cyclohexane, and isophorone diisocyanate;
aromatic aliphatic diisocyanate compounds such as 1,3- or 1,4-xylylene diisocyanate or a mixture of them, ω,ω'-diisocyanate-1,4-diethylbenzene, and 1,3-or 1,4-bis(1-isocyanate-1-methylethyl)benzene or a mixture of them;
aromatic diisocyanate compounds such as m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, 4,4'-toluidine diisocyanate, and 4,4'-diphenyl ether diisocyanate; and
other diisocyanate compounds such as diisocyanates each containing a sulfur atom including phenyl diisothiocyanate.

Of those diisocyanate compounds, 2,4- or 2,6-tolylene diisocyanate, 4,4'-diphenylmethane diisocyanate, hexamethylene diisocyanate, 1,3- or 1,4-xylylene diisocyanate or a mixture of them, isophorone diisocyanate, 1,3-bis(isocyanatemethyl)cyclohexane, 1,4-bis(isocyanatemethyl)cyclohexane, and 4,4'-methylenebis(cyclohexylisocyanate) are preferred. In addition, when the aliphatic diisocyanate compound is used, a resin which hardly causes color change can be obtained.

As the urethane prepolymer formation reaction catalyst, a known catalyst for producing a polyurethane, such as an amine compound or an organic metal compound may be used. When the molecular weight of the polyoxyalkylene polyol is large, that is, OHV is low, the catalyst may not be used.
Examples of the amine compound include triethyl amine, tripropyl amine, tributyl amine, N,N,N',N'-tetramethyl hexamethylene diamine, N-methyl morpholine, N-ethyl morpholine, dimethylcyclohexyl amine, bis[2-(dimethylamino)ethyl]ether, triethylene diamine, and salts of triethylene diamine.
Examples of the organic metal compound include stannous octylate, monobutyl tin oxide, dibutyl tin oxide, tin acetate, tin octylate, tin oleate, tin laurate, dibutyl tin diacetate, dibutyl tin dilaurate, dibutyl tin dichloride, lead octoate, lead naphthenate, nickel naphthenate, and cobalt naphthenate.

Only one kind of those urethane prepolymer formation reaction catalysts may be used, or two or more kinds of them may be used in combination. In addition, an organometallic catalyst out of those catalysts is particularly preferable. A ratio of the weight of the catalyst to the sum of the weight of the polyoxyalkylene polyol and the weight of the diisocyanate compound is desirably 1 ppm or more and 10,000 ppm or less, or preferably 10 ppm or more and 1,000 ppm or less. The temperature at the time of the production of the prepolymer is preferably 50 to 120°C, or particularly preferably 60 to 100°C. The reaction is desirably performed in the presence of an inert gas in order that the reactants may be out of contact with moisture in the air. Examples of the inert gas include nitrogen and helium; nitrogen is preferable.

In addition, the isocyanate group terminal urethane prepolymer is preferably obtained by causing the polyoxyalkylene polyol to react with an alkoxysilane compound having an isocyanate group and a polyisocyanate compound (more preferably a diisocyanate compound).
The order in which a reaction between the polyoxyalkylene polyol and the alkoxysilane compound having an isocyanate group and a reaction between the polyoxyalkylene polyol and the polyisocyanate compound are performed is not particularly limited. The former reaction may be performed before the latter reaction, or vice versa, or the reactions may be simultaneously performed; a method involving causing the polyoxyalkylene polyol and the alkoxysilane compound having an isocyanate group to react with each other and causing the reaction product and the polyisocyanate compound to react with each other, or a method involving causing the polyoxyalkylene polyol to react with the alkoxysilane compound having an isocyanate group and the polyisocyanate compound simultaneously is more preferable.

The alkoxysilane compound having an isocyanate group is, for example, a compound represented by the following formula (6), and an isocyanate triethoxysilane such as 3-isocyanate propyltriethoxysilane is preferable.

(R¹¹)₃₋ₙSiXₙ-R¹²-NCO (6)

In the formula (6), R¹¹ represents a substituted or unsubstituted, monovalent organic group having 1 to 20 carbon atoms, preferably represents an alkyl, phenyl, or fluoroalkyl group having 8 or less carbon atoms, or particularly preferably represents a methyl group, an ethyl group, a propyl group, a butyl group, a hexyl group, a cyclohexyl group, a phenyl group, or the like. When multiple R¹¹s are present in the formula (6), the multiple R¹¹s may be identical to or different from each other. In the formula (6), X represents an alkoxy group, preferably represents an alkoxy group having 6 or less carbon atoms, more preferably represents an alkoxy group having 4 or less carbon atoms; or particularly preferably represents a methoxy group, an ethoxy group, or a propoxy group. When multiple Xs are present, the multiple Xs may be identical to or different from each other. R¹² represents a divalent hydrocarbon group having 1 to 20 carbon atoms, preferably represents an alkylene or phenylene group having 8 or less carbon atoms, or particularly preferably represents a methylene group, an ethylene group, a propylene group, a trimethylene group, a tetramethylene group, a hexamethylene group, or the like. n represents an integer of 1 to 3, preferably represents 2 or 3 from the viewpoint of the adhesiveness of the resin of the present invention, or more preferably represents 3.

A known urethane formation catalyst may be used upon reaction between the polyoxyalkylene polyol and the alkoxysilane compound having an isocyanate group. The reaction is such that the polyoxyalkylene polyol and the alkoxysilane compound having an isocyanate group are subjected to a urethane prepolymer formation reaction at an NCO index of preferably 0.95 or more and 1.2 or less, more preferably 0.97 or more and 1.15 or less, or still more preferably 1.0 or more and 1.1 or less in the presence of a urethane formation reaction catalyst. In particular, when the NCO index is 1.0 or more and 1.1 or less, the amount of unreacted hydroxyl and isocyanate groups is small, so the resin of the present invention shows additionally excellent storage stability. The above-mentioned urethane prepolymer formation reaction catalyst is similarly used as the urethane formation catalyst. Reaction conditions except the NCO index are preferably selected in the same manner as in the above-mentioned urethane prepolymer formation reaction.

The reaction between the polyoxyalkylene polyol and the polyisocyanate compound can be performed in the same manner as that described above.

A method of introducing an olefin group in the polyoxyalkylene polyol derivative having an olefin group introduced to a terminal is, for example, a method involving causing a compound having an unsaturated group and a functional group to react with a hydroxyl group of the polyoxyalkylene polyol to bond the compound to the polyoxyalkylene polyol through, for example, an ether bond, ester bond, urethane bond, or carbonate bond, or a method involving transforming a hydroxyl group of the polyoxyalkylene polyol into an ONa group or OK group, and causing a compound having an unsaturated group and a functional group to react with the ONa group or OK group to bond the compound to the polyoxyalkylene polyol through, for example, an ether bond, ester bond, urethane bond, or carbonate bond. The following method can also be employed: upon polymerization of the cyclic ether, an olefin group-containing epoxy compound such as allyl glycidyl ether is added to copolymerize the ether so that an olefin group may be introduced to a side chain of the oxyalkylene based polymer.

### <Modification step of first embodiment>

The above-mentioned oxyalkylene based polymer is modified with the alkoxysilane compound, whereby an alkoxysilane-modified oxyalkylene resin in which an alkoxysilyl group is introduced to a terminal, or each of part or the entirety of the side chains, of the molecular chain is obtained.

The alkoxysilyl group is more preferably an alkoxysilyl group represented by the following formula (7).

-SiXₙ(R¹¹)₃₋ₙ (7)

In the formula (7), R¹¹ represents a substituted or unsubstituted, monovalent organic group having 1 to 20 carbon atoms, X represents an alkoxy group, and n represents an integer of 1 to 3. When multiple Xs or multiple R¹¹s are present, the multiple Xs or the multiple R¹¹s may be identical to or different from each other. X, R¹¹, and n each preferably represent the same thing as that described in the formula (6).
To be specific, an alkyldialkoxysilyl group having an alkoxy group having 4 or less carbon atoms, and a trialkoxysilyl group having an alkoxy group having 4 or,less carbon atoms are suitable, and a trialkoxysilyl group having an alkoxy group having 2 or less carbon atoms (such as a trimethoxysilyl group or a triethoxysilyl group) is more suitable.

A polymer having a trialkoxysilyl group has extremely high reactivity, and, in particular, cures at an extremely high speed at an initial stage. A hydrolysis reaction is typically considered to advance via the following mechanism: a silanol group is produced by a reaction between the polymer and water (a silanol group production reaction represented by -SiX+H₂O→-SiOH+HX), and, furthermore, a reaction in which produced silanol groups are condensed with each other, or are each condensed with a hydrolyzable silicon group, to produce a siloxane bond (condensation reaction) occurs to advance the hydrolysis reaction. The condensation reaction may progress smoothly once silanol groups have been produced. The trialkoxysilyl group shows an extremely high reaction rate at the initial stage of the silanol group production reaction as compared to an alkyldialkoxysilyl group or a dialkylalkoxysilyl group.
Therefore, a curable composition containing a vinyl monomer-grafted alkoxysilane-modified oxyalkylene resin having a trialkoxysilyl group has the following effects: the composition exerts sufficient strength property within a short time period, and, in particular, a time period commencing on the time point at which the composition is prepared and ending on the time point at which the composition exerts adhesiveness is short. Further, the composition has the following characteristics: the composition has a low viscosity, and is excellent in workability. In addition, a raw material for the composition is readily available, so the composition is industrially useful. In addition, out of the trialkoxysilyl groups, a trialkoxysilyl group having an alkoxy group having a small number of carbon atoms is preferable to a trialkoxysilyl group having an alkoxy group having a large number of carbon atoms because the former trialkoxysilyl group shows a higher reaction rate at the initial stage of the silanol group production reaction than that of the latter trialkoxysilyl group; a trimethoxysilyl group or a triethoxysilyl group is more preferable, and a trimethoxysilyl group is most preferable because the group shows an extremely high reaction rate at the initial stage of the silanol group production reaction.

The number of alkoxysilyl groups in the alkoxysilane-modified oxyalkylene resin is preferably 1.2 or more, more preferably 2 or more, still more preferably 2 to 8, or particularly preferably 2 to 6.

A method involving modifying the oxyalkylene based polymer with the alkoxysilane compound to provide the alkoxysilane-modified oxyalkylene resin into which an alkoxysilyl group is introduced, which is not particularly limited, is, for example, any one of the following methods (1) to (3).

Method (1); a method involving causing the alkoxysilane compound to react with the above-mentioned polyoxyalkylene polyol derivative having an olefin group introduced to a terminal to be used as the oxyalkylene based polymer.

The alkoxysilane compound, which is not particularly limited, is preferably a silicon hydride compound represented by the following formula (8) or a mercapto group-containing alkoxysilane compound represented by the following formula (9).

HSiXₙ(R¹¹)₃₋ₙ (8)

In the formula (8), R¹¹ represents a substituted or unsubstituted, monovalent organic group having 1 to 20 carbon atoms, X represents an alkoxy group, and n represents an integer of 1 to 3. When multiple Xs or multiple R¹¹s are present, the multiple Xs or the multiple R¹¹s may be identical to or different from each other. X, R¹¹, and n each preferably represent the same thing as that described in the formula (6).

(R¹¹)₃₋ₙ-SiXₙ-R¹²-SH (9)

In the formula (9), R¹¹ represents a substituted or unsubstituted, monovalent organic group having 1 to 20 carbon atoms, X represents an alkoxy group, R¹² represents a divalent hydrocarbon group having 1 to 20 carbon atoms, and n represents an integer of 1 to 3. When multiple Xs or multiple R¹¹s are present, the multiple Xs or the multiple R¹¹s may be identical to or different from each other. X, R¹¹, and n each preferably represent the same thing as that described in the formula (6).

In causing the above-mentioned silicon hydride compound to react with the polyoxyalkylene polyol derivative, a catalyst such as a platinum based catalyst, a rhodium based catalyst, a cobalt based catalyst, a palladium based catalyst, or a nickel based catalyst can be used; the platinum based catalyst such as a chloroplatinate, a platinum metal, platinum chloride, or a platinum olefin complex is preferable. The reaction between the polyoxyalkylene polyol derivative and the silicon hydride compound is preferably performed at a temperature of 30 to 150°C, or more preferably 60 to 120°C for several hours.

Examples of the above-mentioned mercapto group-containing alkoxysilane compound include 3-mercaptopropyl methyl dimethoxysilane, 3-mercaptopropylmethyl diethoxysilane, 3-mercaptopropyl trimethoxysilane, 3-mercaptopropyl triethoxysilane, and 3-mercaptopropyl triisopropenyloxysilane.

In the case of a reaction of the mercapto group-containing alkoxysilane compound, a polymerization initiator such as a radical generator may be used and the reaction may be performed by radial rays or heat without using a polymerization initiator according to cases. As the polymerization initiator, there are given peroxide-based, azo-based, or redox-based polymerization initiators, and metal compound catalysts. Specific examples of the polymerization initiator include 2,2'-azobisisobutyronitrile, 2,2'-azobis-2-methylbutyronitrile, benzoyl peroxide, t-alkylperoxyester, acetylperoxide, and diisopropylperoxycarbonate. In addition, the reaction is performed at 20 to 200°C and preferably 50 to 150°C for several hours to tens of hours.

Method (2); a method involving using an oxyalkylene-based polymer having a hydroxy group or preferably the above-mentioned polyoxyalkylene polyol as the oxyalkylene-based polymer to allow the reaction of the alkoxysilane compound having an isocyanate group.

A compound represented by the above formula (6) is suitably used as the alkoxysilane compound having an isocyanate group. A known urethane formation catalyst may be used at the time of the above reaction. In addition, the above reaction is preferably performed at a temperature of 20 to 200°C, or more preferably 50 to 150°C for several hours.

Method (3); a method involving causing the alkoxysilane compound to react with the above-mentioned polyoxyalkylene polyol derivative into which an isocyanate group is introduced (urethane prepolymer) to be used as the oxyalkylene based polymer.

Although the alkoxysilane compound is not particularly limited, an alkoxysilane compound having a reactive functional group such as an alkoxysilane compound containing an active hydrogen-containing group or the above-mentioned alkoxysilane compound having an isocyanate group is preferably used. The alkoxysilane compound containing an active hydrogen-containing group is, for example, a compound represented by the following formula (10).

(R¹¹)₃₋ₙ-SiXₙ-R¹²-W ··· (10)

In the formula (10), R¹¹ represents a substituted or unsubstituted, monovalent organic group having 1 to 20 carbon atoms, X represents an alkoxy group, R¹² represents a divalent hydrocarbon group having 1 to 20 carbon atoms, and n represents an integer of 1 to 3. When multiple Xs or multiple R¹¹s are present, the multiple Xs or the multiple R¹¹s may be identical to or different from each other. X, R¹¹, and n each preferably represent the same thing as that described in the formula (6). W represents a hydroxyl group, a carboxyl group, a mercapto group, a primary amino group, or a secondary amino group.

In particular, the alkoxysilane compound is preferably an alkoxysilane compound having a secondary amino group, and more preferably an alkoxysilane compound represented by the following formula (3).

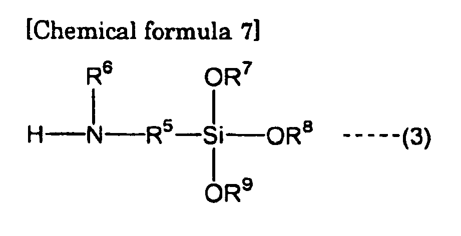

In the formula (3), R⁵ represents an alkylene group having 1 to 20 carbon atoms, R⁶ represents an aliphatic hydrocarbon group having 1 to 20 carbon atoms, or an aromatic hydrocarbon group having 6 to 20 carbon atoms, and R⁷, R⁸, and R⁹ each independently represent an alkyl group having 1 to 20 carbon atoms.
Examples of the alkoxysilane compound represented by the above formula (3) include a KBM753 (trade name, manufactured by Shin-Etsu Chemical Co., Ltd., N-phenyl-3-aminopropyltrimethoxysilane) and an A-link 15 (trade name, manufactured by GE). In addition, an alkoxysilane compound having a secondary amino group synthesized by subjecting an alkoxysilane compound having a primary amino group and a compound having a vinyl group to a Michael addition reaction can also be used.

Upon reaction between the above urethane prepolymer and the alkoxysilane compound, an NCO index is preferably 1.0 or more and 1.2 or less, or more preferably 1.0 or more and 1.1 or less.
In addition, upon modification with the alkoxysilane compound, a urethane prepolymer formation reaction catalyst is preferably used as a catalyst. The residual catalyst of the above urethane prepolymer formation reaction can be used as the urethane prepolymer formation reaction catalyst, so there is no need to add a urethane prepolymer formation reaction catalyst newly. In addition, the temperature at the time of the modification with the alkoxysilane compound is preferably 50 to 120°C, or particularly preferably 60 to 100°C. The modification with the alkoxysilane compound is desirably performed in the presence of an inert gas in order that the reactants may be out of contact with moisture in the air. Examples of the inert gas include nitrogen and helium; nitrogen is preferable.

The number average molecular weight of the alkoxysilane-modified oxyalkylene resin in the present invention is preferably 500 to 50,000, or particularly preferably 1,000 to 30,000, though the preferable value varies depending on applications where the resin is used. When the number average molecular weight falls short of the above range, the resin may be unable to obtain desirable physical properties. In addition, when the number average molecular weight exceeds the above range, the resin tends to have an increased viscosity and to be poor in ease of handling.

### <Graft reaction step of first embodiment>

A vinyl monomer-grafted alkoxysilane-modified oxyalkylene resin of the present invention is obtained by subjecting the above alkoxysilane-modified oxyalkylene resin, a vinyl monomer containing 50 wt% or more of one or two or more kinds of (meth)acrylic monomers each represented by the following formula (1), and a peroxy ketal as a radical reaction initiator to a graft reaction.

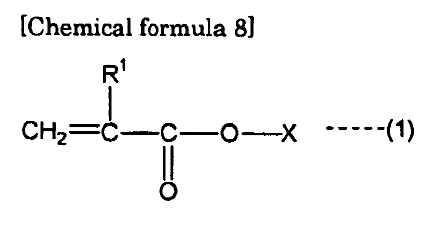

In the formula (1), R¹ represents a hydrogen atom or a methyl group, and X represents a hydrogen atom, an alkali metal atom, a hydrocarbon group having 1 to 22 carbon atoms, or a substituted hydrocarbon group having 1 to 22 carbon atoms and having a functional group containing at least one kind of an atom selected from the group consisting of a boron atom, a nitrogen atom, an oxygen atom, a fluorine atom, a phosphorus atom, a silicon atom, a sulfur atom, and a chlorine atom.

### <Vinyl monomer>

A vinyl monomer to be used in the present invention contains one or two or more kinds of (meth)acrylic monomers each represented by the above formula (1) at a content of 50 wt% or more, preferably 70 wt% or more, more preferably 90 wt% or more, or particularly preferably 95 wt% or more with respect to the total amount of the vinyl monomer, i.e., 100 wt%.

In the above formula (1), R¹ preferably represents a methyl group from the viewpoint of the adhesive strength of the resin of the present invention.
Examples of the functional group containing at least one kind of an atom selected from the group consisting of a boron atom, a nitrogen atom, an oxygen atom, a fluorine atom, a phosphorus atom, a silicon atom, a sulfur atom, and a chlorine atom in X of the above formula (1) include a carbonyl group, a hydroxyl group, an ether group, a chlorine atom, a fluorine atom, a primary amino group, a secondary amino group, a tertiary amino group, a quaternary amine salt group, an amide group, an isocyanate group, an alkylene oxide group, a hydroxysilyl group, an alkoxysilyl group, a chlorosilyl group, a bromosilyl group, and a glycidyl group.

In addition, a hydrocarbon group in each of the hydrocarbon group having 1 to 22 carbon atoms and the substituted hydrocarbon group having 1 to 22 carbon atoms each represented by X of the above formula (1) may be linear, may have a side chain, may have a double bond, may have a triple bond, or may have a cyclic structure. The hydrocarbon group is preferably an alkyl group having 3 to 12 carbon atoms, or an aralkyl group having 7 to 12 carbon atoms, and examples of such groups include a propyl group, a butyl group, a 2-ethylhexyl group, a cyclohexyl group, a dicyclopentanyl group, an isobornyl group, a lauryl group, and a phenylene group. Of those, a butyl group or a 2-ethylhexyl group is preferable, and a butyl group is more preferable.

X in the formula (1) preferably contains an alkoxysilyl group represented by the following formula (2).

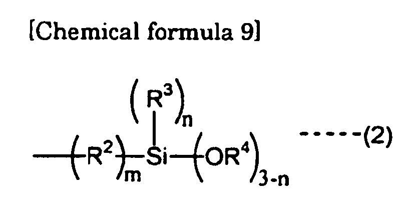

In the formula (2), R² represents a bivalent hydrocarbon group having 1 to 10 carbon atoms or preferably a bivalent hydrocarbon group having 1 to 4 carbon atoms; R³ represents an alkyl group having 1 to 10 carbon atoms, an aryl group having 6 to 10 carbon atoms, or an aralkyl group having 7 to 10 carbon atoms, preferably an alkyl group having 1 to 4 carbon atoms, particularly preferably a methyl group, an ethyl group, or a propyl group; R⁴ represents a unsubstituted or substituted hydrocarbon group having 1 to 8 carbon atoms, preferably an unsubstituted hydrocarbon group having 1 to 3 carbon atoms, particularly preferably a methyl group, an ethyl group, or an n-propyl group; n represents an integer of 0 to 2, preferably 0 or 1, more preferably 0; and m represents 0 or 1, preferably 1.

Examples of the (meth)acryl monomer represented by the above formula (1) include: alkyl acrylates such as methyl acrylate, ethyl acrylate, propyl acrylate, butyl acrylate, pentyl acrylate, hexyl acrylate, 2-ethylhexyl acrylate, octyl acrylate, nonyl acrylate, decyl acrylate, and dodecyl acrylate; aryl acrylates such as phenyl acrylate and benzyl acrylate; alkoxyalkyl acrylates such as methoxyethyl acrylate, ethoxyethyl acrylate, propoxyethyl acrylate, butoxyethyl acrylate, and ethoxypropyl acrylate; alkyl methacrylates such as methyl methacrylate, ethyl methacrylate, propyl methacrylate, butyl methacrylates (n-butyl methacrylate, isobutyl methacrylate, and t-butyl methacrylate), pentyl methacrylate, hexyl methacrylate, cyclohexyl methacrylate, 2-ethylhexyl methacrylate, octyl methacrylate, nonyl methacrylate, decyl methacrylate, and dodecyl methacrylate; aryl methacrylates such as phenyl methacrylate and benzyl methacrylate; alkoxyalkyl methacrylates such as methoxyethyl methacrylate, ethoxyethyl methacrylate, propoxyethyl methacrylate, butoxyethyl methacrylate, and ethoxypropyl methacrylate; diacrylates of (poly)alkylene glycol such as diacrylates of ethylene glycol, diacrylates of diethylene glycol, diacrylates of triethylene glycol, diacrylates of polyethylene glycol, diacrylates of propylene glycol, diacrylates of dipropylene glycol, and diacrylates of tripropylene glycol; dimethacrylates of (poly)alkylene glycol such as dimethacrylates of ethylene glycol, dimethacylates of diethylene glycol, dimethacrylates of triethylene glycol, diacrylates of polyethylene glycol, dimethacrylates of propylene glycol, dimethacrylates of dipropylene glycol, and dimethacrylates of tripropylene glycol; polyvalent acrylates such as trimethylolpropane triacrylate; polyvalent methacrylates such as trimethylolpropane trimethacrylate; vinyl halide compounds such as 2-chloroethyl acrylate and 2-chloroethyl methacrylate; acrylates of alicyclic alcohol such as cyclohexyl acrylate; methacrylates of alicyclic alcohol such as cyclohexyl methacrylate; aziridine group-containing polymerizable compounds such as 2-aziridinyl ethyl acrylate and 2-aziridinyl ethyl methacrylate; epoxy group-containing vinyl monomers such as allylglycidyl ether, glycidyl ether acrylate, glycidyl ether methacrylate, glycidyl ether acrylate, 2-ethylglycidyl ether acrylate, and 2-ethylglycidyl ether methacrylate; hydroxy group-containing vinyl compounds such as 2-hydroxyethyl acrylate, 2-hydroxyethyl methacrylate, 2-hydroxyproply acrylate, a monoester of acrylic acid or methacrylic acid, and polypropylene glycol or polyethylene glycol, an adduct of a lactone and 2-hydroxyethyl (meth)acrylate; fluorine-containing vinyl monomers such as fluorine-substituted alkyl methacrylates, fluorine-substituted alkyl acrylates; (meth)acrylic silane monomers represented by the formula (1) except that X in the formula (1) is changed to an alkoxy silyl group represented by the formula (2) such as Y-methacryloxypropyl methyldiethoxy silane, Y-methacryloxypropyl triethoxysilane, (meth)acrylpropyl trimethoxysilane, and (meth)acrylpropyl methyldimethoxysilane; and amino group-containing (meth)acrylates such as diethylaminoethyl acrylate and diethylaminoethyl methacrylate.

Preferable specific examples of the (meth)acrylmonomer represented by the above formula (1) include n-butyl methacrylate, isobutyl methacrylate, t-butyl methacrylate, cyclohexyl methacrylate, 2-ethylhexyl methacrylate, γ-methacryloxypropylmethyl diethoxysilane, γ-methacryloxypropyl triethoxysilane, γ-methacryloxypropyl trimethoxysilane, γ-methacryloxypropyl methyldimethoxysilane, diethylaminoethyl acrylate, and diethylaminoethyl methacrylate.

The (meth) acrylic monomer may be used alone or two or more kinds of them may be used in combination. The (meth) acrylic monomer preferably includes (meth) acrylic silane monomer represented by the formula (1) except that X in the formula (1) is changed to an alkoxy silyl group represented by the formula (2).

Examples of the other vinyl monomer that may be used with the (meth) acrylic monomer include acrylonitrile, styrene, acrylamide, vinyl esters such as vinyl acetate, vinyl ethers such as ethyl vinyl ether, and vinyl silanes. One kind of vinyl monomers may be used alone or two or more kinds of them may be used in combination.

### <Radical reaction initiator>

In the present invention, a peroxy ketal in used as a radical reaction initiator in the case of a graft reaction. The peroxy ketal used in the present invention may be used alone or two or more kinds of them may be used in combination.
Examples of the peroxyketals are
1,1-di(t-hexylperoxy)cyclohexane,
1,1-di(t-hexylperoxy)-3,3,5-trimethylcyclohexane,
1,1-di(t-butylperoxy)cyclohexane, n-butyl 4,4-di(t-butylperoxy)valerate,
2,2-di(t-butylperoxy)butane, 1,1-di(t-butylperoxy)-2-methylcyclohexane,
1,1-di(t-butylperoxy)-3,3,5-trimethylcyclohexane, and
2,2-di(4,4-dibutylperoxycyclohexyl)propane
1,1-di(t-butylperoxy)cyclohexane is preferably used. When the above peroxy ketal is used, the graft reaction is performed. The peroxy ketal may be used alone or two or more kinds of them may be used in combination.

### <Graft reaction>

When the above alkoxysilane-modified oxyalkylene resin, the above vinyl monomer containing 50 wt% or more of one or two or more kinds of (meth)acrylic monomers, and an alkyl peroxide are subjected to a graft reaction, a predetermined amount of each of the vinyl monomer and the alkyl peroxide described above is preferably added to the alkoxysilane-modified oxyalkylene resin before the reaction.

The reaction temperature is preferably 100 to 155°C, more preferably 105 to 150°C, or most preferably 110 to 145°C.

The vinyl monomer may be added at a time, or may be added sequentially. In the case of the addition at a time, the temperature of the mixture may increase abruptly owing to heat of reaction, so the sequential addition is preferable. The time period for which the vinyl monomer is added (drop time) is preferably 5 to 600 minutes, more preferably 60 to 450 minutes, or most preferably 120 to 300 minutes. When the vinyl monomer is dropped over a time period within the above range, the abrupt temperature increase due to heat of reaction can be prevented, so the graft reaction can be stably performed. Alternatively, the following procedure may be adopted: the vinyl monomer is mixed with part of the alkoxysilane-modified oxyalkylene resin in advance, and the mixture is added to the remaining alkoxysilane-modified oxyalkylene resin.

The above graft reaction can be performed without using a substance except the alkoxysilane-modified oxyalkylene resin, the vinyl monomer, and the alkyl peroxide described above, specifically, for example, any other solution or solvent.

In the present invention, predetermined amounts of the vinyl monomer and the alkyl peroxide are added to the alkoxysilane-modified oxyalkylene resin as described above, and then the temperature of the mixture is held at the above reaction temperature so that the graft reaction may be aged. After that, an unreacted vinyl monomer is removed by a decompression treatment or the like, whereby the vinyl monomer-grafted alkoxysilane-modified oxyalkylene resin according to the present invention can be obtained.

Although the ratio at which the alkoxysilane-modified oxyalkylene resin, the vinyl monomer, and the alkyl peroxide are blended at the time of the graft reaction is not particularly limited, the vinyl monomer is preferably blended at a content of 0.1 to 45 wt% with respect to the total amount of the alkoxysilane-modified oxyalkylene resin and the vinyl monomer. Setting the amount of the vinyl monomer within the above range can provide a resin exerting a sufficient effect and having a low viscosity preferable for practical use. When the vinyl monomer contains the above-mentioned (meth)acrylic silane monomer, the vinyl monomer is suitably blended at a content of 0.1 to 25 wt%, preferably 0.5 to 20 wt%, or more preferably 1 to 15 wt% with respect to the total amount of the alkoxysilane-modified oxyalkylene resin and the vinyl monomer. When the vinyl monomer does not contain the above-mentioned (meth) acrylic silane monomer, the vinyl monomer is suitably blended at a content of 10 to 45 wt%, preferably 10 to 40 wt%, or more preferably 10 to 35 wt% with respect to the total amount of the alkoxysilane-modified oxyalkylene resin and the vinyl monomer.
In addition, the usage of the alkyl peroxide is suitably such that 1 mole of the alkoxysilane-modified oxyalkylene resin is blended with 0.2 to 4.0 moles of the alkyl peroxide. Further, a suitably combination of the vinyl monomer and the alkyl peroxide is available depending on the amount of the (meth) acrylic monomers in the above vinyl monomer. To be specific, the amount of the (meth)acrylic monomers in the vinyl monomer is 1.0 to 120 moles, preferably 1.5 to 100 moles, or most preferably 2.0 to 90 moles with respect to 1.0 mole of the alkyl peroxide.
The vinyl monomer-grafted alkoxysilane-modified oxyalkylene resin of the present invention can cure with moisture in an additionally excellent fashion when the usage of each of the alkoxysilane-modified oxyalkylene resin, the vinyl monomer, and the radical reaction initiator falls within the above range.

### <Preferred second embodiment of production method for resin of the present invention>

A preferred second embodiment of a production method for the resin of the present invention includes: a graft reaction step of subjecting an oxyalkylene based polymer, a vinyl monomer containing 50 wt% or more of one or two or more kinds of (meth)acrylic monomers each represented by the formula (1), and an alkyl peroxide to a graft reaction to provide a vinyl monomer-grafted oxyalkylene resin; and a modification step of modifying the vinyl monomer-grafted oxyalkylene resin with an alkoxysilane compound.

### <Graft reaction step of second embodiment>

In the second embodiment, the same compounds as those described in the first embodiment are suitably used as the oxyalkylene based polymer, the vinyl monomer, and the alkyl peroxide; the above-mentioned polyoxyalkylene polyol is more preferably used as the oxyalkylene based polymer.
The oxyalkylene based polymer, the vinyl monomer, and the alkyl peroxide can be subjected to a graft reaction in the same manner as in the graft reaction of the first embodiment described above except that the oxyalkylene based polymer is used instead of the alkoxysilane-modified oxyalkylene resin. The graft reaction provides the vinyl monomer-grafted oxyalkylene resin in which the vinyl monomer is grafted to the oxyalkylene based polymer.

### <Modification step of second embodiment>

The vinyl monomer-grafted oxyalkylene resin is modified with the alkoxysilane compound, whereby the vinyl monomer-grafted alkoxysilane-modified oxyalkylene resin of the present invention in which an alkoxysilyl group is introduced to a terminal, or each of part or the entirety of the side chains, of the molecular chain is obtained.
The alkoxysilyl group is more preferably the above-mentioned alkoxysilyl group represented by the formula (7). The number of alkoxysilyl groups in the vinyl monomer-grafted alkoxysilane-modified oxyalkylene resin is preferably 1.2 or more, more preferably 2 or more, still more preferably 2 to 8, or particularly preferably 2 to 6.

In the second embodiment, a method of modifying the vinyl monomer-grafted oxyalkylene resin with the alkoxysilane compound, which is not particularly limited, is, for example, any one of the following methods (4) to (6).

Method (4); a method in which, when the graft reaction is performed by using a polyoxyalkylene polyol as the oxyalkylene based polymer, the resultant vinyl monomer-grafted oxyalkylene resin having a hydroxyl group is caused to react with the alkoxysilane compound having an isocyanate group.
A compound represented by the above formula (6) is suitably used as the alkoxysilane compound having an isocyanate group. A known urethane formation catalyst may be used at the time of the above reaction. In addition, the above reaction is preferably performed at a temperature of 50 to 120°C, or more preferably 60 to 100°C for several hours.

Method (5); a method in which, when the graft reaction is performed by using a polyoxyalkylene polyol as the oxyalkylene based polymer, an isocyanate group is introduced into the resultant vinyl monomer-grafted oxyalkylene resin having a hydroxyl group, and then the vinyl monomer-grafted oxyalkylene resin into which the isocyanate group is introduced (urethane prepolymer) is caused to react with the alkoxysilane compound.

A method of introducing the isocyanate group into the vinyl monomer-grafted oxyalkylene resin, which is not particularly limited, is, for example, a method involving causing the vinyl monomer-grafted oxyalkylene resin and a polyisocyanate compound such as a diisocyanate compound to react with each other, or a method involving causing the vinyl monomer-grafted oxyalkylene resin to react with an alkoxysilane compound having an isocyanate group and a polyisocyanate compound (preferably a diisocyanate compound). Each of those methods can be performed in the same manner as in the method of obtaining a urethane prepolymer in the first embodiment described above except that the vinyl monomer-grafted oxyalkylene resin having a hydroxyl group is used instead of the polyoxyalkylene polyol.

A method of causing the vinyl monomer-grafted oxyalkylene resin into which an isocyanate group is introduced to react with the alkoxysilane compound, which is not particularly limited, is preferably performed in the same manner as in the method (3) in the modification step of the first embodiment described above.

Method (6); a method in which, when the graft reaction is performed by using a polyoxyalkylene polyol as the oxyalkylene based polymer, an olefin group is introduced into the resultant vinyl monomer grafted oxyalkylene resin having a hydroxyl group, and then the vinyl monomer-grafted oxyalkylene resin into which the olefin group is introduced is caused to react with the alkoxysilane compound.

A method of introducing the olefin group into the vinyl monomer-grafted oxyalkylene resin, which is not particularly limited, is preferably performed in the same manner as in the method of introducing the olefin group in the first embodiment described above except that the vinyl monomer-grafted oxyalkylene resin having a hydroxyl group is used instead of the polyoxyalkylene polyol.

A method of causing the vinyl monomer-grafted oxyalkylene resin into which an olefin group is introduced to react with the alkoxysilane compound, which is not particularly limited, is preferably performed in the same manner as in the method (1) in the modification step of the first embodiment described above.

### <Curable composition>

A curable composition of the present invention is a composition characterized by containing the vinyl monomer-grafted alkoxysilane-modified oxyalkylene resin of the present invention described above and a curing catalyst.
The curable composition of the present invention is suitably used as a one-component, moisture-curable resin composition. In addition, the curable composition of the present invention is suitably used as a modified silicone based elastic adhesive.
In addition, the curable composition of the present invention cures with moisture excellently, and provides a cured product by curing with moisture. Accordingly, the curable composition can be suitably used in, for example, a modified silicone based sealing material, a paint, a potting agent for an electronic or optical part, or a sealer for an electronic or optical part.

Only one kind of the vinyl monomer-grafted alkoxysilane-modified oxyalkylene resin may be incorporated into the curable composition of the present invention, or two or more kinds of the vinyl monomer-grafted alkoxysilane-modified oxyalkylene resins may be used.
Any one of all the vinyl monomer-grafted alkoxysilane-modified oxyalkylene resins of the present invention described above can be used as the vinyl monomer-grafted alkoxysilane-modified oxyalkylene resin; a resin which is produced by a method including a reaction step with a diisocyanate compound and an alkoxysilyl compound having an isocyanate group prior to a modification step with an alkoxysilane compound, the alkoxysilane compound used in the modification being an alkoxysilane compound having a secondary amino group, is particularly preferable.
In addition, when two or more kinds of resins are used, a resin produced by a method involving a reaction with a polyisocyanate compound (urethane prepolymer formation reaction) and a resin produced by a method not involving the reaction are preferably used in combination.
The use of the above-mentioned resin can simply provide a curable composition establishing various physical properties requested of an adhesive such as a viscosity, curability, storage stability, and adhesiveness.

The curing catalyst is not particularly limited and an organic metal compound and amines are given, for example. A silanol condensation catalyst is particularly preferably used. Examples of the silanol condensation catalyst include: organic tin compounds such as stannous octoate, dibutyl tin dioctoate, dibutyl tin dilaurate, dibutyl tin maleate, dibutyl tin diacetate, dibutyl tin diacryl acetonate, dibutyl tin oxide, dibutyl tin bistriethoxy silicate, dibutyl tin distearate, dioctyl tin dilaurate, dioctyl tin diversatate, tin octylate, and tin naphthenate; an organic tin compound represented by the following general formula (11); a reaction product of dibutyl tin oxide and a phthalate; titanates such as tetrabutyl titanate and tetrapropyl titanate; organic aluminum compounds such as aluminum tris acetyl acetonato, aluminum tris ethyl acetoacetate, and diisopropoxyaluminum ethyl acetoacetate; chelate compounds such as zirconium tetra acetyl acetonato and titanium tetracetyl acetonato; organic acid salts of lead such as lead octylate and lead naphthenate; bismuth of an organic acid salts of bismuth such as bismuth octylate, bismuth neodacanoate, bismuth rosinate; and other acidic catalysts and basic catalysts which are known as silanol condensation catalysts.

R²⁰R²¹SnO (11)

In the formula (11), R²⁰ and R²¹ are each monovalent hydrocarbon groups. Preferable examples of the hydrocarbon groups represented by R²⁰ and R²¹ include, but are not limited to, hydrocarbon groups each having about 1 to 20 carbon atoms such as a methyl group, an ethyl group, a propyl group, a butyl group, an amyl group, a dodecyl group, a lauryl group, a propenyl group, a phenyl group, and a tolyl group. R²⁰ and R²¹ may be identical to or different from each other. As the organic tin represented by the general formula (11), dialkyl tin oxides such as dimethyl tin oxide, dibutyl tin oxide, and dioctyl tin oxide are particularly preferred.

Although the ratio at which the curing catalyst is blended is not particularly limited, the curing catalyst is used at a ratio of preferably 0.1 to 30 parts by weight, or particularly preferably 0.5 to 20 parts by weight with respect to 100 parts by weight of the vinyl monomer-grafted alkoxysilane-modified oxyalkylene resin in terms of, for example, a crosslinking rate and the physical properties of a cured product. One kind of those curing catalysts may be used alone, or two or more kinds of them may be used in combination.

When the curable composition of the present invention is used in an adhesive, a sealing material, a coating material, or the like, an auxiliary catalyst, a filler, a plasticizer, a solvent, a dehydrating agent, a physical property adjuster, a thixotropic agent, a UV absorber, an antioxidant, a tackfier, an anti-sagging agent, a flame-retardant, a coloring agent, a radical polymerization initiator, another compatible polymer, various additives, and the like may be appropriately added and mixed depending on intended properties.

As the auxiliary catalyst used for the curing reaction, there are given amino group-containing alkoxy silane compounds. Examples of the amino group-containing alkoxy silane compound include N-(ß-aminoethyl)-Y-aminopropyl trimethoxy silane, N-(β-aminoethyl)-γ-aminopropyl triethoxy silane, γ-aminopropyl trimethoxy silane, γ-aminopropyl triethoxy silane, N-(β-aminoethyl)-γ-aminopropylmethyl dimethoxy silane, and γ-aminopropylmethyl dimethoxy silane.
The blending amount of the amino group-containing alkoxy silane is generally 0.1 to 15 parts by weight, preferably 0.5 to 10 parts by weight, or more preferably 1 to 8 parts by weight with respect to 100 parts by weight of vinyl monomer graft alkoxysilane-modified oxyalkylene resin.

The filler is added for the purpose of reinforcing a cured product made of the curable composition. Examples of the filler include calcium carbonate, magnesium carbonate, diatomaceous earth water-containing silicic acid, water-containing silicic acid, silicic anhydride, calcium silicate, silica, titanium dioxide, clay, talc, carbon black, a slate powder, mica, kaolin, and zeolite. Of those, calcium carbonate is preferable, and calcium carbonate treated with an aliphatic acid is more preferable. In addition, a glass bead, a silica bead, an alumina bead, a carbon bead, a styrene bead, a phenol bead, an acrylic bead, porous silica, a Shirasu balloon, a glass balloon, a silica balloon, a saran balloon, an acrylic balloon, or the like can also be used. Of those, the acrylic balloon is more preferable because a reduction in elongation of the composition after the curing of the composition is small. One kind of the above fillers may be used alone, or two or more kinds of them may be used in combination.

The above plasticizer is added for the purposes of: improving the elongation property of the composition after the curing of the composition, and enabling a reduction in modulus of a cured product. Examples of the plasticizer include: phosphates such as tributyl phosphate and tricresyl phosphate; phthalates such as dioctyl phthalate (DOP), dibutyl phthalate, and butyl benzyl phthalate; aliphatic monobasic acid esters such as glycerin monooleate; aliphatic dibasic acid esters such as dibutyl adipate and dioctyl adipate; glycol esters such as polypropylene glycol; aliphatic esters; epoxy plasticizers; polyester based plasticizers; polyethers; polystyrenes; and acrylic based plasticizers. One kind of the plasticizers may be used alone, or two or more kinds of them may be used in combination.

Any solvent may be used as the above solvent as long as the solvent is compatible with the vinyl monomer-grafted alkoxysilane-modified oxyalkylene resin, and has a moisture content of 500 ppm or less. To be specific, toluene or an alcohol can be used.

The physical property adjuster is added for the purpose of improving the tensile property of the curable composition. Examples of the physical property adjuster include silicon compounds each having one silanol group in any one of its molecules, such as triphenylsilanol, trialkylsilanol, dialkylphenylsilanol, and diphenylalkylsilanol. The examples further include various silane coupling agents such as silicon compounds each of which hydrolyzes to produce a compound having one silanol group in any one of its molecules including triphenylmethoxysilane, trialkylmethoxysilane, dialkylphenylmethoxysilane, diphenylalkylmethoxysilane, triphenylethoxysilane, and trialkylethoxysilane. One kind of the physical property adjusters may be used alone, or two or more kinds of them may be used in combination.

Examples of the above dehydrating agent include calcined lime; magnesium oxide; orthosilicate; anhydrous sodium sulfate; zeolite; vinylalkoxysilanes such as tetramethoxysilane, tetraethoxysilane, and vinyltrimethoxysilane; and alkylalkoxysilanes (so-called silane coupling agents) such as methyltrimethoxysilane and methyltriethoxysilane.

Examples of the thixotropic agent include: an inorganic thixotropic agent such as colloidal silica or asbestine; an organic thixotropic agent such as organic bentonite, modified polyester polyol, or an aliphatic amide; a hydrogenated castor oil derivative; an aliphatic amide wax; aluminum stearate; and barium stearate. One kind of the thixotropic agents may be used alone, or two or more kinds of them may be used in combination.

The UV absorber is used to prevent light degradation of the cured sealing material and improve weathering resistance. For example, there are given benzotriazole-based, triazine-based, benzophenone-based, and benzoate-based UV absorbers. Examples of the UV absorber include, but are not limited to, 2,4-di-tert-butyl-6-(5-chlorobenzotriazole-2-yl)phenol, 2-(2H-benzotriazole-2-yl)-4,6-di-tert-pentyl phenol, 2-(2H-benzotriazole-2-yl)-4-(1,1,3,3-tetramethylbutyl)phenol, a reaction product of methyl 3-(3-(2H-benzotriazole-2-yl)-5-tert-butyl-4-hydroxyphenyl)propionate and polyethylene glycol 300, benzotriazole-based UV absorber such as 2-(2H-benzotriazole-2-yl)-6-(linear and side chain dodecyl)-4-methyl phenol, triazine-based UV absorbers such as 2-(4,6-diphenyl-1,3,5-triazine-2-yl)-5-[(hexyl)oxy]-phenol, benzophenone-based UV absorber such as octabenzone, and benzoate-based UV absorbers such as 2,4-di-tert-butylphenyl-3,5-di-tert-butyl-4-hydroxybenzoate. The UV absorbers may be used alone or two or more kinds of them may be used in combination.

The antioxidant is used to prevent oxidation of the cured sealing material ant improve weathering resistance, and there are exemplified hindered amine-based and hindered phenol-based antioxidants. Examples of the hindered amine-based antioxidant include, but are not limited to, N,N',N",N"-tetrakis-(4,6-bis(butyl-(N-methyl-2,2,6,6-tetramethylpiperidine-4-yl)a mino)-triazine-2-yl)-4,7-diazadecane-1,10-diamine, a polycondensate of dibutylamine ·1,3,5-triazine N,N'-bis-(2,2,6,6-tetramethyl-4-piperidyl-1,6-hexamet hylenediamine -N-(2,2,6,6-tetramethyl-4-piperidyl)butylamine, poly[{6-(1,1,3,3-tetramethylbutyl)amino-1,3,5-trizaine-2,4-diyl}{(2,2,6,6-tetrameth yl-4-piperidyl)imino}hexamethylene{(2,2,6,6-tetramethyl-4-piperidyl)imino], a polymer of dimethyl succinate and 4-hydroxy-2,2,6,6-tetramethyl-1-piperidine ethanol, [decanoic diacid bis(2,2,6,6-tetramethyl-1(octyloxy)-4-piperidyl)ester, reaction product (70%) of 1,1,-dimethylethylhydroperoxide and octane]-polypropylene (30%), bis(1,2,2,6,6-pentamethyl-4-piperidyl)[[3,5-bis(1,1-dimethylethyl)-4-hydroxyphen yl]methyl]butylmalonate, methyl 1,2,2,6,6-pentamethyl-4-piperidyl sebacate, bis(2,2,6,6-tetrametliyl-4-piperidyl)sebacate, bis(1,2,2,6,6-pentamethyl-4-piperidyl)sebacate, 1-[2-[3-(3,5-di-tert-butyl-4-hydroxyphenyl)propionyloxy]ethyl]-4-[3-(3,5-di-tert-bu tyl-4-hydroxyphenyl)propionyloxy]-2,2,6,6-tetramethyl piperizine, 4-benzoyloxy-2,2,6,6-tetramethyl piperidine, and 8-acetyl-3-dodecyl-7,7,9,9-tetramethyl-1,3,8-triazaspiro[4.5]decane-2,4-dione. Examples of the hindered phenol-based antioxidant include pentaertythritol-tetrakis[3-(3,5-di-tert-butyl-4-hydroxyphenyl)propionate], thiodiethylene-bis[3-(3,5-di-tert-butyl-4-hydroxyphenyl)propionate], octadecyl-3-(3,5-di-tert-butyl-4-hydroxyphenyl)propionate), N,N'-hexane-1,6-diylbis[3-(3,5-di-tert-butyl-4-hydroxyphenylpropioamide), benzene propanoic acid 3,5-bis(1,1-dimethylethyl)-4-hydroxy C7-C9 side chain alkyl ester, 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexane-tert-butyl-4-a,a',a"-(methylene-2,4,6-tolyl)tri-p-cresol, calcium diethylbis[[[3,5-bis-(1,1-dimethylethyl)-4-hydroxyphenyl]methyl]phosphonate], 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionatel, 1,3,5-tris(3,5-di-tert-butyl-4-hydroxybenzyl)-1,3,5-triazine-2,4,6-(1H,3H,5H)-trion e, a reaction product of N-phenylbenzene amine and 2,4,4-trimethylpentene, and 2,6-di-tert-butyl-4-(4,6-bis(octylthio)-1,3,5-triazine-2-ylamino)phenol. The antioxidant may be used alone or two or more kinds of them may be used in combination.

Examples of various additives include pigments, various tackfiers, titanate coupling agents, and aluminum coupling agents.

### Examples

Hereinafter, the present invention will be described by way of examples. However, the present invention is by no means limited by these examples.

Analysis and measurement in examples and comparative examples were performed in accordance with the following methods.
1. Hydroxyl value:
   Measurement was performed in accordance with the section 6.4 "Hydroxyl value" of JIS K1557 "Method of testing polyether for polyurethane".
2. Viscosity:
   Measurement was performed in accordance with the section 6.3 "Viscosity" of JIS K1557.
3. Isocyanate group content (hereinafter referred to as "NCO%") of prepolymer
   Measurement was performed in accordance with the section 6.3 "Isocyanate group content" of JIS K-7301.

### 4. (Meth) acrylic polymer content:

The (meth) acrylic polymer content of a resin after a reaction was defined as the amount of a polymer derived from a vinyl monomer when the resin and the vinyl monomer were caused to react with each other. The amount of an unreacted vinyl monomer was analyzed under the following conditions by gas chromatography, and the content was calculated from the loading of the vinyl monomer (loading of a (meth)acrylic monomer).
Gas chromatography:A GC-14A manufactured by Shimadzu Corporation
Carrier gas:Helium, 30 ml/min
Column: A G-300 manufactured by Chemicals Inspection Association having an inner diameter of 1.2 mm, a length of 40 m, and a thickness of 1.0 µm
Column temperature conditions: The temperature of the column was held at 90°C for 6 minutes, then increased at 20°C/min, and held at 200°C for 8 minutes.

### 5. Degree of (meth)acrylic conversion of resin:

The degree of (meth)acrylic conversion was calculated from the following equation (1).

Degree of (meth)acrylic conversion = ((methacrylic polymer content/loading of (meth)acrylic monomer)×100 ··· (1)

### 6. Number average molecular weight and peak top molecular weight:

Measurement was performed by gel permeation chromatography (GPC) under the following conditions. In the present invention, a molecular weight of the highest frequency measured under the measurement conditions by GPC and converted in terms of standard polyethylene glycol is referred to as "peak top molecular weight".

### THF solvent measuring apparatus

Analyzers:An Alliance (Waters Corporation), a 2410 model differential refractometer (Waters Corporation), a 996 model multi-wavelength detector (Waters Corporation), and a Milleniam data processor (Waters Corporation)
Column: A Plgel GUARD + 5 µm Mixed-C×three pieces (50×7.5 mm, 300×7.5 mm: PolymerLab)
Flow rate: 1 ml/min
Converted polymer: Polyethylene glycol
Measurement temperature: 40°C

### 7. External appearance compatibility):

Each resin or curable composition was loaded into a bottle, and its turbidity was visually observed at room temperature (20 to 25°C). The evaluation criteria are as described below.
○: Transparent
×: Clouding or two-phase separation

### 8. Adhesiveness:

0.2 g of a curable composition was uniformly applied onto an adherend, and the resultant was immediately stuck to an area measuring 25 mm by 25 mm. After the sticking, the resultant was clamped with a small eye clip under an atmosphere having a temperature of 23°C and a relative humidity of 50% for a predetermined time period. Immediately after that, the adhesiveness of the curable composition was measured in conformity with a method of testing a rigid adherend for its tensile shear strength in JIS K 6850. Hard vinyl chloride, polycarbonate, polystyrene, ABS, acryl, 6 nylon, a mild steel sheet, or AI was used as the adherend.

### 9. Rubber physical properties:

Measurement conforms to a method for a tensile test for vulcanized rubber in JIS K 6521. A No. 3 dumbbell is used.

### 10. Depth curability:

A container having a diameter of 4 cm or more and a height of 2 cm or more and allowing moisture to permeate through itself from only one direction is filled with a curable composition with its temperature adjusted to 23°C, and the surface of the resultant is leveled so as to be smooth. The thickness of a product obtained by curing the curable composition under an environment having a temperature of 23°C and a humidity of 50% RH for 24 hours is measured with a dial gauge.

### 11. Storage stability:

Each curable composition was left to stand under an environment having a temperature of 23°C and a humidity of 50% RH for 24 hours. After that, the viscosity of the curable composition was measured with a B-type viscometer (BS Rotor No. 7 manufactured by TOKI SANGYO CO., LTD., 10 rpm), and the result was referred to as "initial". After that, the curable composition was left to stand in a dryer at 50°C for 1 week. After that, the curable composition was left to stand under an environment having a temperature of 23°C and a humidity of 50% RH for 24 hours, and its viscosity was similarly measured with its liquid temperature adjusted to 23°C. The result was referred to as "after storage". The curable composition was judged to be excellent in storage stability when a value for a ratio of "after storage" to "initial" was less than 1.3, while the curable composition was judged to be poor in storage stability when the value was 1.3 or more.

### 12. Tack-free time (TFT):

A tack-free time is measured by JIS A 1439 4.19.

### 13. Rise in adhesiveness:

0.2 g of a curable composition was uniformly applied onto lauan plywood (having a thickness of 5 mm, a width of 25 mm, and a length of 100 mm), and the resultant was immediately stuck to an area measuring 25 mm by 25 mm. After the sticking, the resultant was clamped with a small eye clip under an atmosphere having a temperature of 23°C and a relative humidity of 50% for a predetermined time period shown in each table. Immediately after that, the rise in adhesiveness of the curable composition was measured in conformity with a method of testing a rigid adherend for its tensile shear strength in JIS K 6850.

### 14. Hardness

Measurement was performed with a rubber hardness meter (JIS A type).

### (Example 1).

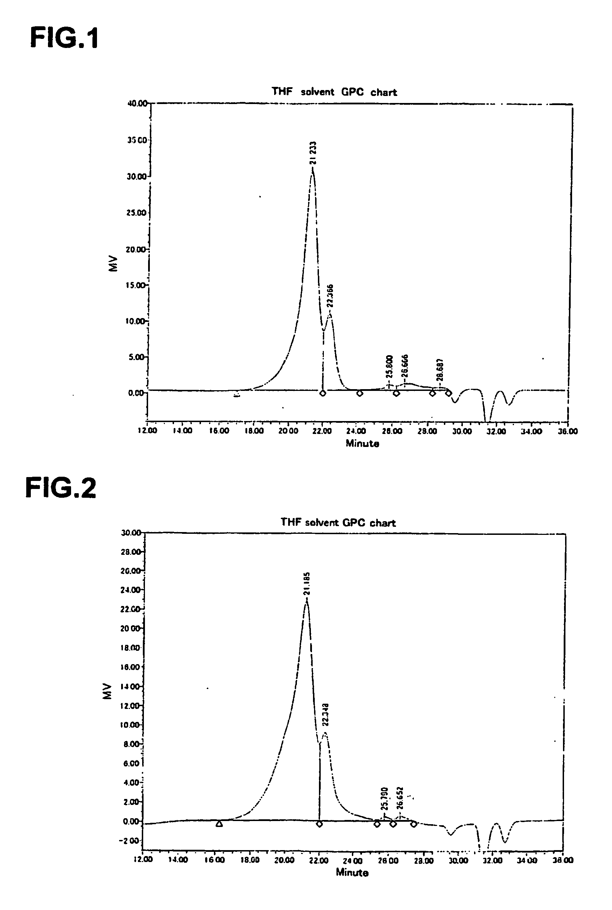

Propylene oxide was subjected to a reaction by using glycerin as an initiator in the presence of a zinc hexacyanocobaltate-glyme complex catalyst, whereby polyoxypropylene triol having a molecular weight in terms of a hydroxyl value of 9,000 and an Mw/Mn of 1.3 was obtained.
A solution of sodium methoxide in methanol was added to polyoxypropylene triol thus obtained, and methanol was removed by distillation under heat and reduced pressure, whereby a terminal hydroxyl group of polyoxypropylene triol was transformed into sodium alkoxide. Next, allyl chloride was caused to react with the resultant, and the reaction product was purified by removing unreacted allyl chloride, whereby polypropylene oxide having an allyl group at a terminal was obtained.
3-mercaptopropyltrimethoxysilane as a silyl compound was caused to react with polypropylene oxide having an allyl group at a terminal thus obtained by using 2,2'-azobis-2-methylbutyronitrile as a polymerization initiator, whereby polypropylene oxide having a trimethoxysilyl group at a terminal (alkoxysilane-modified oxyalkylene resin (A-1)) was obtained (modification step). The molecular weight of the resultant alkoxysilane-modified oxyalkylene resin (A-1) was measured by GPC. As a result, a peak top molecular weight was 10,000. Fig. 1 shows the results of the GPC chart. It should be noted that, in each of Figs. 1 to 9, the axis of ordinate indicates an intensity (value obtained by replacing a difference between the refractive index of a blank solvent (THF) and a refractive index when a sample is dissolved in the solvent with an electrical signal) in an MV (mV: millivolt) unit.

80 parts by weight of the resultant alkoxysilane-modified oxyalkylene resin (A-1) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 18.2 parts by weight of n-butyl methacrylate (BMA) and 1.8 parts by weight of γ-methacryloxypropyltrimethoxysilane (trade name: KBM503, manufactured by Shin-Etsu Chemical Co., Ltd.) as vinyl monomers, and 0.95 part by weight of a Perhexa C (trade name, manufactured by Nihon Yushi Corporation, a product obtained by diluting 1,1-di(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours (graft reaction step). After that, the resultant was subjected to a decompression treatment at 120°C and 1.3 kPa or less for 2 hours so that unreacted monomers might be removed. As a result, a vinyl monomer-grafted alkoxysilane-modified oxyalkylene resin was obtained. Table 1 shows the blended substances used in the graft reaction and the loadings of the substances.

The molecular weight of the resultant vinyl monomer-grafted alkoxysilane-modified oxyalkylene resin was measured by GPC. As a result, a peak top molecular weight was 10,000. Fig. 2 shows the results of the GPC chart. As is apparent from comparison between Figs. 1 and 2, in the vinyl monomer-grafted alkoxysilane-modified oxyalkylene resin obtained after the graft reaction, a shoulder arose at molecular weights higher than a peak including a molecular weight of the highest frequency derived from the alkoxysilane-modified oxyalkylene resin (A-1) as a raw material, and no molecular weight peak of a (meth)acrytic copolymer arose at molecular weights lower than the peak including the molecular weight of the highest frequency derived from the raw material.

In addition, the resultant vinyl monomer-grafted alkoxysilane-modified oxyalkylene resin had a viscosity of 25,000 mPa ·s/25°C, a (meth)acrylic polymer content of 17.9%, a degree of (meth)acrylic conversion of 89.5%, and a colorless, transparent external appearance. Accordingly, it was confirmed that the resultant resin was a resin obtained by grafting a vinyl monomer because the resin satisfied the above-mentioned conditions for a viscosity, GPC, and an external appearance. Table 2 shows the results.

### (Example 2)

A vinyl monomer-grafted alkoxysilane-modified oxyalkylene resin was obtained in the same manner as in Example 1 except that conditions for a graft reaction between the alkoxysilane-modified oxyalkylene resin (A-1) and a vinyl monomer were changed as shown in Table 1.

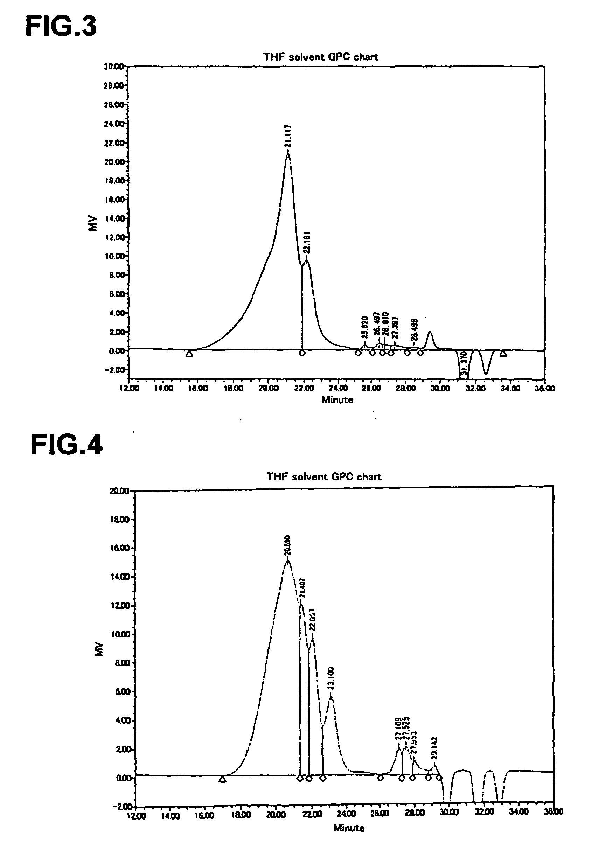

The molecular weight of the resultant vinyl monomer-grafted alkoxysilane-modified oxyalkylene resin was measured by GPC. As a result, a peak top molecular weight was 10,000. Fig. 3 shows the results of the GPC chart. As is apparent from comparison between Figs. 1 and 3, in the vinyl monomer-grafted alkoxysilane-modified oxyalkylene resin obtained after the graft reaction, a shoulder arose at molecular weights higher than a peak including a molecular weight of the highest frequency derived from the alkoxysilane-modified oxyalkylene resin (A-1) as a raw material, and no molecular weight peak of a (meth)acrylic copolymer arose at molecular weights lower than the peak including the molecular weight of the highest frequency derived from the raw material.

In addition, the resultant vinyl monomer-grafted alkoxysilane-modified oxyalkylene resin had a viscosity of 25,000 mPa·s/25°C, a (meth)acrylic polymer content of 17.6%, a degree of (meth)acrylic conversion of 88%, and a colorless, transparent external appearance. Accordingly, it was confirmed that the resultant resin was a resin obtained by grafting a vinyl monomer because the resin satisfied the above-mentioned conditions for a viscosity, GPC, and an external appearance. Table 2 shows the results.

### (Example 3)

A solution of sodium methoxide in methanol was added to polyoxypropylene diol having a molecular weight in terms of a hydroxyl value of 3,000 obtained by using a potassium hydroxide catalyst, and methanol was removed by distillation under heat and reduced pressure, whereby a terminal hydroxyl group of polyoxypropylene diol was transformed into sodium alkoxide.
Next, the resultant was caused to react with chlorobromomethane so that the molecular weight of the resultant might be increased. Subsequently, the reaction product was caused to react with allyl chloride and purified, whereby polypropylene oxide having an allyloxy group at a terminal (Mw/Mn = 2.0) was obtained.
Methyldimethoxysilane as a silicon hydride compound was caused to react with polypropylene oxide having an allyloxy group at a terminal thus obtained in the presence of a platinum catalyst, whereby polypropylene oxide having a methyl dimethoxysilyl group at a terminal (alkoxysilane-modified oxyalkylene resin (A-2)) was obtained (modification step). The molecular weight of the resultant alkoxysilane-modified oxyalkylene resin (A-2) was measured by GPC. As a result, a peak top molecular weight was 15,000. Fig. 4 shows the results of the GPC chart.

93.6 parts by weight of the resultant alkoxysilane-modified oxyalkylene resin (A-2) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 6.4 parts by weight of γ-methacryloxypropyltrimethoxysilane as a vinyl monomer and 1.12 parts by weight of a Perhexa C as a radical reaction initiator was dropped to the above flask over 4 hours at a uniform speed, and the mixture was subjected to a reaction for additional 4 hours (graft reaction step). After that, the resultant was subjected to a decompression treatment at 120°C and 1.3 kPa or less for 2 hours so that unreacted monomers might be removed. As a result, a vinyl monomer-grafted alkoxysilane-modified oxyalkylene resin was obtained. Table 1 shows the blended substances used in the graft reaction and the loadings of the substances.

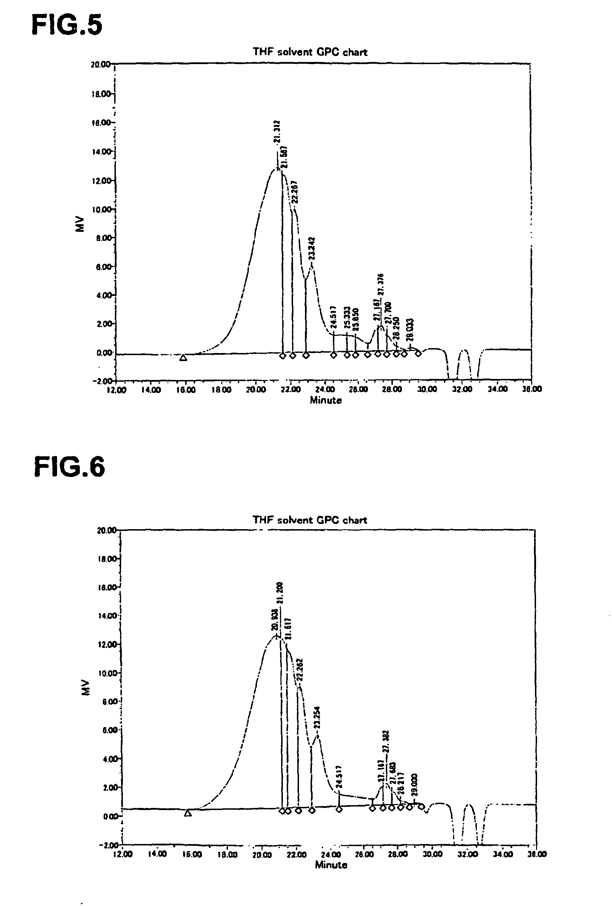

The molecular weight of the resultant vinyl monomer-grafted alkoxysilane-modified oxyalkylene resin was measured by GPC. As a result, a peak top molecular weight was 15,000. Fig. 5 shows the results of the GPC chart. As is apparent from comparison between Figs. 4 and 5, in the vinyl monomer-grafted alkoxysilane-modified oxyalkylene resin obtained after the graft reaction, a shoulder arose at molecular weights higher than a peak including a molecular weight of the highest frequency derived from the alkoxysilane-modified oxyalkylene resin (A-2) as a raw material, and no molecular weight peak of a (meth)acrylic copolymer arose at molecular weights lower-than the peak including the molecular weight of the highest frequency derived from the raw material.

In addition, the resultant vinyl monomer-grafted alkoxysilane-modified oxyalkylene resin had a viscosity of 16,800 mPa·s/25°C, a (meth)acrylic polymer content of 5.6%, a degree of (meth)acrylic conversion of 87.5%, and a colorless, transparent external appearance. Accordingly, it was confirmed that the resultant resin was a resin obtained by grafting a vinyl monomer because the resin satisfied the above-mentioned conditions for a viscosity, GPC, and an external appearance. Table 2 shows the results.

### (Example 4)

An alkoxysilane-modified oxyalkylene resin (A-2) was obtained in the same manner as in Example 3. 80 parts by weight of the resultant alkoxysilane-modified oxyalkylene resin (A-2) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 14.5 parts by weight of n-butyl methacrylate and 5.5 parts by weight of Y-methacryloxypropyltrimethoxysilane as vinyl monomers, and 0.95 part by weight of a Perhexa C as a radical reaction initiator was dropped to the above flask over 4 hours at a uniform speed, and the mixture was subjected to a reaction for additional 4 hours (graft reaction step). After that, the resultant was subjected to a decompression treatment at 120°C and 1.3 kPa or less for 2 hours so that unreacted monomers might be removed. As a result, a vinyl monomer-grafted alkoxysilane-modified oxyalkylene resin was obtained. Table 1 shows the blended substances used in the graft reaction and the loadings of the substances.

The molecular weight of the resultant vinyl monomer-grafted alkoxysilane-modified oxyalkylene resin was measured by GPC. As a result, a peak top molecular weight was 15,000. Fig. 6 shows the results of the GPC chart. As is apparent from comparison between Figs. 4 and 6, in the vinyl monomer-grafted alkoxysilane-modified oxyalkylene resin obtained after the graft reaction, a shoulder arose at molecular weights higher than a peak including a molecular weight of the highest frequency derived from the alkoxysilane-modified oxyalkylene resin (A-2) as a raw material, and no molecular weight peak of a (meth)acrylic copolymer arose at molecular weights lower than the peak including the molecular weight of the highest frequency derived from the raw material.

In addition, the resultant vinyl monomer-grafted alkoxysilane-modified oxyalkylene resin had a viscosity of 48,000 mPa·s/25°C, a (meth)acrylic polymer content of 16.7%, a degree of (meth)acrylic conversion of 83.5%, and a colorless, transparent external appearance. Accordingly, it was confirmed that the resultant resin was a resin obtained by grafting a vinyl monomer because the resin satisfied the above-mentioned conditions for a viscosity, GPC, and an external appearance. Table 2 shows the results.

**[Table 1]**

| | | Example 1 (wt/mol) | Example 2 (wt/mol) | Example 3 (wt/mol) | Example 4 (wt/mol) |
|---|---|---|---|---|---|
| Alkoxysilane- modified oxyalkylene resin | Resin A-1 | 80/1 | 80/1 | - | - |
| | Resin A-2 | - | - | 93.6/1 | 80/1 |
| Vinyl monomer | BMA | 18.2/24 | 14.5/19.14 | - | 14.5/19.14 |
| | KBM503 | 1.8/1.38 | 5.5/4.14 | 6.4/4.14 | 5.5/4.14 |
| Alkyl peroxide | Perhexa C | 0.95/0.46 | 0.95/0.46 | 1.12/0.69 | 0.95/0.68 |
| (Meth)acrylic monomer/alkyl peroxide (molar ratio) | | 55.65 | 51.50 | 6.01 | 34.03 |

| | | | | | |
|---|---|---|---|---|---|
| In Table 1, the loading of each blended substance was represented in "part(s) by weight/molar ratio". | | | | | |

**[Table 2]**

| | Example 1 | Example 2 | Example 3 | Example 4 |
|---|---|---|---|---|
| Loading of (meth)acrylic monomer (wt%) | 20 | 20 | 6.4 | 20 |
| (methacrylic polymer content (wt%) | 17.9 | 17.6 | 5.6 | 16.7 |
| Degree of (meth)acrylic conversion (%) | 89.5 | 88 | 87.5 | 83.5 |
| Viscosity (mPa · s/25°C) | 25,000 | 25,000 | 16,800 | 48,000 |
| Peak top molecular weight | 10,000 | 10,000 | 15,000 | 15,000 |
| External appearance | ○ | ○ | ○ | ○ |
| Grafting | ○ | ○ | ○ | ○ |

### (Examples 5 to 9 and Comparative Example 10

In each of the examples, a vinyl monomer-grafted alkoxysilane-modified oxyalkylene resin was obtained in the same manner as in Example 1 except that conditions for a graft reaction between the alkoxysilane-modified oxyalkylene resin (A-1) and a vinyl monomer were changed as shown in Table 3.
It should be noted that, in Table 3, the term "BMA" represents n-butyl methacrylate, the term "EHMA" represents 2-ethylhexyl methacrylate, the term "iBMA" represents isobutyl methacrylate, the term "tBMA" represents t-butyl methacrylate, the term "CHMA" represents cyclohexyl methacrylate, the term "KBM503" represents Y-methacryloxypropyltrimethoxysilane (trade name, manufactured by Shin-Etsu Chemical Co., Ltd.), the term "Perhexa C" represents a product obtained by diluting 1,1-di(t-butylperoxy)cyclohexane with a hydrocarbon so that the product may have a purity of 70% (trade name, manufactured by Nihon Yushi Corporation), and the term "Perbutyl D" represents di-t-butyl peroxide (trade name, manufactured by Nihon Yushi Corporation, purity 98% or more).

Various properties of the resultant vinyl monomer-grafted alkoxysilane-modified oxyalkylene resins were measured. Table 4 shows the results.

### (Example 11)

Dipropylene glycol and 8.5 mol% of cesium hydroxide with respect to the hydroxyl groups of dipropylene glycol were loaded into an autoclave, and the pressure in the autoclave was reduced. Propylene oxide was sequentially loaded into the autoclave while the pressure inside the autoclave was prevented from exceeding 0.4 MPaG. The temperature of the mixture was increased to 95°C, and dipropylene glycol was subjected to addition polymerization with propylene oxide. The resultant crude polyol was neutralized with phosphoric acid and filtrated, whereby a polyoxyalkylene polyol (A-3) was obtained. The polyol had a hydroxyl value of 20.4 mgKOH/g and a viscosity of 1,500 mPa ·s/25°C.

949.0 parts by weight of the resultant polyoxyalkylene polyol (A-3) were loaded into a 2-L flask mounted with a stirring device, a temperature gauge, a nitrogen-introducing port, a monomer-loading tube, and a water-cooled condenser, and were heated to 65°C in an oil bath. Next, 51.0 parts by weight of 1,3-bis(isocyanatemethyl)cyclohexane were dropped to the flask over 10 minutes, and the contents in the flask were mixed for 20 minutes. After that, 0.018 part by weight of stannous octylate was dropped to the mixture. The temperature of the resultant mixture was increased from 65°C to 90°C within 30 minutes. 0.018 part by weight of stannous octylate was dropped to the mixture at each of 3, 4, and 5 hours after the temperature had reached 90°C. It was confirmed that, 7 hours after the temperature had reached 90°C, the NCO% was 0.70, and the time point was regarded as the time point at which a urethane prepolymer formation reaction was completed. Thus, a urethane prepolymer was obtained.

959.1 parts by weight of the resultant urethane prepolymer were loaded into a 2-L flask mounted with a stirring device, a temperature gauge, a nitrogen-introducing port, a monomer-loading tube, and a water-cooled condenser, and were heated to 65°C in an oil bath. Next, 40.9 parts by weight of a KBM573 (trade name, manufactured by Shin-Etsu Chemical Co., Ltd., N-phenyl-3-aminopropyltrimethoxysilane) were dropped to the flask over 10 minutes, and the contents in the flask were mixed for 20 minutes. After that, the temperature of the mixture was increased from 65°C to 75°C. It was confirmed that, 4 hours after the temperature had reached 75°C, the NCO% was 0.1 or less, and the time point was regarded as the time point at which an alkoxysilane modification reaction was completed. Thus, an alkoxysilane-modified oxyalkylene resin (A-4) was obtained (modification step).
The resultant alkoxysilane-modified oxyalkylene resin (A-4) had a viscosity of 50,000 mPa · s/25°C. In addition, the molecular weight of the resin was measured by GPC. As a result, a peak top molecular weight was 14,000.

80.2 parts by weight of the resultant alkoxysilane-modified oxyalkylene resin (A-4) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 19.8 parts by weight of n-butyl methacrylate as a vinyl monomer and 0.95 part by weight of a Perhexa C as a radical reaction initiator was dropped to the above flask over 4 hours at a uniform speed, and the mixture was subjected to a reaction for additional 4 hours (graft reaction step). After that, the resultant was subjected to a decompression treatment at 120°C and 1.3 kPa or less for 2 hours so that an unreacted monomer might be removed. As a result, a vinyl monomer-grafted alkoxysilane-modified oxyalkylene resin was obtained. Table 3 shows the blended substances used in the graft reaction and the loadings of the substances.

Various properties of the resultant vinyl monomer-grafted alkoxysilane-modified oxyalkylene resins were measured. Table 4 shows the results.

**[Table 3]**

| | | Example 5 (wt/mol) | Example 6 (wt/mol) | Example 7 (wt/mol) | Example 8 (wt/mol) | Example 9 (wt/mol) | Comparative Example 10 (wt/mol) | Example 11 (wt/mol) |
|---|---|---|---|---|---|---|---|---|
| Alkoxysilane-modified oxyalkylene resin | Resin A-1 | 90/1 | 80/1 | 80/1 | 80/1 | 80/1 | 80/1 | - |
| | Resin A-4 | - | - | - | - | - | - | 80.2/1 |
| Vinyl monomer | BMA | 4.2/4.9 | 8.4/11 | - | - | - | 14.5/19.14 | 19.8/19.13 |
| | EHMA | 5.8/4.9 | 11.6/11 | - | - | - | - | - |
| | iBMA | - | - | 18.2/24.0 | - | - | - | - |
| | tBMA | - | - | - | 18.2/24 | - | - | - |
| | CHMA | - | - | - | - | 18.2/24 | - | - |
| | KBM503 | - | - | 1.8/1.38 | 1.8/1.38 | 1.8/1.38 | 5.5/4.14 | - |
| Alkyl peroxide | Perhexa C | 1.93/0.82 | 0.96/0.46 | 0.95/0.46 | 0.95/0.46 | 0.95/0.46 | - | 0.95/0.64 |
| | Perbutyl D | - | - | - | - | - | 0.54/0.46 | - |
| (Meth)acrylic monomer/alkyl peroxide (molar ratio) | | 11.90 | 47.74 | 55.65 | 55.65 | 55.65 | 50.72 | 30.04 |

| | | | | | | | | |
|---|---|---|---|---|---|---|---|---|
| In Table 3, the loading of each blended substance was represented in "part(s) by weight/molar ratio". | | | | | | | | |

**[Table 4]**

| | Example 5 | Example 6 | Example 7 | Example 8 | Example 9 | Comparative Example 10 | Example 11 |
|---|---|---|---|---|---|---|---|
| Loading of (meth)acrylic monomer (wt%) | 10 | 20 | 20 | 20 | 20 | 20 | 20 |
| (Meth)acrylic polymer content (wt%) | 9.5 | 18.5 | 17.8 | 18.0 | 17.8 | 13.4 | 16.7 |
| Degree of (meth) acrylic conversion (%) | 95 | 92.5 | 89 | 90 | 89 | 67 | 83.6 |
| Viscosity (mPa · s/25°C) | 16,000 | 23,000 | 50,500 | 62,000 | 48,500 | 10,300 | 265,000 |
| Peak top molecular weight | 10,000 | 10,000 | 10,000 | 10,000 | 10,000 | 10,000 | 14,000 |
| External appearance | ○ | ○ | ○ | ○ | ○ | ○ | ○ |
| Grafting | ○ | ○ | ○ | ○ | ○ | ○ | ○ |

### (Comparative Example 1)

An alkoxysilane-modified oxyalkylene resin (A-2) was obtained in the same manner as in Example 3. The resultant resin (A-2) was subjected to a reaction in the same manner as in Example 3 except that the vinyl monomer and the radical reaction initiator were changed as shown in Table 5.
It should be noted that, in Table 5, the term "BMA" represents n-butyl methacrylate, the term "MMA" represents methyl methacrylate, the term "BA" represents butyl acrylate, the term "SMA" represents stearyl methacrylate, the term "KBM502" represents γ-methacryloxypropylmethyldimethoxysilane (trade name, manufactured by Shin-Etsu Chemical Co., Ltd.), the term "KBM503" represents γ-methacryloxypropyltrimethoxysilane (trade name, manufactured by Shin-Etsu Chemical Co., Ltd.), the term "AIBN" represents 2,2'-azobisisobutyronitrile, and the term "BPO" represents benzoyl peroxide.

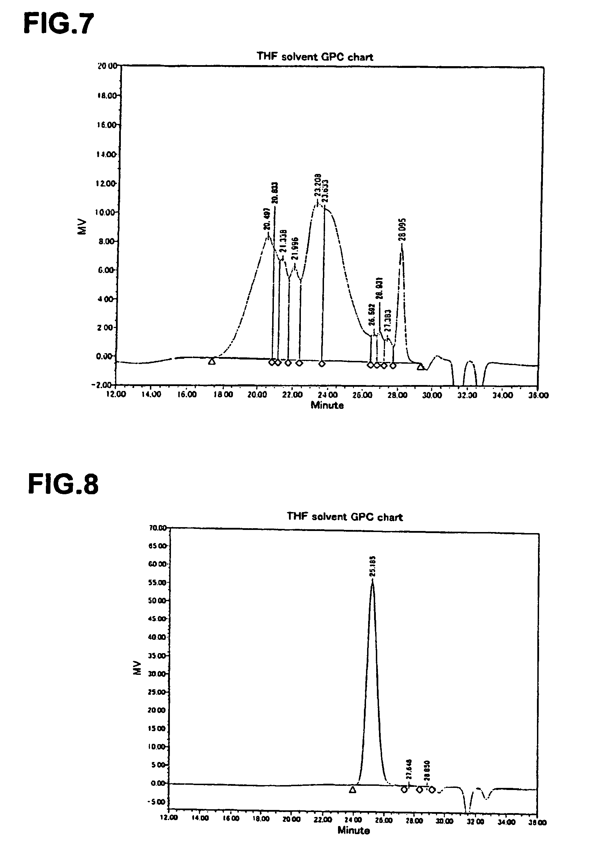

Various properties of the resultant resin were measured. Fig. 7 shows the results of the GPC chart. As is apparent from comparison between Figs. 4 and 7, a new molecular weight distribution not present in Fig. 4 appeared in Fig. 7 at lower molecular weights of the alkoxysilane-modified oxyalkylene resin (A-2). In other words, it was confirmed that the vinyl monomers were not grafted to but blended with the alkoxysilane-modified oxyalkylene resin (A-2).

In addition, the resultant resin had a viscosity of 100,000 mPa · s/25°C, a (meth)acrylic polymer content of 40%, and a colorless, transparent external appearance. Accordingly, it was confirmed that the resultant resin was a resin in which vinyl monomers were not grafted because the resin did not satisfy the above-mentioned conditions for a viscosity, GPC, and an external appearance. Table 6 shows the results.

### (Comparative Examples 2 to 4)

In each of the comparative examples, an experiment was performed in the same manner as in Comparative Example 1 except that reaction conditions were changed as shown in Table 5. Table 6 shows the results.

**[Table 5]**

| | | Comparative Example 1 (wt/mol) | Comparative Example 2 (wt/mol) | Comparative Example 3 (wt/mol) | Comparative Example 4 (wt/mol) |
|---|---|---|---|---|---|
| Alkoxysilane-moditied oxyalkylene resin | Resin A-2 | 60/1 | 60/1 | 60/1 | 80/1 |
| Vinyl monomer | BMA | - | 40/70.5 | - | 14.5/19.14 |
| | MMA | 26.5/66.3 | - | 26.5/66.3 | - |
| | BA | 2.5/4.88 | - | 2.5/4.88 | - |
| | SMA | 6.0/4.45 | - | 6.0/4.45 | - |
| | KBM503 | - | - | 5.0/5.05 | 5.5/4.14 |
| | KBM502 | 5.0/5.4 | 5.0/5.4 | - | - |
| Radical reaction initiator | AIBN | 0.7/1.05 | 0.7/1.05 | 0.7/1.05 | - |
| | BPO | - | - | - | 0.89/0.689 |
| (Meth)acrylic monomer/radical reaction initiator (molar ratio) | | 77.12 | 67.65 | 76.79 | 33.79 |

| | | | | | |
|---|---|---|---|---|---|
| In Table 5, the loading of each blended substance was represented in "part(s) by weight/molar ratio". | | | | | |

**[Table 6]**

| | Comparative Example 1 | Comparative Example 2 | Comparative Example 3 | Comparative Example 4 |
|---|---|---|---|---|
| Loading of (meth)acrylic monomer (wt%) | 40 | 40 | 40 | 20 |
| (Meth)acrylic polymer content (wt%) | 40 | 40 | 40 | 14.5 |
| Degree of (meth)acrylic conversion (%) | - | - | - | 72.5 |
| Viscosity (mPa · s/25°C) | 100,000 | 100,000 | 100,000 | 605,000→gelation |
| Peak top molecular weight | 3,000 | - | 3,000 | - |
| External appearance | ○ | × | ○ | × |
| Grafting | None | None | None | None |

| | | | | |
|---|---|---|---|---|
| Comparative Example 2: Unable to measure owing to incompatibility Comparative Example 4: Unable to measure owing to gelling | | | | |

### (Example 12)

1 part by weight of an Ethyl Silicate 28 (manufactured by COLCOAT CO., Ltd.) as a moisture absorbent, 3 parts by weight of N-β(aminoethyl)-γ-aminopropyltrimethoxysilane (manufactured by Shin-Etsu Chemical Co., Ltd.) as an adhesiveness imparting agent, and 1 part by weight of dioctyltin versatate (manufactured by NITTO KASEI CO., LTD.) as a curing catalyst were each loaded in a predetermined amount with respect to 100 parts by weight of the vinyl monomer-grafted alkoxysilane-modified oxyalkylene resin obtained in Example 5, whereby a curable composition was prepared. Then, the properties of the curable composition were measured. Table 7 shows the results.

### (Examples 13 to 22)

In each of the examples, a curable composition was prepared in the same manner as in Example 12 except that the vinyl monomer-grafted alkoxysilane-modified oxyalkylene resins each obtained in Examples 1 to 4, 6 to 9 and 11 and Comparative Example 10 were used instead of the vinyl monomer-grafted alkoxysilane-modified oxyalkylene resin obtained in Example 5 as shown in Table 7. Then, the properties of each of the curable compositions were measured. Table 7 shows the results.

### (Comparative Examples 5 to 8)

In each of the comparative examples, a curable composition was prepared in the same manner as in Example 12 except that a resin obtained in any one of Comparative Examples 1 to 4 was used instead of the vinyl monomer-grafted alkoxysilane-modified oxyalkylene resin obtained in Example 1 as shown in Table 7. Then, the properties of each of the curable compositions were measured. Table 7 shows the results. It should be noted that the curable composition of Comparative Example 5 could not be subjected to any test other than a test for external appearance owing to its opacity (incompatibility). In addition, the curable composition of Comparative Example 7 was not subjected to any test other than a test for external appearance and a test for storage stability because the curable composition became opaque (incompatible) when cured. The curable composition of Comparative Example 8 was not subjected to any test other than a test for external appearance and a test for storage stability owing to its bad storage stability.

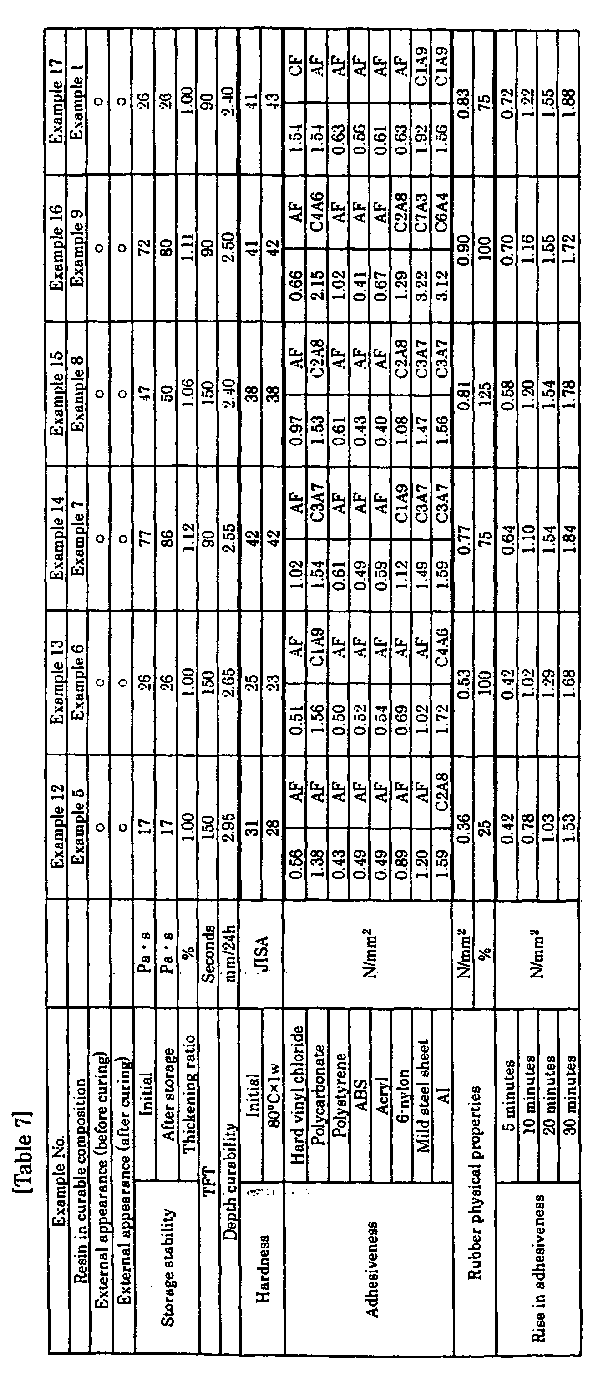

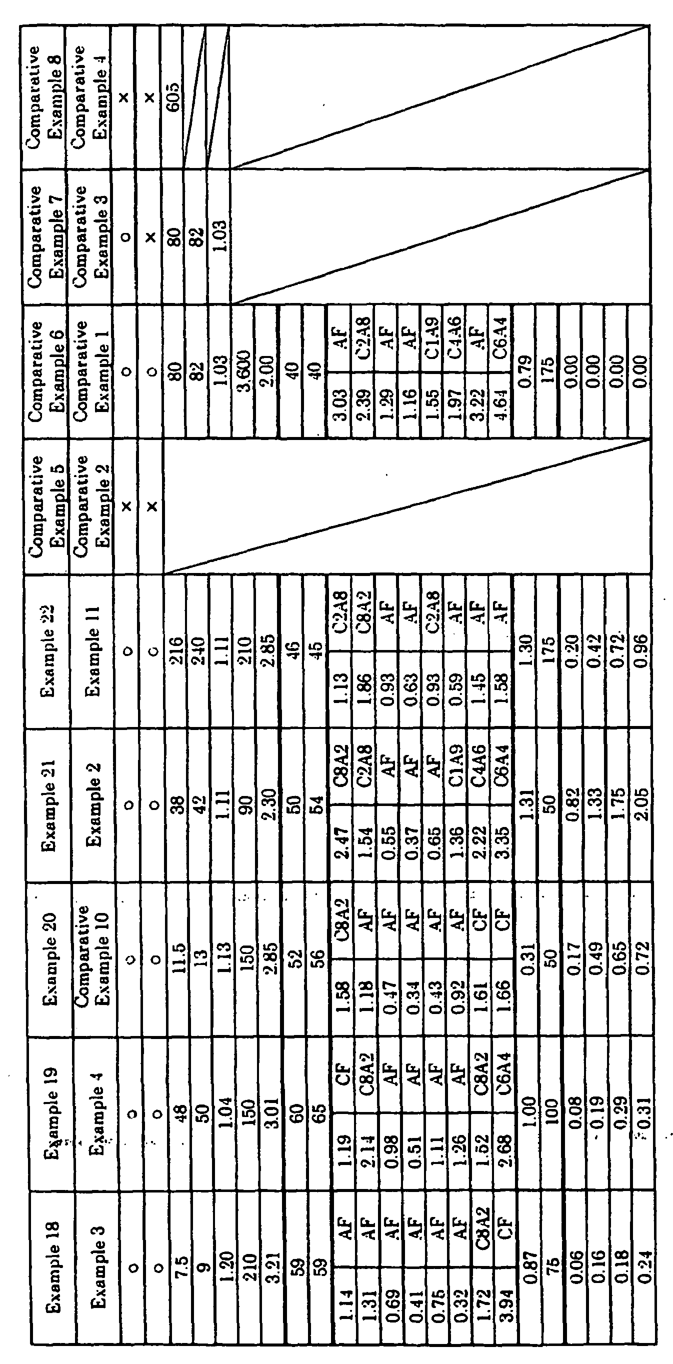

### (Example 23)

Dipropylene glycol and 8.5 mol% of sodium hydroxide with respect to the hydroxyl groups of dipropylene glycol were loaded into an autoclave, and the pressure in the autoclave was reduced. Propylene oxide was sequentially loaded into the autoclave while the pressure inside the autoclave was prevented from exceeding 0.4 MPaG. The temperature of the mixture was increased to 95°C, and dipropylene glycol was subjected to addition polymerization with propylene oxide. The resultant crude polyol was neutralized with phosphoric acid and filtrated, whereby a polyoxyalkylene polyol (B-1) was obtained.
The polyoxyalkylene polyol (B-1) (which may hereinafter be also referred to as "PPG") had a hydroxyl value of 112 mgKOH/g and a viscosity of 150 mPa · s/25°C. Fig. 8 shows the GPC chart of the resultant polyoxyalkylene polyol (B-1). The GPC chart of Fig. 8 confirmed that the polyol had a peak top molecular weight of 1,000, and was monodisperse.

701.4 parts by weight of the resultant polyoxyalkylene polyol (B-1) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 124.7 parts by weight of n-butyl methacrylate (BMA and 173.9 parts by weight of 2-ethylhexyl methacrylate (EHMA), and 20.9 part by weight of a Perhexa C (trade name, manufactured by Nihon Yushi Corporation, a product obtained by diluting 1,1-bis(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours. After that, the resultant was subjected to a decompression treatment at 120°C and 1.3 kPa or less for 4 hours so that unreacted monomers might be removed. As a result, a grafted polyoxyalkylene polyol (B-2) was obtained (graft reaction step). Table 9 shows the blended substances used in the graft reaction and the loadings of the substances.

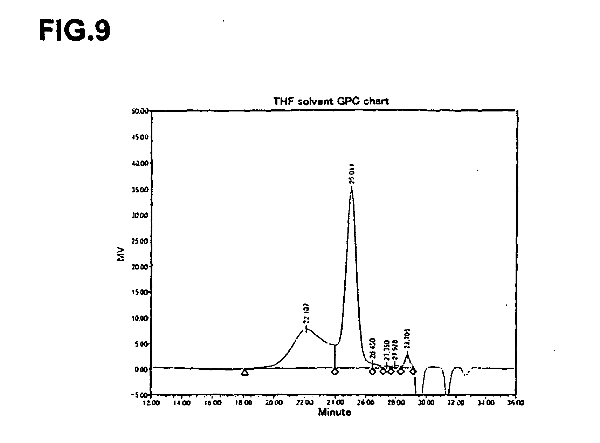

The (meth)acrylic-grafted polyoxyalkylene polyol (B-2) had a viscosity of 920 mPa·s/25°C, a colorless, transparent external appearance, a (meth)acrylic polymer content of 26.4%, and an OH value of 69.5 mgKOH/g. Fig. 9 shows the GPC chart of the resultant (meth)acrylic-grafted polyoxyalkylene polyol (B-2).
As shown in Figs. 8 and 9, in the GPC chart of the (meth)acrylic-grafted polyoxyalkylene polyol (B-2), a new peak appeared at higher molecular weights of the polyoxyalkylene polyol (B-1) as a raw material. The peak top molecular weight of the new peak in terms of polyethylene glycol was 6,400.

Further, the resultant was fractionated into three fractions each having a development time of 22.0 to 26.0 minutes (hereinafter referred to as "fraction A"), 26.0 to 30.0 minutes (hereinafter referred to as "fraction B"), or 30.0 to 33.0 minutes (hereinafter referred to as "fraction C") with a fractionating column, and each fraction was subjected to 13C-NMR and liquid chromatography. Table 8 shows the results.

**[Table 8]**

| | Fractionation time (minutes) | EHMA | BMA | PPG | EHMA | BMA | PPG | MP(GPC) |
|---|---|---|---|---|---|---|---|---|
| | | | mol | | | wt% | | MP |
| Fraction A | 22-26 | 1.06 | 1.06 | 0.01 | 56.77 | 40.72 | 2.51 | 12,000 |
| Fraction B | 26-30 | 1.07 | 1.05 | 0.07 | 49.47 | 34.82 | 15.71 | 4,000 |
| Fraction C | 30-33 | 1.22 | 1.22 | 80.8 | 4.74 | 3.4 | 91.87 | 1,000 |

A molar ratio among EHMA, BMA, and PPG as raw materials was calculated from a chemical shift of 13C-NMR, and was converted into a weight ratio on the basis of the molecular weight of each raw material. In addition, a peak top molecular weight in terms of polyethylene glycol was measured by analyzing each fractionated sample by GPC again.
It was confirmed that, while the fraction C was composed substantially only of PPG, the fraction B had the structures of both a (meth)acrylate and PPG. In addition, it was shown that the (meth)acrylate was bonded to PPG to increase the molecular weight of PPG because the molecular weight of PPG increased so as to be larger than that of the raw material.

Further, Fig. 10 shows the results of measurement for the respective fractions and a (meth)acrylic polymer composed of PPG, EHMA, and BMA as raw materials by liquid chromatography. Fig. 10(a) shows the results for the (meth)acrylic polymer composed of EHMA and BMA, Fig. 10(b) shows the results for PPG as a raw material, Fig. 10(c) shows the results for the (meth)acrylic-grafted polyoxyalkylene polyol before fractionation, Fig. 10(d) shows the results for the fraction A, Fig. 10(e) shows the results for the fraction B, and Fig. 10(f) shows the results for the fraction C.
While the fraction A had a development time similar to that of PPG as a raw material, the fractions B and C each had a large peak at a development time different from those of PPG and the (meth)acrylic polymer. In particular, the fraction B is intermediate in liquid property between PPG and the (meth)acrylic polymer, and, furthermore, the NMR results show that the fraction is a compound having the structures of both PPG and the (meth)acrylate.

Accordingly, it was confirmed that the resultant resin was a resin obtained by grafting a vinyl monomer because the resultant (meth)acrylic-grafted polyoxyalkylene polyol (B-2) satisfied the above-mentioned conditions for a viscosity, GPC, 13C-NMR, an external appearance, and liquid chromatography. Table 10 shows the physical properties of the resultant (meth)acrylic-grafted polyoxyalkylene polyol (B-2).

It should be noted that a method of calculating a composition ratio from 13C-NMR is as described below.
PPG: An integrated value from 73 to 75 ppm
EHMA:The average of integrated values at 67, 39, 29, 24, 23, and 12 ppm
BMA: The average of integrated values at 65 and 19 ppm

In addition, a fractionating GPC apparatus and conditions are as described below.
Apparatus Manufactured by Waters Corporation
Column A PLgel fractionating column manufactured by Polymer Laboratories Ltd. ϕ25 mm×L600 mm, 10 µ 100Å + ϕ25×600 mm, 10 µ 10^3 Å
Eluent Dichloroethane, flow rate 8 ml/min, (an exclusion limit is about 20 min, and a permeability limit is about 70 min.)
Detector RI
Injection amount 2%×5 ml (about 100 mg)×2
Fractionation conditions An injection waiting condition of 25 minutes, up to 25 fractions per minute, and recovery and concentration were separated at the position where an RI peak appeared.
Fractionation was repeatedly performed twice by continuous injection with a sample loader.

An apparatus and conditions for liquid chromatography are as described below. A grafted product was analyzed by liquid chromatography in accordance with the following documents:
(Document 1) Tomotada Kawai et al., Japanese Journal of Polymer Science and Technology, 60-th volume, 6-th issue, p. 287 to 293 (2003); and (Document 2) P. G. Alden, M. Woodman, "Gradient Analysis of Polymer Blends, Copolymers, and Additives with ELSD and PDA Detection", technical data of Waters Corporation, http://www.waters.co.jp/application/product/gpdpalden_gpc.html

Conditions for liquid chromatography of this example are shown below; the conditions must be modified depending on a material in some cases.
Apparatus: A 2695 manufactured by Waters Corporation
Column: A µBONDASPHERE CN (3.9 mmID×150 mm, 5 µm, 300A) manufactured by Waters Corporation
Mobile phase (A): Isooctane
Mobile phase (B): THF
Gradient: A/B = 80/20 ∼ 0/100
Flow rate: 0.8 mL/min
Detector: An evaporated light scattering detector

1,000.0 parts by weight of the resultant (meth)acrylic-grafted polyoxyalkylene polyol (B-2) were loaded into a 2-L flask mounted with a stirring device, a temperature gauge, a nitrogen-introducing port, a monomer-loading tube, and a water-cooled condenser, and were heated to 65°C in an oil bath. Next, 290.9 parts by weight (equivalent of the polyoxyalkylene polyol) of 3-isocyanate propyltriethoxysilane (trade name: KBE9007, manufactured by Shin-Etsu Chemical Co., Ltd.) were dropped to the flask over 10 minutes, and the contents in the flask were mixed for 20 minutes. After that, 0.08 part by weight of stannous octylate was dropped to the mixture. After that, the temperature of the resultant mixture was increased from 65°C to 90°C over 30 minutes. It was confirmed that, 6 hours after the temperature had reached 90°C, the NCO% was 0.1 or less. Thus, a vinyl monomer-grafted- alkoxysilane-modified oxyalkylene resin was obtained (modification step).
The vinyl monomer-grafted alkoxysilane-modified oxyalkylene resin had a viscosity of 1,100 mPa · s/25°C and a colorless, transparent external appearance.

### (Example 24)

A polyoxyalkylene polyol (A-3) was obtained in the same manner as in

### Example 11A

889.8 parts by weight of the resultant polyoxyalkylene polyol (A-3) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 46.0 parts by weight of n-butyl methacrylate and 64.2 parts by weight of 2-ethylhexyl methacrylate as vinyl monomers, and 30.1 parts by weight of a Perhexa C (trade name, manufactured by Nihon Yushi Corporation, a product obtained by diluting 1,1-bis(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours. After that, the resultant was subjected to a decompression treatment at 120°C and 1.3 kPa or less for 4 hours so that unreacted monomers might be removed. As a result, a (meth)acrylic-grafted polyoxyalkylene polyol (B-3) was obtained (graft reaction step). Table 9 shows the blended substances used in the graft reaction and the loadings of the substances.
The (meth)acrylic-grafted polyoxyalkylene polyol) (B-3) had a viscosity of 2,300 mPa · s/25°C, a colorless, transparent external appearance, a (meth)acrylic polymer content of 9.2%, and an OH value of 17.6 mgKOH/g. Table 10 shows the physical properties of the resultant (meth)acrylic-grafted polyoxyalkylene polyol (B-3).

956.3 parts by weight of the resultant (meth)acrylic-grafted polyoxyalkylene polyol (B-3) were loaded into a 2-L flask mounted with a stirring device, a temperature gauge, a nitrogen-introducing port, a monomer-loading tube, and a water-cooled condenser, and were heated to 65°C in an oil bath. Next, 43.7 parts by weight of 1,3-bis(isocyanatemethyl)cyclohexane were dropped to the flask over 10 minutes, and the contents in the flask were mixed for 20 minutes. After that, 0.030 part by weight of stannous octylate was dropped to the mixture. The temperature of the resultant mixture was increased from 65°C to 90°C within 30 minutes. It was confirmed that, after 2 hours and 40 minutes, the NCO% was 0.62, and the time point was regarded as the time point at which a urethane prepolymer formation reaction was completed. Thus, a (meth)acrylic-grafted polyoxyalkylene urethane prepolymer (B-4) was obtained.

963.7 parts by weight of the resultant (meth)acrylic-grafted polyoxyalkylene urethane prepolymer (B-4) were loaded into a 2-L flask mounted with a stirring device, a temperature gauge, a nitrogen-introducing port, a monomer-loading tube, and a water-cooled condenser, and were heated to 65°C in an oil bath. Next, 36.3 parts by weight of a KBM573 (trade name, manufactured by Shin-Etsu Chemical Co., Ltd., N-phenyl-3-aminopropyltrimethoxysilane) were dropped to the flask over 10 minutes, and the contents in the flask were mixed for 20 minutes. After that, the temperature of the mixture was increased from 65°C to 75°C. It was confirmed that, 2 hours after the temperature had reached 75°C, the NCO% was 0.1 or less, and the time point was regarded as the time point at which an alkoxysilane modification reaction was completed. Thus, a vinyl monomer-grafted alkoxysilane-modified oxyalkylene resin was obtained (modification step).
The vinyl monomer-grafted alkoxysilane·modified oxyalkylene resin had a viscosity of 90,000 mPa · s/25°C and a colorless, transparent external appearance.

### (Example 25)

A polyoxyalkylene polyol (A-3) was obtained in the same manner as in Example 11A.
669.1 parts by weight of the resultant polyoxyalkylene polyol (A-3) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 330.9 parts by weight of n-butyl methacrylate as a vinyl monomer and 22.6 parts by weight of a Perhexa C (trade name, manufactured by Nihon Yushi Corporation, a product obtained by diluting 1,1-bis(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours. After that, the resultant was subjected to a decompression treatment at 120°C and 1.3 kPa or less for 4 hours so that unreacted monomers might be removed. As a result, a (meth)acrylic-grafted polyoxyalkylene polyol (B-5) was obtained (graft reaction step). Table 9 shows the blended substances used in the graft reaction and the loadings of the substances.
The (meth)acrylic-grafted polyoxyalkylene polyol (B-5) had a viscosity of 21,000 mPa · s/25°C, a colorless, transparent external appearance, a (meth)acrylic polymer content of 31.4%, and an OH value of 13.7 mgKOH/g. Table 10 shows the physical properties of the resultant (meth)acrylic-grafted polyoxyalkylene polyol (B-5).

1,738.8 parts by weight of the resultant (meth)acrylic-grafted polyoxyalkylene polyol (B-5) were loaded into a 2-L flask mounted with a stirring device, a temperature gauge, a nitrogen-introducing port, a monomer-loading tube, and a water-cooled condenser, and were heated to 65°C in an oil bath. Next, 101.0 parts by weight (equivalent of the polyoxyalkylene polyol) of 3-isocyanate propyltriethoxysilane (trade name: KBE9007, manufactured by Shin-Etsu Chemical Co., Ltd.) were dropped to the flask over 10 minutes, and the contents in the flask were mixed for 20 minutes. After that, 0.06 part by weight of stannous octylate was dropped to the mixture. After that, the temperature of the resultant mixture was increased from 65°C to 90°C over 30 minutes. It was confirmed that, after 7 hours, the NCO% was 0.1 or less. Thus, a vinyl monomer-grafted alkoxysilane-modified oxyalkylene resin of the present invention was obtained (modification step).
The vinyl monomer-grafted alkoxysilane-modified oxyalkylene resin had a viscosity of 26,000 mPa · s/25°C and a colorless, transparent external appearance.

### (Example 26)

A polyoxyalkylene polyol (A-3) was obtained in the same manner as in Example 11A.
801.5 parts by weight of the resultant polyoxyalkylene polyol (A-3) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 198.5 parts by weight of n-butyl methacrylate as a vinyl monomer and 13.6 parts by weight of a Perhexa C (trade name, manufactured by Nihon Yushi Corporation, a product obtained by diluting 1,1-bis(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours. After that, the resultant was subjected to a decompression treatment at 120°C and 1.3 kPa or less for 4 hours so that unreacted monomers might be removed. As a result, a (meth)acrylic-grafted polyoxyalkylene polyol (B-6) was obtained (graft reaction step). Table 9 shows the blended substances used in the graft reaction and the loadings of the substances.
The (meth)acrylic-grafted polyoxyalkylene polyol (B-6) had a viscosity of 4,500 mPa · s/25°C, a colorless, transparent external appearance, a (meth)acrylic polymer content of 17.9%, and an OH value of 16.0 mgKOH/g. Table 10 shows the physical properties of the resultant (meth)acrylic-grafted- polyoxyalkylene polyol (B-6).

1051.1 parts by weight of the (meth)acrylic-grafted polyoxyalkylene polyol (B-6) were loaded into a 2-L flask mounted with a stirring device, a temperature gauge, a nitrogen-introducing port, a monomer-loading tube, and a water-cooled condenser, and were heated to 65°C in an oil bath. Next, 43.5 parts by weight of 1,3-bis(isocyanatemethyl)cyclohexane were dropped to the flask over 10 minutes, and the contents in the flask were mixed for 20 minutes. After that, 0.011 part by weight of stannous octylate was dropped to the mixture. The temperature of the resultant mixture was increased from 65°C to 90°C within 30 minutes. 0.011 part by weight of stannous octylate was dropped to the mixture at 3 hours after the temperature had reached 90°C. It was confirmed that, after 7 hours, the NCO% was 0.54, and the time point was regarded as the time point at which a urethane prepolymer formation reaction was completed. Thus, a (meth)acrylic-grafted polyoxyalkylene urethane prepolymer (B-7) was obtained.

1,017.0 parts by weight of the resultant (meth)acrylic-grafted polyoxyalkylene urethane prepolymer (B-7) were loaded into a 2-L flask mounted with a stirring device, a temperature gauge, a nitrogen-introducing port, a monomer loading tube, and a water-cooled condenser, and were heated to 65°C in an oil bath. Next, 33.2 parts by weight of a KBM573 (trade name, manufactured by Shin-Etsu Chemical Co., Ltd., N-phenyl-3-aminopropyltrimethoxysilane) were dropped to the flask over 10 minutes, and the contents in the flask were mixed for 20 minutes. After that, the temperature of the mixture was increased from 65°C to 75°C. It was confirmed that, 4 hours after the temperature had reached 75°C, the NCO% was 0.1 or less, and the time point was regarded as the time point at which an alkoxysilane modification reaction was completed. Thus, a vinyl monomer-grafted alkoxysilane-modified oxyalkylene resin of the present invention was obtained (modification step). The resultant vinyl monomer-grafted alkoxysilane-modified oxyalkylene resin had a viscosity of 310,000 mPa · s/25°C and a colorless, transparent external appearance.

### (Example 27)

A polyoxyalkylene polyol (A-3) was obtained in the same manner as in Example 11A. 1850.0 parts by weight of the resultant polyoxyalkylene polyol (A-3) were loaded into a 2-L flask mounted with a stirring device, a temperature gauge, a nitrogen-introducing port, a monomer-loading tube, and a water-cooled condenser, and were heated to 65°C in an oil bath. Next, 169.7 parts by weight (equivalent of the polyoxyalkylene polyol) of 3-isocyanate propyltriethoxysilane (trade name: KBE9007, manufactured by Shin-Etsu Chemical Co., Ltd.) were dropped to the flask over 10 minutes, and the contents in the flask were mixed for 20 minutes. After that, 0.18 part by weight of stannous octylate was dropped to the mixture. Then, the temperature of the resultant mixture was increased from 65°C to 90°C within 30 minutes. 0.04 part by weight of stannous octylate was dropped to the mixture at each of 4 and 5 hours after the temperature had reached 90°C. It was confirmed that, 6 hours after the stannous octylate was dropped, the NCO% was 0 or less, and an alkoxysilane-modified oxyalkylene resin (A-5) was obtained (modification step).

687.9 parts by weight of the resultant alkoxysilane-modified oxyalkylene resin (A-5) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 226.6 parts by weight of n-butyl methacrylate and 85.4 parts by weight of 3-methacryloxypropyltrimethoxysilane (trade name: KBM503, manufactured by Shin-Etsu Chemical Co., Ltd.) as vinyl monomers, and 21.3 parts by weight of a Perhexa C (trade name, manufactured by Nihon Yushi Corporation, a product obtained by diluting 1,1-bis(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours. After that, the resultant was subjected to a decompression treatment at 120°C and 1.3 kPa or less for 2 hours so that unreacted monomers might be removed. As a result, a vinyl monomer-grafted alkoxysilane-modified oxyalkylene resin of the present invention was obtained (graft reaction step). Table 9 shows the blended substances used in the graft reaction and the loadings of the substances.
The vinyl monomer-grafted alkoxysilane-modified oxyalkylene resin had a viscosity of 18,000 mPa· s/25°C, a colorless, transparent external appearance, and a (meth)acrylic polymer content of 30.6%. Table 10 shows the results.

### (Example 28)

A polyoxyalkylene polyol (A-3) was obtained in the same manner as in Example 11A.
801.5 parts by weight of the resultant polyoxyalkylene polyol (A-3) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 82.9 parts by weight of n-butyl methacrylate and 115.6 parts by weight of 2-ethylhexyl methacrylate as vinyl monomers, and 13.6 parts by weight of a Perhexa C (trade name, manufactured by Nihon Yushi Corporation, a product obtained by diluting 1,1-bis(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours. After that, the resultant was subjected to a decompression treatment at 120°C and 1.3 kPa or less for 4 hours so that unreacted monomers might be removed. As a result, a (meth)acrylic-grafted polyoxyalkylene polyol (B-8) was obtained (graft reaction step). Table 9 shows the blended substances used in the graft reaction and the loadings of the substances.
The (meth)acrylic-grafted polyoxyalkylene polyol (B-8) had a viscosity of 3,900 mPa · s/25°C, a colorless, transparent external appearance, a (meth)acrylic polymer content of 18.1%, and an OH value of 16.7 mgKOH/g. Table 10 shows the physical properties of the resultant (meth)acrylic-grafted polyoxyalkylene polyol (B-8).

1756.8 parts by weight of the resultant (meth)acrylic-grafted polyoxyalkylene polyol (B-8) were loaded into a 2-L flask mounted with a stirring device, a temperature gauge, a nitrogen-introducing port, a monomer-loading tube, and a water-cooled condenser, and were heated to 65°C in an oil bath. Next, 76.1 parts by weight of 1,3-bis(isocyanatemethyl)cyclohexane were dropped to the flask over 10 minutes, and the contents in the flask were mixed for 20 minutes. After that, 0.018 part by weight of stannous octylate was dropped to the mixture. The temperature of the resultant mixture was increased from 65°C to 90°C within 30 minutes. 0.018 part by weight of stannous octylate was dropped to the mixture at 11 hours after the temperature had reached 90°C. It was confirmed that, after 13 hours, the NCO% was 0.58, and the time point was regarded as the time point at which a urethane prepolymer formation reaction was completed. Thus, a (meth)acrylic-grafted polyoxyalkylene urethane prepolymer (B-9) was obtained.

1715.0 parts by weight of the resultant (meth)acrylic-grafted polyoxyalkylene urethane prepolymer (B-9) were loaded into a 2-L flask mounted with a stirring device, a temperature gauge, a nitrogen-introducing port, a monomer-loading tube, and a water-cooled condenser, and were heated to 65°C in an oil bath. Next, 60.5 parts by weight of a KBM573 (trade name, manufactured by Shin-Etsu Chemical Co., Ltd., N-phenyl-3-aminopropyltrimethoxysilane) were dropped to the flask over 10 minutes, and the contents in the flask were mixed for 20 minutes. After that, the temperature of the mixture was increased from 65°C to 75°C. It was confirmed that, 4 hours after the temperature had reached 75°C, the NCO% was 0.1 or less, and the time point was regarded as the time point at which an alkoxysilane modification reaction was completed. Thus, a vinyl monomer-grafted alkoxysilane-modified oxyalkylene resin of the present invention was obtained (modification step). The resultant vinyl monomer-grafted alkoxysilane-modified oxyalkylene resin had a viscosity of 169,000 mPa · s/25°C and a colorless, transparent external appearance.

**[Table 9]**

| Graft reaction conditions | | | | | | | |
|---|---|---|---|---|---|---|---|
| | | Example 23 (wt/mol) | Example 24 (wt/mol) | Example 25 (wt/mol) | Example 26 (wt/mol) | Example 27 (wt/mol) | Example 28 (wt/mol) |
| Polyoxyalkylene polyol | B-1 | 70.1/1 | - | - | - | - | - |
| | A-3 | - | 89.0/1 | 66.9/1 | 80.1/1 | | 80.1/1 |
| Alkoxysilane-modified oxyalkylene resin | Resin A-5 | - | - | - | 68.8/1 | 68.8/1 | - |
| Vinyl monomer | BMA | 12.5/1.25 | 4.6/2 | 33.1/19.13 | 19.9/9.58 | 22.3/13.9 | 8.3/4 |
| | EHMA | 17.4/1.25 | 6.4/2 | - | - | - | 11.6/4 |
| | KBM503 | - | - | - | - | 8.5/3 | - |
| lkyl peroxide | Perhexa C | 2.1/0.08 | 3.0/0.5 | 2.26/0.5 | 1.36/0.25 | 2.13/0.5 | 1.36/0.25 |
| (Meth)acrylic monomer/alkyl peroxide (molar ratio) | | 31.25 | 9.0 | 38.26 | 38.32 | 33.8 | 32.0 |

| | | | | | | | |
|---|---|---|---|---|---|---|---|
| In Table 9, the loading of each of blended substances was represented in "parts by weight/molar ratio". | | | | | | | |

**[Table 10]**

| | Example 23 | Example 24 | Example 25 | Example 26 | Example 27 | Example 28 |
|---|---|---|---|---|---|---|
| Measured resin | (Meth)acrylic-grafted polyoxyalkylene polyol B-2 | (Meth)acrylic-grafted polyoxyalkylene polyol B-3 | (Meth)acrylic-grafted polyoxyalkylene polyol B-5 | (Meth)acrylic-grafted polyoxyalkylene polyol B-6 | Vinyl monomer-grafted alkoxysilane-modified oxyalkylene resin | (Meth)acrylic-grafted polyoxyalkylene polyol B-8 |
| Loading of (meth)acrylic monomer (wt%) | 30.0 | 11.0 | 33.1 | 19.9 | 31.2 | 19.9 |
| (Meth)acrylic polymer content (wt%) | 26.4 | 9.2 | 31.4 | 17.9 | 30.7 | 18.1 |
| Degree of (meth)acrylic conversion (%) | 88.0 | 83 | 94.9 | 89.9 | 98.4 | 91.2 |
| Viscosity (mPa · s/25°C) | 920 | 2.300 | 21.000 | 4.500 | 15,600 | 3.800 |
| Peak top molecular weight | 1.000 | 6.000 | 6.000 | 6.000 | 6,000 | 6,000 |
| External appearance | ○ | ○ | ○ | ○ | ○ | ○ |
| Grafting | ○ | ○ | ○ | ○ | ○ | ○ |

### (Example 29)

A curable composition was prepared in the same manner as in Example 12 except that the vinyl monomer-grafted alkoxysilane-modified oxyalkylene resin obtained in Example 24 was used instead of the vinyl monomer-grafted alkoxysilane-modified oxyalkylene resin obtained in Example 5. Then, the properties of the curable composition were measured. Table 11 shows the results.

### (Examples 30 to 33)

In each of the examples, a curable composition was prepared in the same manner as in Example 12 except that two or more kinds of resins selected from the vinyl monomer-grafted alkoxysilane-modified oxyalkylene resins obtained in Examples 11, 23, and 25 to 28 were used instead of the vinyl monomer-grafted alkoxysilane-modified oxyalkylene resin obtained in Example 5 as shown in Table 11. Then, the properties of each of the curable compositions were measured. Table 11 shows the results together with a blending ratio between two kinds of resins.

**[Table 11]**

| Example No. | | | Example 29 | | Example 30 | | Example 31 | | Example 32 | | Example 33 | |
|---|---|---|---|---|---|---|---|---|---|---|---|---|
| Example No. of resin in curable composition Blending ratio | | | 24 100% | | 25 45% | 26 55% | 11 55% | 25 45% | 26 55% | 27 45% | 23 25% | 28 75% |
| External appearance | Before curing | | ○ | | ○ | | ○ | | ○ | | ○ | |
| | After curing | | ○ | | ○ | | ○ | | ○ | | ○ | |
| Storage stability | Initial | Pa · s | 94 | | 84 | | 60 | | 72 | | 76 | |
| | After storage | Pa · s | 98 | | 90 | | 66 | | 76 | | 82 | |
| | Thickening ratio | % | 1.04 | | 1.07 | | 1.10 | | 1.06 | | 1.08 | |
| TFT | | Seconds | 180 | | 180 | | 180 | | 180 | | 180 | |
| Depth curability | | mm/24h | 2.70 | | 2.82 | | 2.68 | | 2.20 | | 2.56 | |
| Hardness | Initial | JISA | 36 | | 30 | | 30 | | 51 | | 42 | |
| | 80°C ·lw | | 33 | | 30 | | 30 | | 52 | | 43 | |
| Adhesiveness | Hard vinyl chloride | N/mm² | 1.00 | AF | 0.87 | AF | 1.29 | AF | 3.07 | C3A7 | 0.80 | AF |
| | Polycarbonate | | 2.03 | AF | 1.64 | AF | 1.59 | C1A9 | 1.55 | AF | 3.25 | C2A8 |
| | Polystyrene | | 0.56 | AF | 0.75 | AF | 0.79 | AF | 0.81 | AF | 0.67 | AF |
| | ABS | | 0.68 | AF | 0.61 | AF | 0.58 | AF | 0.59 | AF | 0.59 | AF |
| | Acryl | | 1.11 | AF | 0.98 | AF | 0.97 | AF | 0.70 | AF | 1.10 | AF |
| | 6-nylon | | 0.68 | AF | 0.63 | AF | 1.14 | AF | 0.68 | AF | 2.03 | C1A9 |
| | Mild steel sheet | | 2.22 | AF | 1.56 | C2A8 | 1.76 | C1A9 | 3.89 | C4A6 | 2.40 | AF |
| | AI | | 3.02 | AF | 4.21 | CF | 3.70 | C7A3 | 4.70 | C8A2 | 3.75 | C8A2 |
| Rubber physical properties | | N/mm² | 0.73 | | 0.89 | | 0.82 | | 1.47 | | 1.09 | |
| | | % | 100 | | 100 | | 100 | | 125 | | 75 | |
| Rise in adhesiveness | 5 minutes | N/mm² | 0.35 | | 0.24 | | 0.11 | | 0.52 | | 0.24 | |
| | 10 minutes | | 0.55 | | 0.60 | | 0.32 | | 0.80 | | 0.68 | |
| | 20 minutes | | 0.88 | | 0.82 | | 0.51 | | 1.10 | | 0.92 | |
| | 30 minutes | | 1.11 | | 1.44 | | 0.88 | | 1.50 | | 1.33 | |

### (Example 34)

A polyoxyalkylene polyol (A-3) was obtained in the same manner as in Example 11.
91.03 parts by weight of the resultant polyoxyalkylene polyol (A-3) were loaded into a 2-L flask mounted with a stirring device, a temperature gauge, a nitrogen-introducing port, a monomer-loading tube, and a water-cooled condenser, and were heated to 75°C in an oil bath. Next, 3.44 parts by weight of a KBE9007 (trade name, manufactured by Shin-Etsu Chemical Co., Ltd., isocyanatopropyltriethoxysilane) were dropped to the flask over 10 minutes. After that, 0.01 part by weight of stannous octylate was added to the flask. The contents in the flask were mixed for 20 minutes, and then the temperature of the mixture was increased to 88°C. 0.005 part by weight of stannous octylate was added to the mixture 2 hours after the temperature had reached 88°C. 3 hours after the addition, it was confirmed that the NCO% was 0.1 or less. Next, the temperature of the mixture was cooled to 55°C, and then 2.88 parts by weight of 1,3-bis(isocyanatemethyl)cyclohexane were dropped to the flask over 10 minutes, and the contents in the flask were mixed for 20 minutes. After that, the temperature of the resultant mixture was increased from 55°C to 70°C. It was confirmed that, 2 hours after the temperature had reached 70°C, the NCO% was 0.44. Subsequently, 2.64 parts by weight of a KBM573 (trade name, manufactured by Shin-Etsu Chemical Co., Ltd., N-phenyl-3-aminopropyltrimethoxysilane) were dropped to the flask over 10 minutes, and the contents in the flask were mixed for 20 minutes. After that, the resultant mixture was subjected to a reaction for 3 hours, and then it was confirmed that the NCO% was 0.1 or less. Thus, an alkoxysilane-modified oxyalkylene resin (A-6) was obtained (modification step). The resin had a viscosity of 16,000 mPa · s/25°C.

75.05 parts by weight of the resultant alkoxysilane-modified oxyalkylene resin (A-6) were loaded into a 1-L flask mounted with a stirring device, a temperature gauge, a nitrogen-introducing port, a monomer-loading tube, and a water-cooled condenser under nitrogen sealing, and were heated to 120°C in an oil bath. Next, a solution prepared by uniformly mixing 21.1 parts by weight of n-butyl methacrylate and 3.84 parts by weight of KBM503 (trade name, manufactured by Shin-Etsu Chemical Co., Ltd., 3-methacryloxypropyltrimethoxysilane) as vinyl monomers, and 17.1 part by weight of a Perhexa C (trade name, manufactured by Nihon Yushi Corporation, a product obtained by diluting 1,1-bis(t-butylperoxy)cyclohexane with a hydrocarbon so that the product might have a purity of 70%) as a radical reaction initiator was dropped to the above flask over 4 hours at a uniform speed, and the mixture was subjected to a reaction for additional 4 hours. After that, the resultant was subjected to a decompression treatment at 120°C and 1.3 kPa or less for 4 hours so that unreacted monomers might be removed. As a result, a vinyl monomer-grafted alkoxysilane-modified oxyalkylene resin was obtained (graft reaction step). Table 12 shows the blended substances used in the graft reaction and the loadings of the substances.
The vinyl monomer-grafted alkoxysilane-modified oxyalkylene resin had a viscosity of 85,000 mPa· s/25°C, a colorless, transparent external appearance, and a (meth)acrylic polymer content of 22.4%. Table 13 shows the results.

**[Table 12]**

| | | Example 34 (wt/mol) |
|---|---|---|
| Alkoxysilane-modified oxyalkylene resin | ResinA-6 | 75.1/1 |
| Vinyl monomer | BMA | 21.1/15.8 |
| Alkyl peroxide | Perhexa C | 3.84/1.65 |
| (Meth)acrylic monomer/alkyl peroxide (molar ratio) | | 34.9 |

| | | |
|---|---|---|
| In Table 12, the loading of each blended substance was represented in "parts by weight/molar ratio". | | |

**[Table 13]**

| | Example 34 |
|---|---|
| Loading of (meth)acrylic monomer (wt%) | 25.0 |
| (Meth)acrylic polymer content (wt%) | 22.4 |
| Degree of (meth)acrylic conversion (%) | 89.9 |
| Viscosity (mPa · s/25°C) | 85,000 |
| Peak top molecular weight | 8,000 |
| External appearance | ○ |
| Grafting | ○ |

### (Example 35)

A curable composition was prepared in the same manner as in Example 12 except that the vinyl monomer-grafted alkoxysilane-modified oxyalkylene resin obtained in Example 34 was used instead of the vinyl monomer-grafted alkoxysilane-modified oxyalkylene resin obtained in Example 5. Then, the properties of the curable composition were measured. Table 14 shows the results.

**[Table 14]**

| Example No. | | | Example 35 | |
|---|---|---|---|---|
| Example No. of resin in curable composition | | | 34 | |
| External appearance | Before curing | | ○ | |
| | After curing | | ○ | |
| Storage stability | Initial | Pa · s | 47 | |
| | After storage | Pa · s | 45 | |
| | Thickening ratio | % | 0.96 | |
| TFT | | Seconds | 180 | |
| Depth curability | | mm/24h | 2.62 | |
| Hardness | Initial | JISA | 65 | |
| | 80°C·1w | | 66 | |
| Adhesiveness | Hard vinyl chloride | N/mm² | 3.69 | MF |
| | Polycarbonate | | 1.93 | C3A7 |
| | Polystyrene | | 1.01 | AF |
| | ABS | | 0.65 | AF |
| | Acryl | | 0.94 | AF |
| | 6-nylon | | 0.87 | AF |
| | Mild steel sheet | | 6.12 | AF |
| | AI | | 5.26 | AF |
| Rubber physical properties | | N/mm² | 1.26 | |
| | | % | 75 | |
| Rise in adhesiveness | 5 minutes | N/mm² | 0.36 | |
| | 10 minutes | | 0.52 | |
| | 20 minutes | | 0.71 | |
| | 30 minutes | | 1.01 | |

### Industrial Applicability

The curable composition of the present invention, which is obtained from the vinyl monomer-grafted alkoxysilane-modified oxyalkylene resin and has adhesiveness, can be of either a one-component type or a two-component type as required; a curable composition of a one-component type can be particularly suitably used. The curable composition having adhesiveness of the present invention can be used in, for example, an adhesive, a sealing material, a tackiness material, a coating material, a potting material, a putty material, or a primer. The curable composition having adhesiveness of the present invention is particularly preferably used in an adhesive because of its excellent adhesiveness, rubber physical properties, storage stability, depth curability, and fast curability; the composition can be used for any one of the various architectures, an automobile, civil engineering, an electrical and electronic field, or the like as well.

## Claims

1. A vinyl monomer-grafted alkoxysilane·modified oxyalkylene resin, which is produced by a method including grafting of a vinyl monomer by using an oxyalkylene based polymer as a raw material, wherein:
the vinyl monomer comprises a vinyl monomer containing 50 wt% or more of one or two or more kinds of (meth)acrylic monomers each represented by the following formula (1); and
the vinyl monomer is subjected to a graft reaction by using an alkyl peroxide as a radical reaction initiator: 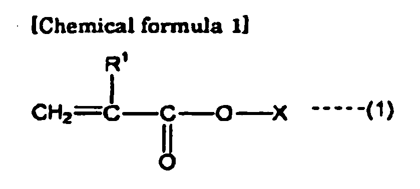 where R¹ represents a hydrogen atom or a methyl group, and X represents a hydrogen atom, an alkali metal atom, a hydrocarbon group having 1 to 22 carbon atoms, or a substituted hydrocarbon group having 1 to 22 carbon atoms and having a functional group containing at least one kind of an atom selected from the group consisting of a boron atom, a nitrogen atom, an oxygen atom, a fluorine atom, a phosphorus atom, a silicon atom, a sulfur atom, and a chlorine atom,
wherein the alkyl peroxide comprises a peroxy ketal.

2. A vinyl monomer-grafted alkoxysilane-modified oxyalkylene resin according to claim 1, wherein the peroxy ketal comprises 1,1-di(t-butylperoxy)cyclohexane.

3. A vinyl monomergrafted alkoxysilane-modified oxyalkylene resin according to any one of claims 1 to 2, wherein the (meth)acrylic monomer contains a (meth)acrylic silane monomer in which X in the formula (1) comprises a group represented by the following formula (2): 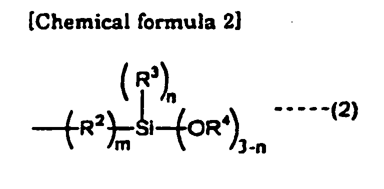 where R² represents a divalent hydrocarbon group having 1 to 10 carbon atoms, R³ represents an alkyl group having 1 to 10 carbon atoms, an aryl group having 6 to 10 carbon atoms, or an aralkyl group having 7 to 10 carbon atoms. R⁴ represents an unsubstituted or substituted hydrocarbon group having 1 to 8 carbon atoms, n represents an integer of 0 to 2, and m represents 0 or 1.

4. A production method for a vinyl monomer-grafted alkoxysilane-modified oxyalkylene resin, comprising the steps of
modifying an oxyalkylene based polymer with an alkoxysilane compound to provide an alkoxysilane-modified oxyalkylene resin: and
subjecting the alkoxysilane-modified oxyalkylene resin, a vinyl monomer containing 50 wt% or more of one or two or more kinds of (meth)acrylic monomers each represented by the following formula (1), and an alkyl peroxide to a graft reaction; wherein the alkyl peroxide comprises a peroxy ketal; 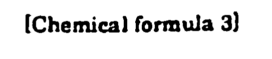 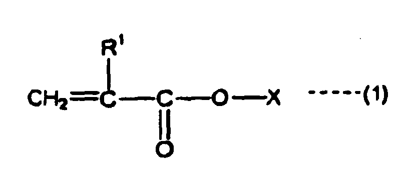 where R¹ represents a hydrogen atom or a methyl group, and X represents a hydrogen atom, an alkali metal atom, a hydrocarbon group having 1 to 22 carbon atoms, or a substituted hydrocarbon group having 1 to 22 carbon atoms and having a functional group containing at least one kind of an atom selected from the group consisting of a boron atom, a nitrogen atom, an oxygen atom, a fluorine atom, a phosphorus atom, a silicon atom, a sulfur atom, and a chlorine atom.

5. A production method according to claim 4, wherein the oxyalkylene based polymer comprises a polyoxyalkylene polyol derivative obtained by causing a polyoxyalkylene polyol and a diisocyanate compound to react with each other.

6. A production method according to claim 4, wherein the oxyalkylene based polymer comprises a polyoxyalkylene polyol derivative obtained by causing a polyoxyalkylene polyol to react with an alkoxysilane compound having an isocyanate group and a diisocyanate compound, and the alkoxysilane compound comprises an alkoxysilane compound having a secondary amino group.

7. A production method for a vinyl monomer-grafted alkoxysilane-modified oxyalkylene resin, comprising the steps of:
subjecting an oxyalkylene based polymer, a vinyl monomer containing 50 wt% or more of one or two or more kinds of (meth)acrylic monomers each represented by the following formula (1), and an alkyl peroxide to a graft reaction to provide a vinyl monomer-grafted oxyalkylene resin; wherein the alkyl peroxide comprises a peroxy ketal; and a
modifying the vinyl monomer-grafted oxyalkylene resin with an alkoxysilane compound: 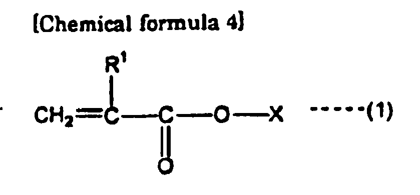
where R¹ represents a hydrogen atom or a methyl group, and X represents a hydrogen atom, an alkali metal atom, a hydrocarbon group having 1 to 22 carbon atoms, or a substituted hydrocarbon group having 1 to 22 carbon atoms and having a functional group containing at least one kind of an atom selected from the group consisting of a boron atom, a nitrogen atom, an oxygen atom, a fluorine atom, a phosphorus atom, a silicon atom, a sulfur atom, and a chlorine atom.

8. A production method according to claim 7, wherein:
the oxyalkylene based polymer comprises a polyoxyalkylene polyol; and
the modifying includes
causing the vinyl monomer-grafted oxyalkylene resin and a diisocyanate compound to react with each other, and
modifying the reaction product with the alkoxysilane compound.

9. A production method according to claim 7, wherein:
the oxyalkylene based polymer comprises a polyoxyalkylene polyol;
the modifying includes
causing the vinyl monomer-grafted oxyalkylene resin to react with an alkoxysilane compound having an isocyanate group and a diisocyanate compound, and
modifying the reaction product with the alkoxysilane compound:
and
the alkoxysilane compound comprises an alkoxysilane compound having a secondary amino group.

10. A production method according to claim 4 or 7, wherein the oxyalkylene based polymer comprises one of a polyoxyalkylene polyol and a derivative of the polyoxyalkylene polyol.

11. A production method according to any one of claims 5, 6, and 8 to 10, wherein the polyoxyalkylene polyol has a hydroxyl value of 25 mgKOH/g or less.

12. A production method according to any one of claims 5, 6, and 8 to 11, wherein the polyoxyalkylene polyol has two hydroxyl groups in any one of its molecules.

13. A production method according to any one of claims 4 to 12, wherein the alkoxysilane compound, comprises one of an alkoxysilane compound having an isocyanate group and an alkoxysilane compound having a secondary amino group.

14. A production method according to claim 13, wherein the alkoxysilane compound having an isocyanate group comprises isocyanate triethoxysilane.

15. A production method according to claim 13, wherein the alkoxysilane compound having a secondary amino group is represented by the following formula (3): 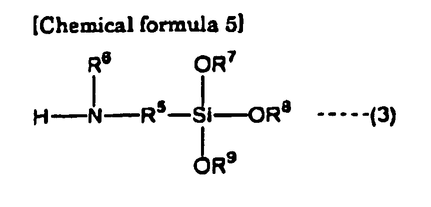 where R⁵ represents an alkylene group having 1 to 20 carbon atoms, R⁶ represents an aliphatic hydrocarbon group having 1 to 20 carbon atoms, or an aromatic hydrocarbon group having 6 to 20 carbon atoms, and R⁷, R⁸, and R⁹ each independently represent an alkyl group having 1 to 20 carbon atoms.

16. A production method according to claim 15, wherein the alkoxysilane compound having a secondary amino group comprises N-phenylaminopropyltrimethoxysilane.

17. A production method according to claim any one of claims 4 to 16, wherein the peroxy ketal comprises 1,1-di(t-butylperoxy)cyclohexane.

18. A production method according to any one of claims 4 to 17, wherein the (meth)acrylic monomer contains a (meth)acrylic silane monomer in which X in the formula (1) comprises a group represented by the following formula (2): 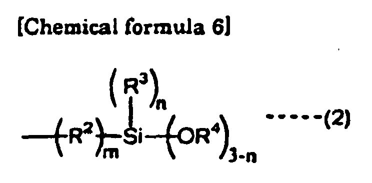 where R² represents a divalent hydrocarbon group having 1 to 10 carbon atoms, R³ represents an alkyl group having 1 to 10 carbon atoms, an aryl group having 6 to 10 carbon atoms, or an aralkyl group having 7 to 10 carbon atoms, R⁴ represents an unsubstituted or substituted hydrocarbon group having 1 to 8 carbon atoms, n represents an integer of 0 to 2, and m represents 0 or 1.

19. A vinyl monomer-grafted alkoxysilane·modified oxyalkylene resin according to any one of claims 1 to 3, wherein the resin is produced by the production method according to any one or claims 4 to 18.

20. A curable composition, comprising:
the vinyl monomer-grafted alkoxysilane-modified oxyalkylene resin according to any one of claims 1 to 3 and 19; and
a curing catalyst.

21. A curable composition, comprising:
two or more kinds of resins selected from the group consisting of the vinyl monomer-grafted alkoxysilane-modified oxyalkylene resins according to claims 1 to 3 and 19; and
a curing catalyst.

22. A curable composition according to claim 21, wherein the two or more kinds of resins include a resin produced by the production method according to claim 4 or 7 and a resin produced by the production method according to claim 5 or 9.

23. A curable composition according to any one of claims 20 to 22, wherein the curable composition comprises one of an adhesive, a potting agent for an electronic or optical part, a sealer for an electronic or optical part, a sealing material, and a paint.

## Patentansprüche

1. Vinylmonomergepfropftes, alkoxysilanmodifiziertes Oxyalkylenharz, das hergestellt ist durch ein Verfahren, beinhaltend das Pfropfen eines Vinylmonomers durch Verwenden eines oxyalkylenbasierten Polymers als ein Rohmaterial, wobei:
das Vinylmonomer ein Vinylmonomer umfasst, das 50 Gew.-% oder mehr an einer oder zwei oder mehr Arten an (Meth)acrylmonomeren enthält, wobei jedes dargestellt ist durch die folgende Formel (1); und
das Vinylmonomer einer Pfropfreaktion unter Verwenden eines Alkylperoxids als ein Radikalreaktionsinitiator unterzogen wird: 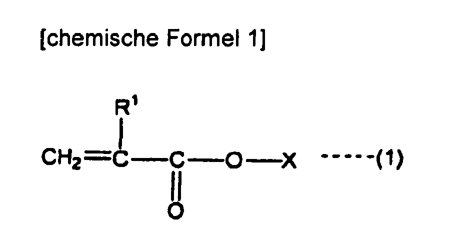
wobei R¹ ein Wasserstoffatom oder eine Methylgruppe darstellt, und X ein Wasserstoffatom, ein Alkalimetallatom, eine Kohlenwasserstoffgruppe, die 1 bis 22 Kohlenstoffatome besitzt, oder eine substituierte Kohlenwasserstoffgruppe, die 1 bis 22 Kohlenstoffatome besitzt, und eine funktionelle Gruppe besitzt, die mindestens eine Art eines Atoms enthält, das ausgewählt ist aus der Gruppe bestehend aus einem Boratom, einem Stickstoffatom, einem Sauerstoffatom, einem Fluoratom, einem Phosphoratom, einem Siliciumatom, einem Schwefelatom und einem Chloratom, darstellt,
wobei das Alkylperoxid ein Peroxyketal umfasst.

2. Vinylmonomergepfropftes, alkoxysilanmodifiziertes Oxyalkylenharz gemäß Anspruch 1, wobei das Peroxyketal 1,1-Di(t-butylperoxy)cyclohexan umfasst.

3. Vinylmonomergepfropftes, alkoxysilanmodifiziertes Oxyalkylenharz gemäß einem der Ansprüche 1 bis 2, wobei das (Meth)acrylmonomer ein (Meth)acrylsilanmonomer enthält,
in dem X in der Formel (1) eine Gruppe umfasst, die durch die folgende Formel (2) dargestellt ist: 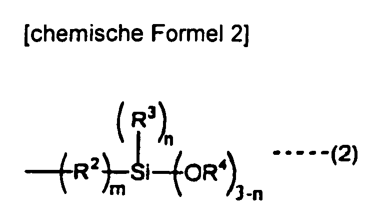 wobei R² eine divalente Kohlenwasserstoffgruppe darstellt, die 1 bis 10 Kohlenstoffatome besitzt, R³ eine Alkylgruppe, die 1 bis 10 Kohlenstoffatome besitzt, eine Arylgruppe, die 6 bis 10 Kohlenstoffatome besitzt, oder eine Aralkylgruppe, die 7 bis 10 Kohlenstoffatome besitzt, darstellt, R⁴ eine unsubstituierte oder substituierte Kohlenwasserstoffgruppe, die 1 bis 8 Kohlenstoffatome besitzt, darstellt, n eine ganze Zahl von 0 bis 2 darstellt, und m 0 oder 1 darstellt.

4. Herstellungsverfahren für ein vinylmonomergepfropftes, alkoxysilanmodifiziertes Oxyalkylenharz, umfassend die Schritte:
Modifizieren eines oxyalkylenbasierten Polymers mit einer Alkoxysilanverbindung, um ein alkoxysilanmodifiziertes Oxyalkylenharz bereitzustellen; und
Unterziehen des alkoxysilanmodifizierten Oxyalkylenharzes, eines Vinylmonomers, das 50 Gew.% oder mehr an einer oder zwei oder mehr Arten an (Meth)acrylmonomeren enthält, wobei jedes dargestellt ist durch die folgende Formel (1), und eines Alkylperoxids einer Pfropfreaktion, wobei das Alkylperoxid ein Peroxyketal umfasst; 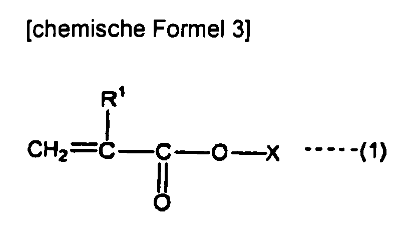
wobei R¹ ein Wasserstoffatom oder eine Methylgruppe darstellt, und X ein Wasserstoffatom, ein Alkalimetallatom, eine Kohlenwasserstoffgruppe, die 1 bis 22 Kohlenstoffatome besitzt, oder eine substituierte Kohlenwasserstoffgruppe, die 1 bis 22 Kohlenstoffatome besitzt, und eine funktionelle Gruppe besitzt, die mindestens eine Art eines Atoms enthält, das ausgewählt ist aus der Gruppe bestehend aus einem Boratom, einem Stickstoffatom, einem Sauerstoffatom, einem Fluoratom, einem Phosphoratom, einem Siliciumatom, einem Schwefelatom und einem Chloratom, darstellt,

5. Herstellungsverfahren gemäß Anspruch 4, wobei das oxyalkylenbasierte Polymer ein Derivat eines Polyoxyalkylenpolyols umfasst, das **dadurch** erhalten wird, dass bewirkt wird, dass ein Polyoxyalkylenpolyol und eine Diisocyanatverbindung miteinander umgesetzt werden.

6. Herstellungsverfahren gemäß Anspruch 4, wobei das oxyalkylenbasierte Polymer ein Derivat eines Polyoxyalkylenpolyols umfasst, das **dadurch** erhalten wird, dass bewirkt wird, dass ein Polyoxyalkylenpolyol mit einer Alkoxysilanverbindung, die eine Isocyanatgruppe besitzt, und einer Düsocyanatverbindung umgesetzt wird, und wobei die Alkoxysilanverbindung eine Alkoxysilanverbindung umfasst, die eine sekundäre Aminogruppe besitzt.

7. Herstellungsverfahren für ein vinylmonomergepropftes, alkoxysilanmodifiziertes Oxyalkylenharz, umfassend die Schritte:
Unterziehen eines oxyalkylenbasierten Polymers, eines Vinlymonomers, das 50 Gew.% oder mehr an einer oder zwei oder mehr Arten an (Meth)acrylmonomeren enthält, wobei jedes dargestellt ist durch die folgende Formel (1), und eines Alkylperoxids einer Propfreaktion, um ein vinylmonomergepropftes Oxyalkylenharz bereitzustellen, wobei das Alkylperoxid ein Peroxyketal umfasst; und
Modifizieren des vinylmonomergepfropften Oxyalkylenharzes mit einer Alkoxysilanverbindung: 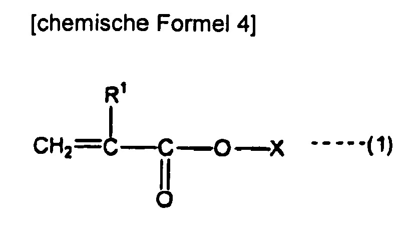
wobei R¹ ein Wasserstoffatom oder eine Methylgruppe darstellt, und X ein Wasserstoffatom, ein Alkalimetallatom, eine Kohlenwasserstoffgruppe, die 1 bis 22 Kohlenstoffatome besitzt, oder eine substituierte Kohlenwasserstoffgruppe, die 1 bis 22 Kohlenstoffatome besitzt, und eine funktionelle Gruppe besitzt, die mindestens eine Art eines Atoms enthält, das ausgewählt ist aus der Gruppe bestehend aus einem Boratom, einem Stickstoffatom, einem Sauerstoffatom, einem Fluoratom, einem Phosphoratom, einem Siliciumatom, einem Schwefelatom und einem Chloratom, darstellt.

8. Herstellungsverfahren gemäß Anspruch 7, wobei:
das oxyalkylenbasierte Polymer ein Polyoxyalkylenpolyol umfasst; und
das Modifizieren beinhaltet:
Bewirken, dass das vinylmonomergepropfte Oxyalkylenharz und eine Diisocyanatverbindung miteinander umgesetzt werden, und
Modifizieren des Reaktionsprodukts mit der Alkoxysilanverbindung.

9. Herstellungsverfahren gemäß Anspruch 7, wobei:
das oxyalkylenbasierte Polymer ein Polyoxyalkylenpolyol umfasst;
das Modifizieren beinhaltet:
Bewirken, dass das vinylmonomergepropfte Oxyalkylenharz mit einer Alkoxysilanverbindung, die eine Isocyanatgruppe besitzt, und einer Disisocyanatverbindung umgesetzt wird, und
Modifizieren des Reaktionsprodukts mit der Alkoxysilanverbindung;
und wobei
die Alkoxysilanverbindung eine Alkoxysilanverbindung umfasst, die eine sekundäre Aminogruppe besitzt.

10. Herstellungsverfahren gemäß Anspruch 4 oder 7, wobei das oxyalkylenbasierte Polymer eines von einem Polyoxyalkylenpolyol und einem Derivat des Polyoxyalkylenpolyols umfasst.

11. Herstellungsverfahren gemäß einem der Ansprüche 5, 6 und 8 bis 10, wobei das Polyoxyalkylenpolyol eine Hydroxylzahl von 25 mgKOH/g oder weniger besitzt.

12. Herstellungsverfahren gemäß einem der Ansprüche 5, 6 und 8 bis 11, wobei das Polyoxyalkylenpolyol zwei Hydroxylgruppen in irgendeinem von seinen Molekülen besitzt.

13. Herstellungsverfahren gemäß einem der Ansprüche 4 bis 12, wobei die Alkoxysilanverbindung eines von einer Alkoxysilanverbindung, die eine Isocyanatgruppe besitzt, und einer Alkoxysilanverbindung, die eine sekundäre Aminogruppe besitzt, umfasst.

14. Herstellungsverfahren gemäß Anspruch 13, wobei die Alkoxysilanverbindung, die eine Isocyanatgruppe besitzt, Isocyanattriethoxysilan umfasst.

15. Herstellungsverfahren gemäß Anspruch 13, wobei die Alkoxysilanverbindung, die eine sekundäre Aminogruppe besitzt, dargestellt ist durch die folgende Formel (3): 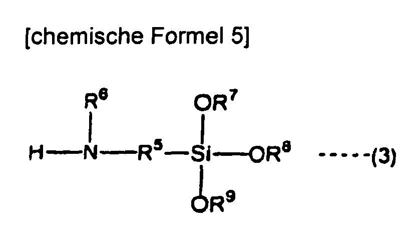 wobei R⁵ eine Alkylengruppe, die 1 bis 20 Kohlenstoffatome besitzt, darstellt, R⁶ eine aliphatische Kohlenwasserstoffgruppe, die 1 bis 20 Kohlenstoffatome besitzt, oder eine aromatische Kohlenwasserstoffgruppe, die 6 bis 20 Kohlenstoffatome besitzt, darstellt, und R⁷, R⁸ und R⁹ jeweils unabhängig voneinander eine Alkylgruppe darstellen, die 1 bis 20 Kohlenstoffatome besitzt.

16. Herstellungsverfahren gemäß Anspruch 15, wobei die Alkoxysilanverbindung, die eine sekundäre Aminogruppe besitzt, N-Phenylaminopropyltrimethoxysilan umfasst.

17. Herstellungsverfahren gemäß einem der Ansprüche 4 bis 16, wobei das Peroxyketal 1,1-Di(t-butylperoxy)cyclohexan umfasst.

18. Herstellungsverfahren gemäß einem der Ansprüche 4 bis 17, wobei das (Meth)acrylmonomer ein (Meth)acrylsilanmonomer enthält, bei dem X in der Formel (1) eine Gruppe umfasst, die dargestellt ist durch die folgende Formel (2): 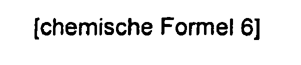 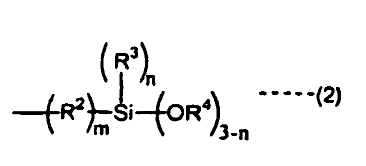 wobei R² eine divalente Kohlenwasserstoffgruppe, die 1 bis 10 Kohlenstoffatome besitzt, darstellt, R³ eine Alkylgruppe, die 1 bis 10 Kohlenstoffatome besitzt, eine Arylgruppe, die 6 bis 10 Kohlenstoffatome besitzt, oder eine Arylgruppe, die 7 bis 10 Kohlenstoffatome besitzt, darstellt, R⁴ eine unsubstituierte oder substituierte Kohlenwasserstoffgruppe, die 1 bis 8 Kohlenstoffatome besitzt, darstellt, n eine ganze Zahl von 0 bis 2 darstellt, und m 0 oder 1 darstellt.

19. Vinylmonomergepfropftes, alkoxysilanmodifiziertes Oxyalkylenharz gemäß einem der Ansprüche 1 bis 3, wobei das Harz hergestellt ist durch das Herstellungsverfahren gemäß einem der Ansprüche 4 bis 18.

20. Härtbare Zusammensetzung, umfassend:
das vinylmonomergepfropfte, alkoxysilanmodifizierte Oxyalkylenharz gemäß einem der Ansprüche 1 bis 3 und 19;
und einen Härtungskatalysator.

21. Härtbare Zusammensetzung, umfassend:
zwei oder mehr Arten an Harzen, die ausgewählt sind aus der Gruppe, bestehend aus den vinylmonomergepfropften, alkoxysilanmodifizierten Oxyalkylenharzen gemäß den Ansprüchen 1 bis 3 und 19; und
einen Härtungskatalysator.

22. Härtbare Zusammensetzung gemäß Anspruch 21, wobei die zwei oder mehr Arten an Harzen ein Harz beinhalten, das durch das Herstellungsverfahren gemäß den Ansprüchen 4 oder 7 hergestellt ist, und ein Harz, das durch das Herstellungsverfahren gemäß Anspruch 5 oder 9 hergestellt ist.

23. Härtbare Zusammensetzung gemäß einem der Ansprüche 20 bis 22, wobei die härtbare Zusammensetzung eines von einem Klebemittel, einem Einbettmittel für ein elektronisches oder optisches Bauteil, ein Siegelmittel für ein elektronisches oder optisches Bauteil, ein Siegelmaterial und eine Farbe umfasst.

## Revendications

1. Résine d'oxyalkylène modifiée par un alcoxysilane et greffée d'un monomère vinylique, qui est produite par un procédé comprenant le greffage d'un monomère vinylique par utilisation d'un polymère à base d'oxyalkylène en tant que matière première, dans laquelle :
le monomère vinylique comprend un monomère vinylique contenant 50 % en poids ou plus d'un ou deux ou plusieurs types de monomères (méth)acryliques représentés chacun par la formule (1) suivante : et
le monomère vinylique est soumis à une réaction de greffage par utilisation d'un alkyl-peroxyde en tant qu'amorceur de réaction radicalaire : 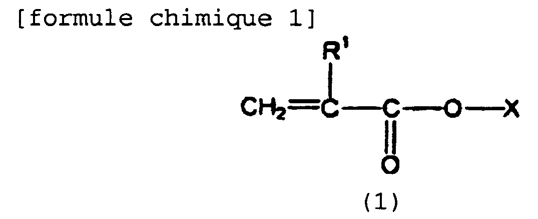 dans laquelle R¹ représente un atome d'hydrogène ou un groupe méthyle, et X représente un atome d'hydrogène, un atome de métal alcalin, un groupe hydrocarboné ayant 1 à 22 atomes de carbone, ou un groupe hydrocarboné substitué ayant 1 à 22 atomes de carbone et ayant un groupe fonctionnel contenant au moins un type d'un atome choisi dans l'ensemble constitué par un atome de bore, un atome d'azote, un atome d'oxygène, un atome de fluor, un atome de phosphore, un atome de silicium, un atome de soufre, et un atome de chlore,
l'alkyl-peroxyde comprenant un peroxy-cétal.

2. Résine d'oxyalkylène modifiée par un alcoxysilane et greffée d'un monomère vinylique selon la revendication 1, dans laquelle le peroxy-cétal comprend du 1,1-di(t-butylperoxy)cyclohexane.

3. Résine d'oxyalkylène modifiée par un alcoxysilane et greffée d'un monomère vinylique selon l'une quelconque des revendications 1 et 2, dans laquelle le monomère (méth)acrylique contient un monomère de silane (méth)acrylique dans lequel X, dans la formule (1), comprend un groupe représenté par la formule (2) suivante : 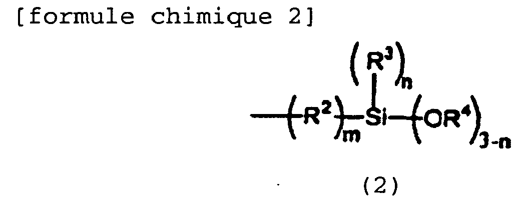 dans laquelle R² représente un groupe hydrocarboné divalent ayant 1 à 10 atomes de carbone, R³ représente un groupe alkyle ayant 1 à 10 atomes de carbone, un groupe aryle ayant 6 à 10 atomes de carbone ou un groupe aralkyle ayant 7 à 10 atomes de carbone, R⁴ représente un groupe hydrocarboné substitué ou non substitué ayant 1 à 8 atomes de carbone, n est un entier de 0 à 2, et m vaut 0 ou 1.

4. Procédé de production d'une résine d'oxyalkylène modifiée par un alcoxysilane et greffée d'un monomère vinylique, comprenant les étapes consistant à :
modifier un polymère à base d'oxyalkylène avec un composé alcoxysilane pour former une résine d'oxyalkylène modifiée par un alcoxysilane ; et
soumettre la résine d'oxyalkylène modifiée par un alcoxysilane, un monomère vinylique contenant 50 % en poids ou plus d'un ou deux ou plusieurs types de monomères (méth)acryliques représentés chacun par la formule (1) suivante, et un alkyl-peroxyde, à une réaction de greffage, l'alkyl-peroxyde comprenant un péroxy-cétal ; 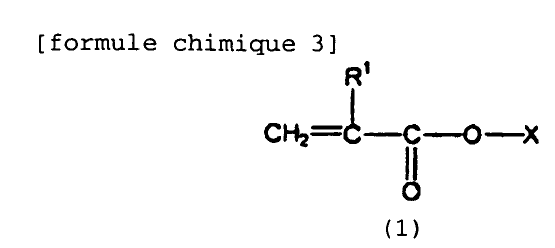 dans laquelle R¹ représente un atome d'hydrogène ou un groupe méthyle, et X représente un atome d'hydrogène, un atome de métal alcalin, un groupe hydrocarboné ayant 1 à 22 atomes de carbone, ou un groupe hydrocarboné substitué ayant 1 à 22 atomes de carbone et ayant un groupe fonctionnel contenant au moins un type d'un atome choisi dans l'ensemble constitué par un atome de bore, un atome d'azote, un atome d'oxygène, un atome de fluor, un atome de phosphore, un atome de silicium, un atome de soufre, et un atome de chlore.

5. Procédé de production selon la revendication 4, dans lequel le polymère à base d'oxyalkylène comprend un dérivé de polyoxyalkylène polyol obtenu par réaction l'un avec l'autre d'un polyoxyalkylène polyol et d'un composé diisocyanate.

6. Procédé de production selon la revendication 4, dans lequel le polymère à base d'oxyalkylène comprend un dérivé de polyoxyalkylène polyol obtenu par réaction d'un polyoxyalkylène polyol avec un composé alcoxysilane ayant un groupe isocyanate et un composé diisocyanate, et le composé alcoxysilane comprend un composé alcoxysilane ayant un groupe amino secondaire.

7. Procédé de production d'une résine d'oxyalkylène modifiée par un alcoxysilane et greffée d'un monomère vinylique, comprenant les étapes consistant à :
soumettre un polymère à base d'oxyalkylène, un monomère vinylique contenant 50 % en poids ou plus d'un ou deux ou plusieurs types de monomères (méth)acryliques représentés chacun par la formule (1) suivante, et un alkyl-peroxyde, à une réaction de greffage, pour former une résine d'oxyalkylène greffée d'un monomère vinylique, l'alkyl-peroxyde comprenant un peroxy-cétal ; et
modifier la résine d'oxyalkylène greffée d'un monomère vinylique avec un composé alcoxysilane ; 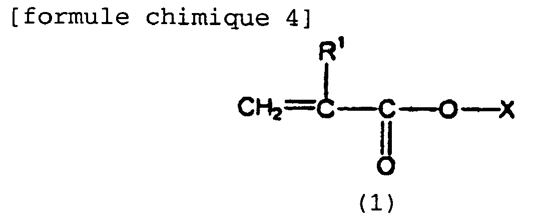
dans laquelle R¹ représente un atome d'hydrogène ou un groupe méthyle, et X représente un atome d'hydrogène, un atome de métal alcalin, un groupe hydrocarboné ayant 1 à 22 atomes de carbone, ou un groupe hydrocarboné substitué ayant 1 à 22 atomes de carbone et ayant un groupe fonctionnel contenant au moins un type d'un atome choisi dans l'ensemble constitué par un atome de bore, un atome d'azote, un atome d'oxygène, un atome de fluor, un atome de phosphore, un atome de silicium, un atome de soufre, et un atome de chlore.

8. Procédé de production selon la revendication 7, dans lequel
le polymère à base d'oxyalkylène comprend un polyoxyalkylène polyol ; et
la modification comprend
la réaction de la résine d'oxyalkylène greffée d'un monomère vinylique et d'un composé diisocyanate l'un avec l'autre, et
la modification du produit réactionnel avec le composé alcoxysilane.

9. Procédé de production selon la revendication 7, dans lequel :
le polymère à base d'oxyalkylène comprend un polyoxyalkylène polyol ;
la modification comprend
la réaction de la résine d'oxyalkylène greffée d'un monomère vinylique avec un composé alcoxysilane ayant un groupe isocyanate et un composé diisocyanate, et
la modification du produit réactionnel avec le composé alcoxysilane ;
et dans lequel le composé alcoxysilane comprend un composé alcoxysilane ayant un groupe amino secondaire.

10. Procédé de production selon la revendication 4 ou 7, dans lequel le polymère à base d'oxyalkylène comprend l'un parmi un polyoxyalkylène polyol et un dérivé du polyoxyalkylène polyol.

11. Procédé de production selon l'une quelconque des revendications 5, 6 et 8 à 10, dans lequel le polyoxyalkylène polyol a un indice d'hydroxyle de 25 mg KOH/g ou moins.

12. Procédé de production selon l'une quelconque des revendications 5, 6 et 8 à 11, dans lequel le polyoxyalkylène polyol a deux groupes hydroxyle dans l'une quelconque de ses molécules.

13. Procédé de production selon l'une quelconque des revendications 4 à 12, dans lequel le composé alcoxysilane comprend l'un parmi un composé alcoxysilane ayant un groupe isocyanate et un composé alcoxysilane ayant un groupe amino secondaire.

14. Procédé de production selon la revendication 13, dans lequel le composé alcoxysilane ayant un groupe isocyanate comprend l'isocyanatotriéthoxysilane.

15. Procédé de production selon la revendication 13, dans lequel le composé alcoxysilane ayant un groupe amino secondaire est représenté par la formule (3) suivante : 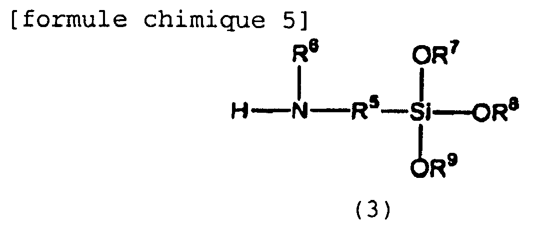 dans laquelle R⁵ représente un groupe alkylène ayant 1 à 20 atomes de carbone, R⁶ représente un groupe hydrocarboné aliphatique ayant 1 à 20 atomes de carbone, ou un groupe hydrocarboné aromatique ayant 6 à 20 atomes de carbone, et chacun de R⁷, R⁸ et R⁹ représente indépendamment un groupe alkyle ayant 1 à 20 atomes de carbone.

16. Procédé de production selon la revendication 15, dans lequel le composé alcoxysilane ayant un groupe amino secondaire comprend du N-phénylaminopropyltriméthoxysilane.

17. Procédé de production selon l'une quelconque des revendications 4 à 16, dans lequel le peroxy-cétal comprend du 1,1-di(t-butylperoxy)cyclohexane.

18. Procédé de production selon l'une quelconque des revendications 4 à 17, dans lequel le monomère (méth)acrylique contient un monomère de silane (méth)acrylique dans lequel X, dans la formule (1), comprend un groupe représenté par la formule (2) suivante : 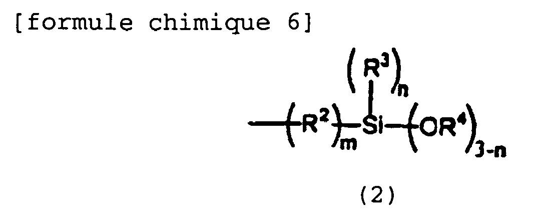 dans laquelle R² représente un groupe hydrocarboné divalent ayant 1 à 10 atomes de carbone, R³ représente un groupe alkyle ayant 1 à 10 atomes de carbone, un groupe aryle ayant 6 à 10 atomes de carbone ou un groupe aralkyle ayant 7 à 10 atomes de carbone, R⁴ représente un groupe hydrocarboné substitué ou non substitué ayant 1 à 8 atomes de carbone, n est un entier de 0 à 2, et m vaut 0 ou 1.

19. Résine d'oxyalkylène modifiée par un alcoxysilane et greffée d'un monomère vinylique selon l'une quelconque des revendications 1 à 3, laquelle résine est produite par le procédé de production de l'une quelconque des revendications 4 à 18.

20. Composition durcissable comprenant :
une résine d'oxyalkylène modifiée par un alcoxysilane et greffée d'un monomère vinylique selon l'une quelconque des revendications 1 à 3 et 19 ; et
un catalyseur de durcissement.

21. Composition durcissable comprenant :
deux types ou plus de résines choisies dans l'ensemble constitué par les résines d'oxyalkylène modifiées par un alcoxysilane et greffées d'un monomère vinylique selon les revendications 1 à 3 et 19 ; et
un catalyseur de durcissement.

22. Composition durcissable selon la revendication 21, dans laquelle les deux types ou plus de résines comprennent une résine produite par le procédé de production de la revendication 4 ou 7 et une résine produite par le procédé de production de la revendication 5 ou 9.

23. Composition durcissable selon l'une quelconque des revendications 20 à 22, laquelle composition durcissable comprend l'un parmi un adhésif, un agent de remplissage pour une pièce électronique ou optique, un colmatant pour une pièce électronique ou optique, un matériau d'étanchéité, et une peinture.
